Europäisches Patentamt

European Patent Office

Office européen des brevets

(19)

(11) **EP 1 297 424 B1**

(12) **EUROPEAN PATENT SPECIFICATION**

(45) Date of publication and mention
of the grant of the patent:
**21.09.2005 Bulletin 2005/38**

(21) Application number: **01948638.0**

(22) Date of filing: **22.06.2001**

(51) Int Cl.⁷: **G06F 11/00**

(86) International application number:
**PCT/US2001/020031**

(87) International publication number:
**WO 2002/001359 (03.01.2002 Gazette 2002/01)**

(54) **METHOD PERFORMED BY A SOFTWARE TOOL FOR IDENTIFYING CONSTRAINT CONFLICTS IN A SOFTWARE SYSTEM**

VERFAHREN AUSGEFÜHRT DURCH EINEN SOFTWARE-TOOL FÜR DIE IDENTIFIKATION VON ABHÄNGIGKEITSKONFLIKTEN IN EINEM SOFTWARESYSTEM

METHODE REALISEE PAR UN OUTIL LOGICIEL POUR L'IDENTIFICATION DE CONFLITS RELATIFS A DES CONTRAINTES DANS UN SYSTEME LOGICIEL

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.06.2000 US 213496 P**

(43) Date of publication of application:
**02.04.2003 Bulletin 2003/14**

(73) Proprietor: **INTEL CORPORATION**
**Santa Clara, CA 95052 (US)**

(72) Inventor: **HINES, Kenneth, J.**
**Kenmore, WA 98028 (US)**

(74) Representative: **Hoarton, Lloyd Douglas Charles**
**Forrester & Boehmert,**
**Pettenkoferstrasse 20-22**
**80336 München (DE)**

(56) References cited:
**EP-A- 0 881 568**

• ANDERSON R J ET AL: "MODEL CHECKING LARGE SOFTWARE SPECIFICATIONS" SOFTWARE ENGINEERING NOTES, ASSOCIATION FOR COMPUTING MACHINERY. NEW YORK, US, vol. 21, no. 6, 1 November 1996 (1996-11-01), pages 156-166, XP000636208 ISSN: 0163-5948

• CHOU P H ; BORRIELLO G: "Synthesis and optimization of coordination controllers for distributed embedded systems" PROCEEDINGS OF ACM/IEEE-CAS/EDAC DESIGN AUTOMATION CONFERENCE, 5 June 2000 (2000-06-05), pages 410-415, XP001074610 Los Angeles, CA, USA

• PAI CHOU, KEN HINES, KURT PARTRIDGE, AND GAETANO BORRIELLO: "Control Generation for Embedded Systems Based on Composition of Modal Processes" PROCEEDINGS OF ICCAD INTERNATIONAL CONFERENCE ON COMPUTER AIDED DESIGN, November 1998 (1998-11), pages 46-53, XP001064719 San Jose, CA, USA

• KEN HINES, GAETANO BORRIELLO: "Debugging Distributed Implementations of Modal Process Systems" PROCEEDINGS OF ACM SIGPLAN 1998 WORKSHOP ON LANGUAGES, COMPILERS, AND TOOLS FOR EMBEDDED SYSTEMS, October 1998 (1998-10), pages 98-107, XP002196261 Montreal, Que., Canada

• JAFFE M S: "SOFTWARE REQUIREMENTS ANALYSIS FOR REAL-TIME PROCESS-CONTROL SYSTEMS" IEEE TRANSACTIONS ON SOFTWARE ENGINEERING, IEEE INC. NEW YORK, US, vol. 17, no. 3, 1 March 1991 (1991-03-01), pages 241-257, XP000219178 ISSN: 0098-5589

**Description**

Related Applications

This application claims priority from U.S. Provisional Application No. 60/213,496 filed June 23, 2000.

Technical Field

The present disclosure relates to static error checking of software systems designed for execution in a hardware architecture with multiple processing resources.

Background of the Invention

A system design and programming methodology is most effective when it is closely integrated and coheres tightly with its corresponding debugging techniques. In distributed and embedded system methodologies, the relationship between debugging approaches and design methodologies has traditionally been one-sided in favor of the design and programming methodologies. Design and programming methodologies are typically developed without any consideration for the debugging techniques that will later be applied to software systems designed using that design and programming methodology. While these typical debugging approaches attempt to exploit features provided by the design and programming methodologies, the debugging techniques will normally have little or no impact on what the design and programming features are in the first place. This lack of input from debugging approaches to design and programming methodologies serves to maintain the role of debugging as an afterthought, even though in a typical system design, debugging consumes a majority of the design time. The need remains for a design and programming methodology that reflects input from, and consideration of, potential debugging approaches in order to enhance the design and reduce the implementation time of software systems.

Static analysis can be of great benefit in debugging complex systems. Traditional runtime debugging is necessary because certain software errors cannot be detected until after they are compiled into execution errors. Static analysis can reduce the number of such errors and can aid designers by illmminating subtle design interactions.

"Model Checking Large Software Specifications", R.J. Anderson et al., Software Engineering Notes, Vol. 21, pp. 156-166 (1996) describes a model checker for studying the specification of a software system. The software specification is first translated into an input suitable for the model checker. The input and property to be tested are then converted into representations based upon ordered binary decision diagrams, which are then passed to the model-checking algorithm. The resulting output of the algorithm is either that the property is true or false .

Summary

The present invention provides a method performed by a software analysis tool for identifying constraint enforcement conflicts in a software system comprising at least two software elements and at least one constraint, wherein each software element comprises at least one mode which, when activated, enables one or more actions to be triggerable by an event, and each constraint, when enforced, generates an output that influences the activation state of at least one mode, the method comprising:

> creating a disjunctive node for each mode;
> creating a conjunctive node for each constraint;
> creating, for each constraint that generates an output, a directed edge from the corresponding conjunctive node to the disjunctive node of each mode whose activation state is influenced by the output, wherein each directed edge asserts a value on the disjunctive node indicative of the influence made by the constraint to the activation state; and
> presenting control interactions between the software elements in a static control graph comprising:

>> a first set of graphic symbols, each symbol representing a conjunctive node;
>> a second set of graphic symbols, each symbol representing a disjunctive node; and
>> a third set of graphic symbols, each symbol representing a directed edge and including visual indicia of an origin node and a destination node,

> wherein a constraint enforcement conflict is identified as a disjunctive node having two or more incident directed edges which assert different values.

The present disclosure describes a data structure and method for representing the static aspects of a software system and identifying control constraint conflicts in the system. The techniques presented here can be implemented in design tools for use in a Coordination-Centric framework tools. Each technique can eliminate bugs prior to execution.

Systemwide control aspects of a software system can be graphically-represented by a static control graph (SCG). A simple SCG typically has, the following: conjunctive nodes, each representing a control constraint; disjunctive nodes, each representing a mode within a component; and directed edges, each representing implication between a pair of nodes. The graph abstracts a software system's control constraints into edges and conjunctive nodes. A conjunctive node produces results only when all edges are satisfied, whereas a disjunctive node produces results if any edge is satisfied. An edge, in an SCG, is either enabled or disabled and responds to either a false value or a true value at its tail and enforces either a false value or a true value at its head.

A typical use of an SCG is in identifying constraint conflicts in which two active constraints try to force a disjunctive node in opposite directions. SCGs track the effects of individual mode states on all other modes within a software system. Through constraints, the state of an individual mode can cause other modes in the system to assume particular states. The changes in control state can cause a cascading effect of other parts of the system. Typically, an individual mode can affect the state of other modes to which it has no direct connection. The complete, end-to-end effects of a change of state for a particular mode can be computed by "flattening" the SCG. This "flattening" technique creates a pseudo constraint between any two nodes, which represents the overall effect of cascading mode changes between the two nodes, and highlights instability in the system.

A "control conflict identification and elimination" technique identifies the set of mode states that cause a control conflict and adjusts the constraints so as to remove the conflict. Identifying the mode state responsible for causing the conflict is done by tracing the potentially conflicting edges, which are identified by the "flattening" technique, backwards from the conflicted node to the immediately preceding conjunctive nodes and determining whether there is any mode configuration that permits the conflict to occur.

Dynamic control graphs (DCGs) lend themselves to a wider variety of dynamic checks and to model checking as well. Model checking enables many more system checks, such as configuration reachability. To apply model checking to DCGs, it is first necessary to derive a transition relation and represent it as a binary decision diagram (BDD). The size of BDDs is sensitive to variable ordering, but the structure of DCGs enables ordering heuristics that typically result in BDDs of reasonable size.

Static analysis is used not only to find errors or bugs in a system, but to optimize a program as well. This is a typical use of control dataflow graphs (CDGs). Using CDGs, an efficient static schedule can be derived for any modal dataflow regions of the a coordination-centric software system that have constant production and consumption rates.

Additional aspects and advantages of this invention will be apparent from the following detailed description of preferred embodiments thereof, which proceeds with reference to the accompanying drawings.

Brief Description of the Drawings

Fig. 1 is a component in accordance with the present disclosure.

Fig. 2 is the component of Fig. 1 further having a set of coordination interfaces.

Fig. 3A is a prior art round-robin resource allocation protocol with a centralized controller.

Fig. 3B is a prior art round-robin resource allocation protocol implementing a token passing scheme.

Fig. 4A is a detailed view of a component and a coordination interface connected to the component for use in round-robin resource allocation in accordance with the present disclosure.

Fig. 4B depicts a round-robin coordinator in accordance with the present disclosure.

Fig. 5 shows several typical ports for use in a coordination interface in accordance with the present disclosure.

Fig. 6A is a unidirectional data transfer coordinator in accordance with the present disclosure.

Fig. 6B is a bidirectional data transfer coordinator in accordance with the present disclosure.

Fig. 6C is a state unification coordinator in accordance with the present disclosure.

Fig. 6D is a control state mutex coordinator in accordance with the present disclosure.

Fig. 7 is a system for implementing subsumption resource allocation having components, a shared resource, and a subsumption coordinator.

Fig. 8 is a barrier synchronization coordinator in accordance with the present disclosure.

Fig. 9 is a rendezvous coordinator in accordance with the present disclosure.

Fig. 10 depicts a dedicated RPC system having a client, a server, and a dedicated RPC coordinator coordinating the activities of the client and the server.

Fig. 11 is a compound coordinator with both preemption and round-robin coordination for controlling the access of a set of components to a shared resource.

Fig. 12A is software system with two data transfer coordinators, each having constant message consumption and generation rules and each connected to a separate data-generating component and connected to the same data-receiving component.

Fig. 12B is the software system of Fig. 12A in which the two data transfer coordinators have been replaced with a merged data transfer coordinator.

Fig. 13 is a system implementing a first come, first served resource allocation protocol in accordance with the present disclosure.

Fig. 14 is a system implementing a multiclient RPC coordination protocol formed by combining the first come, first served protocol of Fig. 13 with the dedicated RPC coordinator of Fig. 10.

Fig. 15 depicts a large system in which the coordination-centric design methodology can be employed having a wireless device interacting with a cellular network.

Fig. 16 shows a top-level view of the behavior and components for a system for a cell phone.

Fig. 17A is a detailed view of a GUI component of the cell phone of Fig. 16.

Fig. 17B is a detailed view of a call log component of the cell phone of Fig. 16.

Fig. 18A is a detailed view of a voice subsystem component of the cell phone of Fig. 16.

Fig. 18B is a detailed view of a connection component of the cell phone of Fig. 16.

Fig. 19 depicts the coordination layers between a wireless device and a base station, and between the base station and a switching center, of Fig. 15.

Fig. 20 depicts a cell phone call management component, a master switching center call management component, and a call management coordinator connecting the respective call management components.

Fig. 21A is a detailed view of a transport component of the connection component of Fig. 18B.

Fig. 21B is a CDMA data modulator of the transport component of Fig. 18B.

Fig. 22 is a detailed view of a typical TDMA and a typical CDMA signal for the cell phone of Fig. 16.

Fig. 23A is a LCD touch screen component for a Web browser GUI for a wireless device.

Fig. 23B is a Web page formatter component for the Web browser GUI for the wireless device.

Fig. 24A is a completed GUI system for a handheld Web browser.

**EP 1 297 424 B1**

Fig. 24B shows the GUI system for the handheld Web browser combined with the connection subsystem of Fig. 18B in order to access the cellular network of Fig. 15.

Fig. 25 is a typical space/time diagram with space represented on a vertical axis and time represented on a horizontal axis.

Fig. 26 is a space/time diagram depicting a set of system events and two different observations of those system events.

Fig. 27 is a space/time diagram depicting a set of system events and an ideal observation of the events taken by a real-time observer.

Fig. 28 is a space/time diagram depicting two different yet valid observations of a system execution.

Fig. 29 is a space/time diagram depicting a system execution and an observation of that execution take by a discrete lamport observer.

Fig. 30 is a space/time diagram depicting a set of events that each include a lamport time stamp.

Fig. 31 is a space/time diagram illustrating the insufficiency of scalar timestamps to characterize causality between events.

Fig. 32 is a space/time diagram depicting a set of system events that each a vector time stamp.

Fig. 33 depicts a display from a Partial Order Event Tracer (POET).

Fig. 34 is a space/time diagram depicting two compound events that are neither causal nor concurrent.

Fig. 35 is a POET display of two convex event clusters.

Fig. 36 is a Basis for Distributed Event Environments (BEE) abstraction facility for a single client.

Fig. 37 is a hierarchical tree construction of process clusters.

Fig. 38A depicts a qualitative measure of cohesion and coupling between a set of process clusters that have heavy communication or are instantiated from the same source code.

Fig. 38B depicts a qualitative measure of cohesion and coupling between a set of process clusters that do not have heavy communication or are not instances of the same source code.

Fig. 38C depicts a qualitative measure of cohesion and coupling between an alternative set of process clusters that have heavy communication or are instantiated from the same source code.

Fig. 39 depicts a consistent and an inconsistent cut of a system execution on a space/time diagram.

Fig. 40A is a space/time diagram depicting a system execution.

Fig. 40B is a lattice representing all possible consistent cuts of the space/time diagram of Fig. 40A.

Fig. 40C is a graphical representation of the possible consistent cuts of Fig. 40B.

Fig. 41A is a space/time diagram depicting a system execution.

Fig. 41B is the space/time diagram of Fig. 41A after performing a global-step.

Fig. 41C is the space/time diagram of Fig. 41A after performing a step-over.

Fig. 41D is the space/time diagram of Fig. 41A after performing a step-in.

Fig. 42 is a space/time diagram depicting a system that is subject to a domino effect whenever the system is rolled back in time to a checkpoint.

Fig. 43 depicts a simple static control graph in accordance with the present disclosure.

Fig. 44A is an edge that asserts the value true at its head and is responsive to the value true at its tail.

Fig. 44B is an edge that asserts the value true at its head and is responsive to the value false at its tail.

Fig. 44C is an edge that asserts the value false at its head and is responsive to the value true at its tail.

Fig. 44D is an edge that asserts the value false at its head and is responsive to the value false at its tail.

Fig. 45 is an illustration of the semantic differences between Boolean networks and static control graphs.

Fig. 46A shows a basic control graph with reduced characteristic functions.

Fig. 46B shows a basic control graph with reduced characteristic functions.

Fig. 47A shows the impact of edge semantics on SCG semantics when an enforcing edge asserts a value of false at its head.

Fig. 47B shows the impact of edge semantics on SCG semantics when an enforcing edge is responsive to a value of false at its tail.

Fig. 47C shows the impact of edge semantics on SCG semantics when a sensing edge asserts a value of false at its head.

Fig. 47D shows the impact of edge semantics on SCG semantics when a sensing edge is responsive to a value of false at its tail.

Fig. 48A depicts a coordinator for a rendezvous-style coordination.

Fig. 48B is the static control graph that represents a coordinator for a rendezvous-style coordination..

Fig. 49 is a static control graph with no stable and non-conflicting states.

Fig. 50A is the static control graph that represents the reduction from 3-SAT to Any Stable State Property.

Fig. 50B is a logic representation for the static control graph that represents the reduction from 3-SAT to Any Stable State Property.

Fig. 50C is an equivalent logic representation for the static control graph that represents the reduction from 3-SAT to Any Stable State Property.

Fig. 51A is a static control graph showing a first order conflict.

Fig. 51B is a static control graph showing a second order conflict.

Fig. 52A is a static control graph showing a disjunctive node ($d_i$) before "flattening."

Fig. 52B is the static control graph showing the disjunctive node ($d_i$) after "flattening."

Fig. 53 is a static control graph that shows a potential conflict, highlighted by "flattening."

Fig. 54 is the static control graph for Figure 49, after "flattening."

Fig. 55A shows a component's inner static control graph.

Fig. 55B shows the component's static control graph after the internal nodes are summarized as a single, independent node.

Fig. 56 shows an ideal structure for applying hierarchical reduction to highlight instability in a system.

Fig. 57 depicts a dynamic control graph (DCG).

Fig. 58 depicts a DCG with an action node.

Fig. 59 shows a DCG with an action node for an action that is transparent with respect to control interactions.

Fig. 60 shows a DCG with an action node for an action that is opaque with respect to control interactions.

Fig. 61A shows a DCG for a rendezvous coordinator

Fig. 61B shows a DCG for a rendezvous coordinator with two participant preemption.

Fig. 62A shows a communication channel between partitions of a static control graph (SCG) that can cause an action-only barrier.

Fig. 62B shows a DCG corresponding to the SCG of Fig. 62A after partitioning across the access-only barrier.

Fig. 63, depicts constraint edges that cross the action only barrier, from Fig. 62A, and their corresponding templates.

Fig. 64 depicts a current DCG along with a next DCG, which is the result of temporally unrolling DCG.

Fig. 65A depicts a simple DCG.

Fig. 65B depicts an unrolled DCG for simple DCG.

Fig. 66A shows a truth table for a boolean "and" function.

Fig. 66B shows a truth tree that corresponds to the truth table in Fig. 66A.

Fig. 67A shows a reduced binary decision diagram (BDD) for the truth tree in Fig. 66B.

Fig. 67B shows an alternate reduced BDD for the truth tree in Fig. 66B.

Fig. 67C shows a third alternate reduced BDD for the truth tree in Fig. 66B.

Fig. 68 shows the results of using the apply algorithm to grow a BDD, which represents the characteristic function of the unrolled DCG from Fig. 65B.

Fig. 69A shows an unrolled DCG for the rendezvous DCG of Fig. 61A.

Fig. 69B shows that a critical factor in ordering for the characteristic function of the unrolled DCG of Fig. 69A is the relative ordering of $wait_c$, $wait_b$, and $wait_a$.

Figs. 70A, B, C, and D show that interleaving asynchronous models is not a sufficient static error-checking tool for coordination-centric system designs.

Fig. 71 shows a control/dataflow graph (CDG).

Fig. 72 shows a CDG representation of an RPC system.

Fig. 73A shows the second step in partitioning a CDG across an action-only barrier.

Fig. 73B shows the graph of DCG from Fig. 62B, with the action-only barrier transformed to a message-only barrier.

Fig. 74A shows a CDG with a set of message rate guarantees.

Fig. 74B shows a dataflow graph based on the CDG of Fig. 74A.

Fig. 75 shows a dataflow graph.

Detailed Description of Preferred Embodiments

Coordination-Centric Software Design

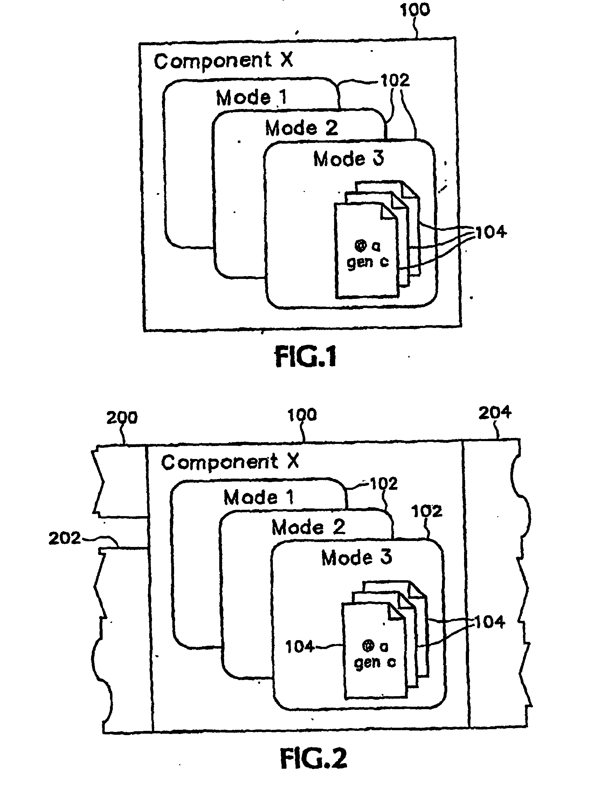

Fig. 1 is an example of a component 100, which is the basic software element within the coordination-centric design framework, in accordance with the present disclosure. With reference to Fig. 1, component 100 contains a set of modes 102. Each mode 102 corresponds to a specific behavior associated with component 100. Each mode 102 can either be active or inactive, respectively enabling or disabling the behavior corresponding to that mode 102. Modes 102 can make the conditional aspects of the behavior of component 100 explicit. The behavior of component 100 is encapsulated in a set of actions 104, which are discrete, event-triggered behavioral elements within the coordination-centric design methodology. Component 100 can be copied and the copies of component 100 can be modified, providing the code-sharing benefits of inheritance.

Actions 104 are enabled and disabled by modes 102, and hence can be thought of as effectively being properties of modes 102. An event (not shown) is an instantaneous condition, such as a timer tick, a data departure or arrival, or a mode change. Actions 104 can activate and deactivate modes 102, thereby selecting the future behavior of component 100. This is similar to actor languages, in which methods are allowed to replace an object's behavior.

In coordination-centric design, however, all possible behaviors must be identified and encapsulated before runtime. For example, a designer building a user interface component for a cell phone might define one mode for looking up numbers in an address book (in which the user interface behavior is to display complete address book entries in formatted text) and another mode for displaying the status of the phone (in which the user interface behavior is to graphically display the signal power and the battery levels of the phone). The designer must define both the modes and the actions for the given behaviors well before the component can be executed.

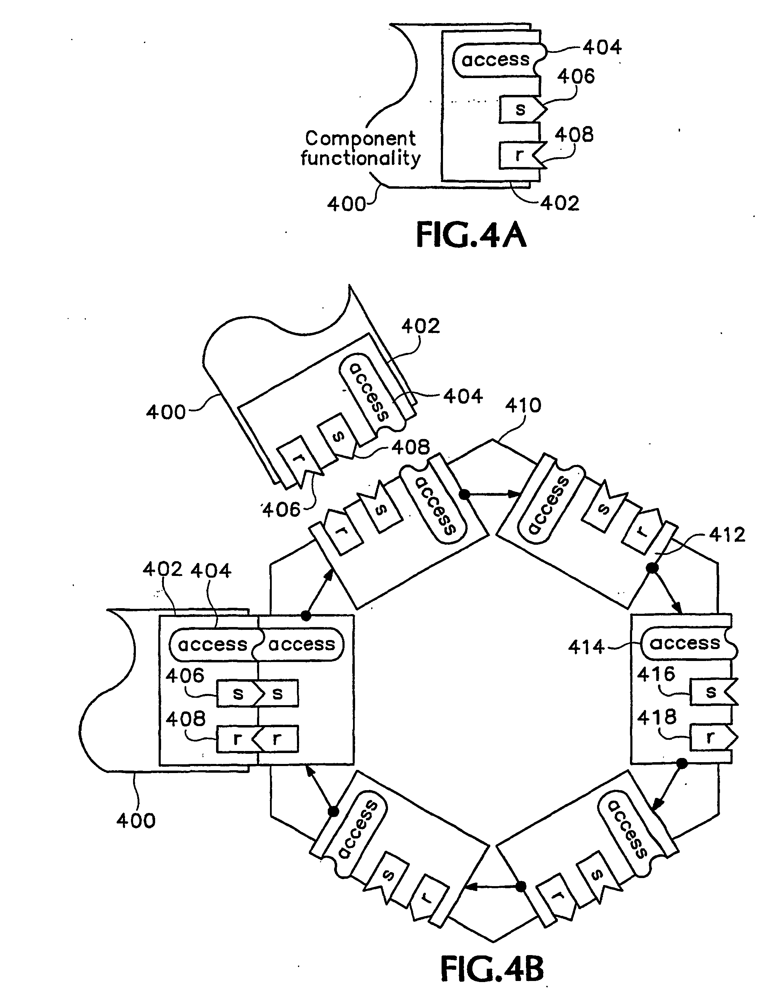

Fig. 2 is component 100 further including a first coordination interface 200, a second coordination interface 202, and a third coordination interface 204. Coordination-centric design's components 100 provide the code-sharing capability of object-oriented inheritance through copying. Another aspect of object-oriented inheritance is polymorphism through shared interfaces. In object-oriented languages, an object's interface is defined by its methods. Although coordination-centric design's actions 104 are similar to methods in object-oriented languages, they do not define the interface for component 100. Components interact through explicit and separate coordination interfaces, in this figure coordination interfaces 200, 202, and 204. The shape of coordination interfaces 200, 202, and 204 determines the ways in which component 100 may be connected within a software system. The way coordination interfaces 200, 202, and 204 are connected to modes 102 and actions 104 within component 100 determines how the behavior of component 100 can be managed within a system. Systemwide behavior is managed through coordinators (see Fig. 4B and subsequent).

For our approach to be effective, several factors in the design of software elements must coincide: packaging, internal organization, and how elements coordinate their behavior. Although these are often treated as independent issues, conflicts among them can exacerbate debugging. We handle them in a unified framework that separates the internal activity from the external relationship of component 100. This lets designers build more modular components and encourages them to specify distributable versions of coordination protocols. Components can be reused in a variety of contexts, both distributed, and single processor 1.

1. Introduction to Coordination

Within this application, coordination refers to the predetermined ways by which components interact. Consider a common coordination activity: resource allocation. One simple protocol for this is round-robin: participants are lined up, and the resource is given to each participant in turn. After the last participant is served, the resource is given back to the first. There is a resource-scheduling period during which each participant gets the resource exactly once, whether or not it is needed.

Fig. 3A is prior art round-robin resource allocation protocol with a centralized controller 300, which keeps track of and distributes the shared resource (not shown) to each of software elements 302, 304, 306, 308, and 310 in turn. With reference to Fig. 3A, controller 300 alone determines which software element 302, 304, 306, 308, or 310 is currently allowed to use the resource and which has it next. This implementation of a round-robin protocol permits software elements 302, 304, 306, 308, and 310 to be modular, because only controller 300 keeps track of the software elements. Unfortunately, when this implementation is implemented on a distributed architecture (not shown), controller 300 must typically be placed on a single processing element (not shown). As a result, all coordination requests must go through that processing element, which can cause a communication performance bottleneck. For example, consider the situation in which software elements 304 and 306 are implemented on a first processing element (not shown) and controller 300 is implemented on a second processing element. Software element 304 releases the shared resource and must send a message indicating this to controller 300. Controller 300 must then send a message to software element 306 to inform software element 306 that it now has the right to the shared resource. If the communication channel between the first processing element and the second processing element is in use or the second processing element is busy, then the shared resource must remain idle, even though both the current resource holder and the next resource holder (software elements 304 and 306 respectively) are implemented on the first processing element (not shown). The shared resource must typically remain idle until communication can take place and controller 300 can respond. This is an inefficient way to control access to a shared resource.

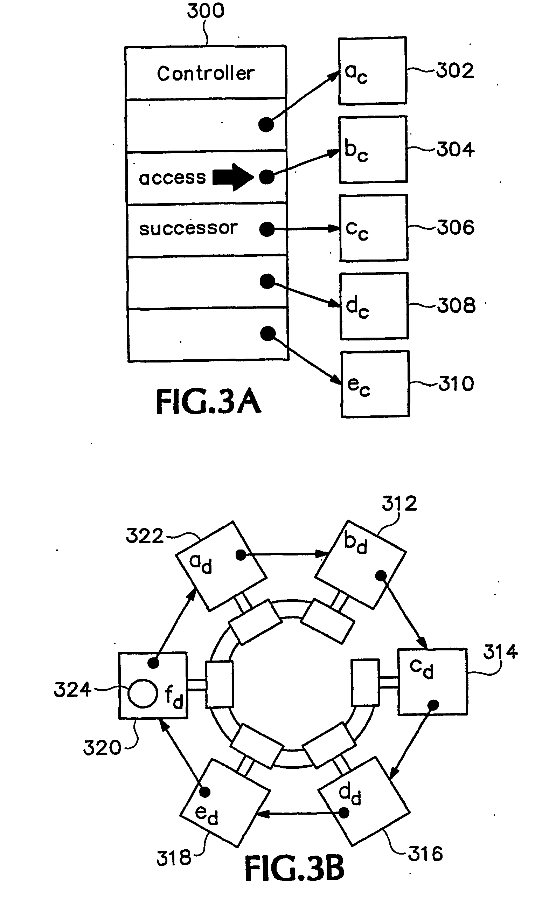

Fig. 3B is a prior art round-robin resource allocation protocol implementing a token passing scheme. With reference to Fig. 3B, this system consists of a shared resource 311 and a set of software elements 312, 314, 316, 318, 320, and 322. In this system a logical token 324 symbolizes the right to access resource 311, *i.e.,* when a software element holds token 324, it has the right to access resource 311. When one of software elements 312, 314, 316, 318, 320, or 322 finishes with resource 311, it passes token 324, and with token 324 the access right, to a successor. This implementation can be distributed without a centralized controller, but as shown in Figure 3B, this is less modular, because it requires each software element in the set to keep track of a successor.

Not only must software elements 312, 314, 316, 318, 320, and 322 keep track of successors, but each must implement a potentially complicated and error-prone protocol for transferring token 324 to its successor. Bugs can cause token 324 to be lost or introduce multiple tokens 324. Since there is no formal connection between the physical system and complete topology maps (diagrams that show how each software element is connected to others within the system), some software elements might erroneously be serviced more than once per cycle, while others are completely neglected. However, these bugs can be extremely difficult to track after the system is completed. The protocol is entangled with the functionality of each software element, and it is difficult to separate the two for debugging purposes. Furthermore, if a few of the software elements are located on the same machine, performance of the implementation can be poor. The entangling of computation and coordination requires intrusive modification to optimize the system.

2. Coordination-Centric Design's Approach to Coordination

The coordination-centric design methodology provides an encapsulating formalism for coordination. Components such as component 100 interact using coordination interfaces, such as first, second, and third coordination interfaces 200, 202, and 204, respectively. Coordination interfaces preserve component modularity while exposing any parts of a component that participate in coordination. This technique of connecting components provides polymorphism in a similar fashion to subtyping in object-oriented languages.

Fig. 4A is a detailed view of a component 400 and a resource access coordination interface 402 connected to component 400 for use in a round-robin coordination protocol in accordance with the present disclosure. With reference to Fig. 4A, resource access coordination interface 402 facilitates implementation of a round-robin protocol that is similar to the token-passing round-robin protocol described above. Resource access coordination interface 402 has a single bit of control state, called access, which is shown as an arbitrated control port 404 that indicates whether or not component 400 is holding a virtual token (not shown). Component 400 can only use a send message port 406 on access coordination interface 402 when arbitrated control port 404 is true. Access coordination interface 402 further has a receive message port 408.

Fig. 4B show a round-robin coordinator 410 in accordance with the present disclosure. With reference to Fig. 4B, round-robin coordinator 410 has a set of coordinator coordination interfaces 412 for connecting to a set of components 400. Each component 400 includes a resource access coordination interface 402. Each coordinator coordination interface 412 has a coordinator arbitrated control port 414, an incoming send message port 416 and an outgoing receive message port 418. Coordinator coordination interface 412 in complimentary to resource access coordination interface 402, and vice versa, because the ports on the two interfaces are compatible and can function to transfer information between the two interfaces.

The round-robin protocol requires round-robin coordinator 410 to manage the coordination topology. Round-robin coordinator 410 is an instance of more general abstractions called coordination classes, in which coordination classes define specific coordination protocols and a coordinator is a specific implementation of the coordination class. Round-robin coordinator 410 contains all information about how components 400 are supposed to coordinate. Although round-robin coordinator 410 can have a distributed implementation, no component 400 is required to keep references to any other component 400 (unlike the distributed round-robin implementation shown in Fig. 3B). All required references are maintained by round-robin coordinator 410 itself, and components 400 do not even need to know that they are coordinating through round-robin. Resource access coordination interface 402 can be used with any coordinator that provides the appropriate complementary interface. A coordinator's design is independent of whether it is implemented on a distributed platform or on a monolithic single processor platform.

3. Coordination Interfaces

Coordination interfaces are used to connect components to coordinators. They also play a role in allowing a variety of useful runtime debugging techniques. Coordination interfaces support component modularity by exposing all parts of the component that participate in the coordination protocol. Ports are elements of coordination interfaces, as are guarantees and requirements, each of which will be described in turn.

A. Ports

A port is a primitive connection point for interconnecting components. Each port is a five-tuple (T; A; Q; D; R) in which:

- T represents the data type of the port. T can be one of int, boolean, char, byte, float, double, or cluster, in which cluster represents a cluster of data types (*e.g.*, an int followed by a float followed by two bytes).
- A is a boolean value that is true if the port is arbitrated and false otherwise.
- Q is an integer greater than zero that represents logical queue depth for a port.
- D is one of in, out, inout, or custom and represents the direction data flows with respect to the port.
- R is one of discard-on-read, discard-on-transfer, or hold and represents the policy for data removal on the port. Discard-on-read indicates that data is removed immediately after it is read (and any data in the logical queue are shifted), discard-on-transfer indicates that data is removed from a port immediately after being transferred to another port, and hold indicates that data should be held until it is overwritten by another value.

Hold is subject to arbitration.

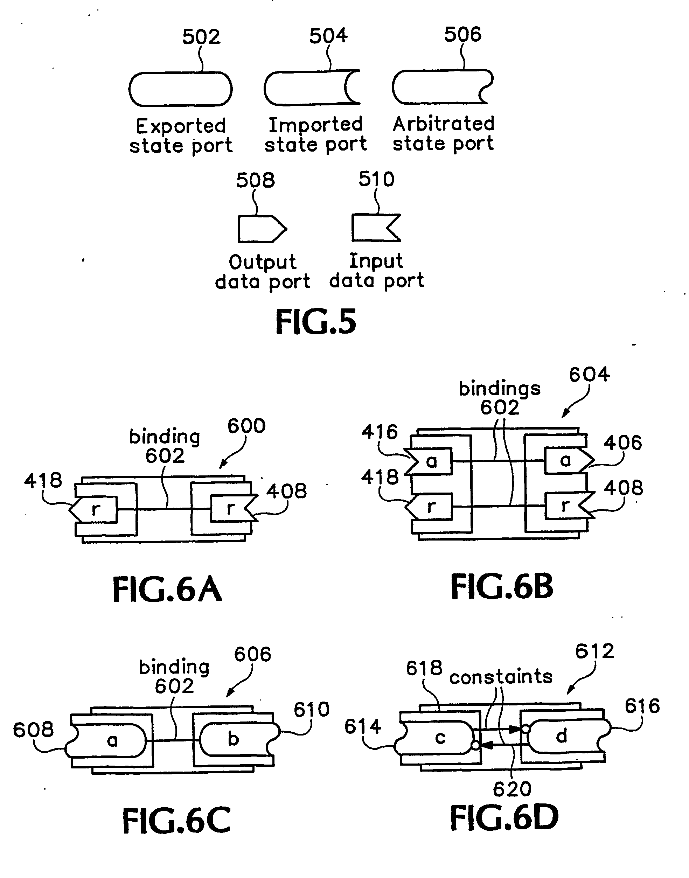

Custom directionality allows designers to specify ports that accept or generate only certain specific values. For example, a designer may want a port that allows other components to activate, but not deactivate, a mode. While many combinations of port attributes are possible, we normally encounter only a few. The three most common are message ports (output or input), state ports (output, input, or both; sometimes arbitrated), and control ports (a type of state port). Fig. 5 illustrates the visual syntax used for several common ports throughout this application. With reference to Fig. 5, this figure depicts an exported state port 502, an imported state port 504, an arbitrated state port 506, an output data port 508, and an input data port 510.

1. Message Ports

Message ports (output and input) data ports 508 and 510, respectively, are either send (T; false; 1; out; discard-on-transfer) or receive (T; false; Q; in; discard-on-read). Their function is to transfer data between components. Data passed to a send port is transferred immediately to the corresponding receive port, thus it cannot be retrieved from the send port later. Receive data ports can have queues of various depths. Data arrivals on these ports are frequently used to trigger and pass data parameters into actions. Values remain on receive ports until they are read.

2. State Ports

State ports take one of three forms:

1. (T; false; 1; out; hold)
2. (T; false; 1; in; hold)
3. (T; true; 1; inout; hold)

State ports, such as exported state port 502, imported state port 504, and arbitrated state port 506, hold persistent values, and the value assigned to a state port may be arbitrated. This means that, unlike message ports, values remain on the state ports until changed. When multiple software elements simultaneously attempt to alter the value of arbitrated state port 506, the final value is determined based on arbitration rules provided by the designer through an arbitration coordinator (not shown).

State ports transfer variable values between scopes. In coordination-centric design, all variables referenced by a component are local to that component, and these variables must be explicitly declared in the component's scope.

Variables can, however, be bound to state ports that are connected to other components. In this way a variable value can be transferred between components and the variable value achieves the system-level effect of a multivariable.

3. Control Ports

Control ports are similar to state ports, but a control port is limited to having the boolean data type. Control ports are typically bound to modes. Actions interact with a control port indirectly, by setting and responding to the values of a mode that is bound to the control port.

For example, arbitrated control port 404 shown in Fig. 4A is a control port that can be bound to a mode (not shown) containing all actions that send data on a shared channel. When arbitrated control port 404 is false, the mode is inactive, disabling all actions that send data on the channel.

B. Guarantees

Guarantees are formal declarations of invariant properties of a coordination interface. There can be several types of guarantees, such as timing guarantees between events, guarantees between control state (*e.g.,* state A and state B are guaranteed to be mutually exclusive), etc. Although a coordination interface's guarantees reflect properties of the component to which the coordination interface is connected, the guarantees are not physically bound to any internal portions of the component. Guarantees can often be certified through static analysis of the software system. Guarantees are meant to cache various properties that are inherent in a component or a coordinator in order to simplify static analysis of the software system.

A guarantee is a promise provided by a coordination interface. The guarantee takes the form of a predicate promised to be invariant. In principle, guarantees can include any type of predicate (*e.g.*, x > 3, in which x is an integer valued state port, or $t_{ea} - t_{eb} < 2ms$). Throughout the remainder of this application, guarantees will be only event-ordering guarantees (guarantees that specify acceptable orders of events) or control-relationship guarantees (guarantees pertaining to acceptable relative component behaviors).

C. Requirements

A requirement is a formal declaration of the properties necessary for correct software system functionality. An example of a requirement is a required response time for a coordination interface-the number of messages that must have arrived at the coordination interface before the coordination interface can transmit, or fire, the messages. When two coordination interfaces are bound together, the requirements of the first coordination interface must be conservatively matched by the guarantees of the second coordination interface (*e.g.*, x < 7 as a guarantee conservatively matches x < 8 as a requirement). As with guarantees, requirements are not physically bound to anything within the component itself. Guarantees can often be verified to be sufficient for the correct operation of the software system in which the component is used. In sum, a requirement is a predicate on a first coordination interface that must be conservatively matched with a guarantee on a complementary second coordination interface.

D. Conclusion Regarding Coordination Interfaces

A coordination interface is a four-tuple (P; G; R; I) in which:

- P is a set of named ports.
- G is a set of named guarantees provided by the interface.
- R is a set of named requirements that must be matched by guarantees of connected interfaces.
- I is a set of named coordination interfaces.

As this definition shows, coordination interfaces are recursive. Coordinator coordination interface 412, shown in Fig. 4B, used for round-robin coordination is called *AccessInterface* and is defined in Table 1.

Table 1.

| Constituent | Value |
|---|---|
| Ports | $P$ = { access:StatePort, s:outMessagePort, r:inMessagePort } |
| Guarantees | $G$ = { $\neg$ access $\Rightarrow$ $\neg$ s.gen } |
| Requirement | $R$ = Ø |

Table 1.   (continued)

| Constituent | Value |
|---|---|
| Interfaces | $I = \emptyset$ |

Related to coordination interfaces is a recursive coordination interface descriptor, which is a five-tuple ($P_a$; $G_a$; $R_a$; $I_d$; $N_d$) in which:

- $P_a$ is a set of abstract ports, which are ports that may be incomplete in their attributes (*i.e.*, they do not yet have a datatype).

- $G_a$ is a set of abstract guarantees, which are guarantees between abstract ports.

- $R_a$ is a set of abstract requirements, which are requirements between abstract ports.

- $I_d$ is a set of coordination interface descriptors.

- $N_d$ is an element of Q x Q, where Q = {∞} ∪ Z + and Z + denotes the set of positive integers. $N_d$ indicates the number or range of numbers of permissible interfaces.

Allowing coordination interfaces to contain other coordination interfaces is a powerful feature. It lets designers use common coordination interfaces as complex ports within other coordination interfaces. For example, the basic message ports described above are nonblocking, but we can build a blocking coordination interface (not shown) that serves as a blocking port by combining a wait state port with a message port.

4. Coordinators

A coordinator provides the concrete representations of intercomponent aspects of a coordination protocol. Coordinators allow a variety of static analysis debugging methodologies for software systems created with the coordination-centric design methodology. A coordinator contains a set of coordination interfaces and defines the relationships between the coordination interfaces. The coordination interfaces complement the component coordination interfaces provided by components operating within the protocol. Through matched interface pairs, coordinators effectively describe connections between message ports, correlations between control states, and transactions between components.

For example, round-robin coordinator 410, shown in Fig. 4B, must ensure that only one component 400 has its component control port 404's value, or its access bit, set to true. Round-robin coordinator 410 must further ensure that the correct component 400 has its component control port 404 set to true for the chosen sequence. This section presents formal definitions of the parts that comprise coordinators: modes, actions, bindings, action triples, and constraints. These definitions culminate in a formal definition of coordinators.

A. Modes

A mode is a boolean value that can be used as a guard on an action. In a coordinator, the mode is most often bound to a control port in a coordination interface for the coordinator. For example, in round-robin coordinator 410, the modes of concern are bound to a coordinator control port 414 of each coordinator coordination interface 412.

B. Actions

An action is a primitive behavioral element that can:

- Respond to events.
- Generate events.
- Change modes.

Actions can range in complexity from simple operations up to complicated pieces of source code. An action in a coordinator is called a transparent action because the effects of the action can be precomputed and the internals of the action are completely exposed to the coordination-centric design tools.

C. Bindings

Bindings connect input ports to output ports, control ports to modes, state ports to variables, and message ports to events. Bindings are transparent and passive. Bindings are simply conduits for event notification and data transfer. When used for event notification, bindings are called triggers.

D. Action Triples

To be executed, an action must be enabled by a mode and triggered by an event. The combination of a mode, trigger, and action is referred to as an action triple, which is a triple (m; t; a) in which:

- m is a mode.
- t is a trigger.
- a is an action.

The trigger is a reference to an event type, but it can be used to pass data into the action. Action triples are written: mode : trigger : action

A coordinator's actions are usually either pure control, in which both the trigger and action performed affect only control state, or pure data, in which both the trigger and action performed occur in the data domain. In the case of round-robin coordinator 410, the following set of actions is responsible for maintaining the appropriate state:

$$\text{access}_i : - \text{access}_i : + \text{access}_{(i+1) \bmod n}$$

The symbol "+" signifies a mode's activation edge (*i.e.,* the event associated with the mode becoming true), and the symbol "-" signifies its deactivation edge. When any coordinator coordination interface 412 deactivates its arbitrated control port 404's, access bit, the access bit of the next coordinator coordination interface 412 is automatically activated.

E. Constraints

In this dissertation, constraints are boolean relationships between control ports. They take the form:
Condition $\Rightarrow$ Effect This essentially means that the Condition (on the left side of the arrow) being true implies that Effect (on the right side of the arrow) is also true. In other words, if Condition is true, then Effect should also be true.

A constraint differs from a guarantee in that the guarantee is limited to communicating in-variant relationships between components without providing a way to enforce the in-variant relationship. The constraint, on the other hand, is a set of instructions to the runtime system dealing with how to enforce certain relationships between components. When a constraint is violated, two corrective actions are available to the system: (1) modify the values on the left-hand side to make the left-hand expression evaluate as false (an effect termed backpressure) or (2) alter the right-hand side to make it true. We refer to these techniques as LHM (left-hand modify) and RHM (right-hand modify). For example, given the constraint

$$x \Rightarrow \neg y \text{ and the value } x \wedge y,$$

with RHM semantics the runtime system must respond by disabling $y$ or setting $y$ to false. Thus the value of $\neg y$ is set to true.

The decision of whether to use LHM, to use RHM, or even to suspend enforcement of a constraint in certain situations can dramatically affect the efficiency and predictability of the software system. Coordination-centric design does not attempt to solve simultaneous constraints at runtime. Rather, runtime algorithms use local ordered constraint solutions. This, however, can result in some constraints being violated and is discussed further below.

Round-robin coordinator 410 has a set of safety constraints to ensure that there is never more than one token in the system:

$$\text{access}_i \Rightarrow \forall_{j \neq i} \neg \text{access}_j$$

The above equation translates roughly as $\text{access}_i$ implies not $\text{access}_j$ for the set of all $\text{access}_j$ where j is not equal to i. Even this simple constraint system can cause problems with local resolution semantics (as are LHM and RHM). If the runtime system attempted to fix all constraints simultaneously, all access modes would be shut down. If they were fixed one at a time, however, any duplicate tokens would be erased on the first pass, satisfying all other constraints and leaving a single token in the system.

Since high-level protocols can be built from combinations of lower-level protocols, coordinators can be hierarchically composed. A coordinator is a six-tuple (I; M; B; N; A; X) in which:

- I is a set of coordination interfaces.
- M is a set of modes.
- B is a set of bindings between interface elements (*e.g.*, control ports and message ports) and internal elements (*e.g.*, modes and triggers).
- N is a set of constraints between interface elements.
- A is a set of action triples for the coordinator.
- X is a set of subcoordinators.

Figs. 6A, 6B, 6C, and 6D show a few simple coordinators highlighting the bindings and constraints of the respective coordinators. With reference to Fig. 6A, a unidirectional data transfer coordinator 600 transfers data in one direction between two components (not shown) by connecting incoming receive message port 408 to outgoing receive message port 418 with a binding 602. With reference to Fig. 6B, bidirectional data transfer coordinator 604 transfers data back and forth between two components (not shown) by connecting incoming receive message port 408 to outgoing receive message port 418 with binding 602 and connecting send message port 406 to incoming send message port 416 with a second binding 602. Unidirectional data transfer coordinator 600 and bidirectional data transfer coordinator 604 simply move data from one message port to another. Thus each coordinator consists of bindings between corresponding ports on separate coordination interfaces.

With reference to Fig. 6C, state unification coordinator 606 ensures that a state port a 608 and a state port b 610 are always set to the same value. State unification coordinator 606 connects state port a 608 to state port b 610 with binding 602. With reference to Fig. 6D, control state mutex coordinator 612 has a first constraint 618 and a second constraint 620 as follows:

(1) $c \Rightarrow \neg d$ and

(2) $d \Rightarrow \neg c$.

Constraints 618 and 620 can be restated as follows:

(1) A state port c 614 having a true value implies that a state port d 616 has a false value, and
(2) State port d 616 having a true value implies that state port c 614 has a false value.

A coordinator has two types of coordination interfaces: up interfaces that connect the coordinator to a second coordinator, which is at a higher level of design hierarchy and down interfaces that connect the coordinator either to a component or to a third coordinator, which is at a lower level of design hierarchy. Down interfaces have names preceded with "-". Round-robin coordinator 410 has six down coordination interfaces (previously referred to as coordinator coordination interface 412), with constraints that make the turning off of any coordinator control port 414 (also referred to as access control port) turn on the coordinator control port 414 of the next coordinator coordination interface 412 in line. Table 2 presents all constituents of the round-robin coordinator.

Table 2.

| Constituent | Value |
|---|---|
| Coordination interfaces | $I = {}^{-}\text{AccessInterface}_{1\text{-}6}$ |
| Modes | $M = \text{access}_{1\text{-}6}$ |
| Bindings | $B = \forall_{1 \leq i \leq 6}(\sim\!\text{AccessInterface}_i.access,\ access_i) \cup$ |
| Constraints | $N = \forall_{1 \leq i \leq 6}(\forall_{(1 \leq j \leq 6) \wedge (i \neq j)}\ access_i \Rightarrow \neg access_j)$ |
| Actions | $A = \forall_{1 \leq i \leq 6}\ access_i : \text{-}access_i : +access_{(i+1)}\ \text{mod}\ 6$ |
| Subcoordinators | $X = \emptyset$ |

This tuple describes an implementation of a round-robin coordination protocol for a particular system with six components, as shown in round-robin coordinator 410. We use a coordination class to describe a general coordination protocol that may not have a fixed number of coordinator coordination interfaces. The coordination class is a six-tuple (Ic; Mc; Bc; Nc; Ac; Xc) in which:

- Ic is a set of coordination interface descriptors in which each descriptor provides a type of coordination interface and specifies the number of such interfaces allowed within the coordination class.
- Mc is a set of abstract modes that supplies appropriate modes when a coordination class is instantiated with a fixed number of coordinator coordination interfaces.
- Bc is a set of abstract bindings that forms appropriate bindings between elements when the coordination class is instantiated.
- Nc is a set of abstract constraints that ensures appropriate constraints between coordination interface elements are in place as specified at instantiation.
- Ac is a set of abstract action triples for the coordinator.
- Xc is a set of coordination classes (hierarchy).

While a coordinator describes a coordination protocol for a particular application, it requires many aspects, such as the number of coordination interfaces and datatypes, to be fixed. Coordination classes describe protocols across many applications. The use of the coordination interface descriptors instead of coordination interfaces lets coordination classes keep the number of interfaces and datatypes undetermined until a particular coordinator is instantiated. For example, a round-robin coordinator contains a fixed number of coordinator coordination interfaces with specific bindings and constraints between the message and state ports on the fixed number of coordinator coordination interfaces. A round-robin coordination class contains descriptors for the coordinator coordination interface type, without stating how many coordinator coordination interfaces, and instructions for building bindings and constraints between ports on the coordinator coordination interfaces when a particular round-robin coordinator is created.

5. Components

A component is a six-tuple (I; A; M; V; S; X) in which:

- I is a set of coordination interfaces.
- A is a set of action triples.
- M is a set of modes.
- V is a set of typed variables.
- S is a set of subcomponents.
- X is a set of coordinators used to connect the subcomponents to each other and to the coordination interfaces.

Actions within a coordinator are fairly regular, and hence a large number of actions can be described with a few simple expressions. However, actions within a component are frequently diverse and can require distinct definitions for each individual action. Typically a component's action triples are represented with a table that has three columns: one for the mode, one for the trigger, and one for the action code. Table 3 shows some example actions from a component that can use round-robin coordination.

Table 3.

| Mode | Trigger | Action |
|------|---------|--------|
| Access | tick | AccessInterface.s.send("Test message"); -access; |
| ¬ access | tick | waitCount++; |

A component resembles a coordinator in several ways (for example, the modes and coordination interfaces in each are virtually the same). Components can have internal coordinators, and because of the internal coordinators, components do not always require either bindings or constraints. In the following subsections, various aspects of components are described in greater detail. Theses aspects of components include variable scope, action transparency, and execution semantics for systems of actions.

### A. Variable Scope

To enhance a component's modularity, all variables accessed by an action within the component are either local to the action, local to the immediate parent component of the action, or accessed by the immediate parent component of the action via state ports in one of the parent component's coordination interfaces. For a component's variables to be available to a hierarchical child component, they must be exported by the component and then imported by the child of the component.

### B. Action Transparency

An action within a component can be either a transparent action or an opaque action. Transparent and opaque actions each have different invocation semantics. The internal properties, *i.e.* control structures, variable, changes in state, operators, etc., of transparent actions are visible to all coordination-centric design tools. The design tools can separate, observe, and analyze all the internal properties of opaque actions. Opaque actions are source code. Opaque actions must be executed directly, and looking at the internal properties of opaque actions can be accomplished only through traditional, source-level debugging techniques. An opaque action must explicitly declare any mode changes and coordination interfaces that the opaque action may directly affect.

### C. Action Execution

An action is triggered by an event, such as data arriving or departing a message port, or changes in value being applied to a state port. An action can change the value of a state port, generate an event, and provide a way for the software system to interact with low-level device drivers. Since actions typically produce events, a single trigger can be propagated through a sequence of actions.

### 6. Protocols Implemented with Coordination Classes

In this section, we describe several coordinators that individually implement some common protocols: subsumption, barrier synchronization, rendezvous, and dedicated RPC.

### A. Subsumption Protocol

A subsumption protocol is a priority-based, preemptive resource allocation protocol commonly used in building small, autonomous robots, in which the shared resource is the robot itself.

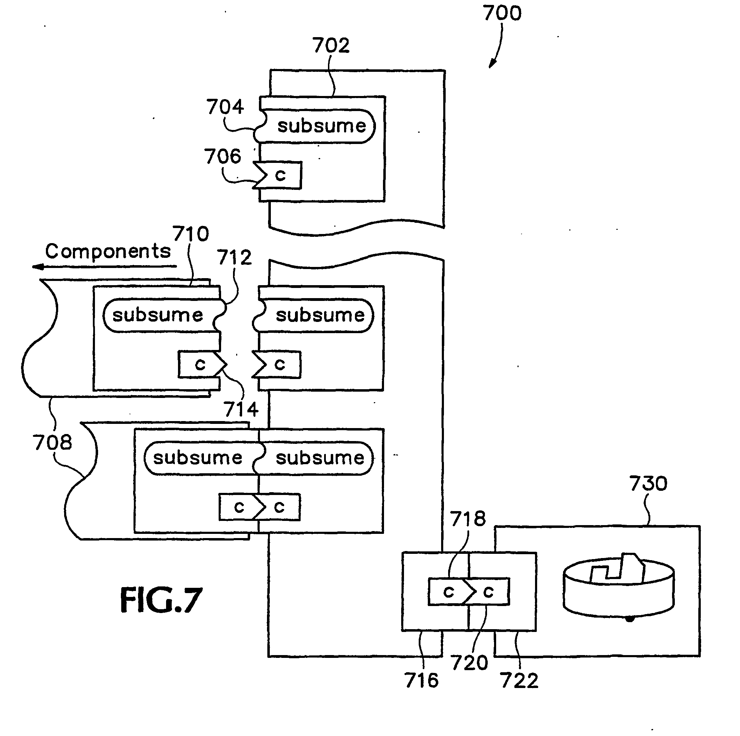

Fig. 7 shows a set of coordination interfaces and a coordinator for implementing the subsumption protocol. With reference to Fig. 7, a subsumption coordinator 700 has a set of subsumption coordinator coordination interfaces 702, which have a subsume arbitrated coordinator control port 704 and an incoming subsume message port 706. Each subsume component 708 has a subsume component coordination interface 710. Subsume component coordination interface 710 has a subsume arbitrated component control port 712 and an outgoing subsume message port 714. Subsumption coordinator 700 and each subsume component 708 are connected by their respective coordination interfaces, 702 and 710. Each subsumption coordinator coordination interface 702 in subsumption coordinator 700 is associated with a priority. Each subsume component 708 has a behavior that can be applied to a robot (not shown). At any time, any subsume component 708 can attempt to assert its behavior on the robot. The asserted behavior coming from the subsume component 708 connected to the subsumption coordinator coordination interface 702 with the highest priority is the asserted behavior that will actually be performed by the robot. Subsume components 708 need not know anything about other components in the system. In fact, each subsume component 708 is designed to perform independently of whether their asserted behavior is performed or ignored.

Subsumption coordinator 700 further has a slave coordinator coordination interface 716, which has an outgoing slave message port 718. Outgoing slave message port 718 is connected to an incoming slave message port 720. Incoming slave message port 720 is part of a slave coordination interface 722, which is connected to a slave 730. When a subsume component 708 asserts a behavior and that component has the highest priority, subsumption coordinator 700 will control slave 730 (which typically controls the robot) based on the asserted behavior.

The following constraint describes the basis of the subsumption coordinator 700's behavior:

$$subsume_p \Rightarrow \bigwedge_{i=1}^{p-1} \neg subsume_i$$

This means that if any subsume component 708 has a subsume arbitrated component control port 712 that has a value of true, then all lower-priority subsume arbitrated component control ports 712 are set to false. An important difference between round-robin and subsumption is that in round-robin, the resource access right is transferred only when surrendered. Therefore, round-robin coordination has cooperative release semantics. However, in subsumption coordination, a subsume component 708 tries to obtain the resource whenever it needs to and succeeds only when it has higher priority than any other subsume component 708 that needs the resource at the same time. A lower-priority subsume component 708 already using the resource must surrender the resource whenever a higher-priority subsume component 708 tries to access the resource. Subsumption coordination uses preemptive release semantics, whereby each subsume component 708 must always be prepared to relinquish the resource. Table 4 presents the complete tuple for the subsumption coordinator.

Table 4

| Constituent | Value |
|---|---|
| Coordination interfaces | $I$ = (Subsume$_{1-n}$) $\cup$ (Output) |
| Modes | $M$ = subsume$_{1-n}$ |
| Bindings | $B = \forall_{1 \leq i \leq n}$ (Subsume$_i$.subsume, subsume$_i$) $\cup$ |
| Constraints | $N = \forall_{1 \leq i \leq n}$ ($\forall_{(1 \leq j \leq i)}$ subsume$_i \Rightarrow \neg$subsume$_j$) |
| Actions | $A = \emptyset$ |
| Subcoordinators | $X = \emptyset$ |

B. Barrier Synchronization Protocol

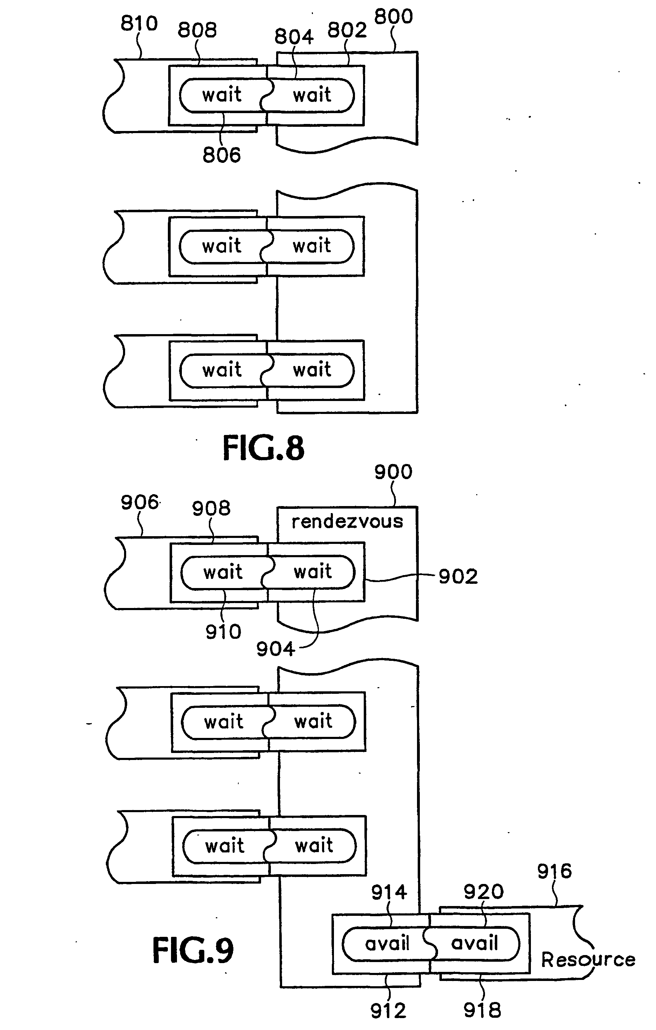

Other simple types of coordination that components might engage in enforce synchronization of activities. An example is barrier synchronization, in which each component reaches a synchronization point independently and waits. Fig. 8 depicts a barrier synchronization coordinator 800. With reference to Fig. 8, barrier synchronization coordinator 800 has a set of barrier synchronization coordination interfaces 802, each of which has a coordinator arbitrated state port 804; named wait. Coordinator arbitrated state port 804 is connected to a component arbitrated state port 806, which is part of a component coordination interface 808. Component coordination interface 808 is connected to a component 810. When an components 810 reach their respective synchronization points, they are all released from waiting. The actions for a barrier synchronization coordinator with n interfaces are:

$$\bigwedge_{0 \leq i < n} wait_i \; : \; : \; \forall_{0 \leq j < n} - wait_j$$

In other words, when all wait modes (not shown) become active, each one is released. The blank between the two colons indicates that the trigger event is the guard condition becoming true.

C. Rendezvous Protocol

A resource allocation protocol similar to barrier synchronization is called rendezvous. Fig. 9 depicts a rendezvous coordinator 900 in accordance with the present disclosure. With reference to Fig. 9, rendezvous coordinator 900 has a rendezvous coordination interface 902, which has a rendezvous arbitrated state port 904. A set of rendezvous components 906, each of which may perform different functions or have vastly different actions and modes, has a rendezvous component coordination interface 908, which includes a component arbitrated state port 910. Rendezvous components 906 connect to rendezvous coordinator 900 through their respective coordination interfaces, 908 and 902. Rendezvous coordinator 900 further has a rendezvous resource coordination interface 912, which has a rendezvous resource arbitrated state port 914, also called available. A resource 916 has a resource coordination interface 918, which has a resource arbitrated state port 920. Resource 916 is connected to rendezvous coordinator 900 by their complementary coordination interfaces, 918 and 912 respectively.

With rendezvous-style coordination, there are two types of participants: resource 916 and several resource users, here rendezvous components 916. When resource 916 is available, it activates its resource arbitrated state port 920, also referred to as its available control port. If there are any waiting rendezvous components 916, one will be matched with the resource; both participants are then released. This differs from subsumption and round-robin in that resource 916 plays an active role in the protocol by activating its available control port 920.

The actions for rendezvous coordinator 900 are:

$$available_i \wedge wait_j : : \text{-}available_i, \text{-}wait_j$$

This could also be accompanied by other modes that indicate the status after the rendezvous. With rendezvous coordination, it is important that only one component at a time be released from wait mode.

D. Dedicated RPC Protocol

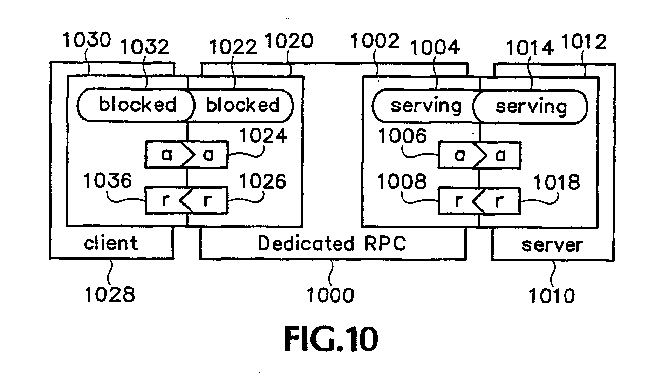

A coordination class that differs from those described above is dedicated RPC. Fig. 10 depicts a dedicated RPC system. With reference to Fig. 10, a dedicated RPC coordinator 1000 has an RPC server coordination interface 1002, which includes an RPC server imported state port 1004, an RPC server output message port 1006, and an RPC server input message port 1008. Dedicated RPC coordinator 1000 is connected to a server 1010. Server 1010 has a server coordination interface 1012, which has a server exported state port 1014, a server input data port 1016, and a server output data port 1018. Dedicated RPC coordinator 1000 is connected to server 1010 through their complementary coordination interfaces, 1002 and 1012 respectively. Dedicated RPC coordinator 1000 further has an RPC client coordination interface 1020, which includes an RPC client imported state port 1022, an RPC client input message port 1024, and an RPC client output message port 1026. Dedicated RPC coordinator 1000 is connected to a client 1028 by connecting RPC client coordination interface 1020 to a complementary client coordination interface 1030. Client coordination interface 1030 has a client exported state port 1032, a client output message port 1034, and a client input message port 1036.

The dedicated RPC protocol has a client/server protocol in which server 1010 is dedicated to a single client, in this case client 1028. Unlike the resource allocation protocol examples, the temporal behavior of this protocol is the most important factor in defining it. The following transaction listing describes this temporal behavior:

Client 1028 enters blocked mode by changing the value stored at client exported state port 1032 to true.
Client 1028 transmits an argument data message to server 1010 via client output message port 1034.
Server 1010 receives the argument (labeled "a") data message via server input data port 1016 and enters serving mode by changing the value stored in server exported state port 1014 to true.
Server 1010 computes return value.
Server 1010 transmits a return (labeled "r") message to client 1020 via server output data port 1018 and exits serving mode by changing the value stored in server exported state port 1014 to false.
Client 1028 receives the return data message via client input message port 1036 and exits blocked mode by changing the value stored at client exported state port 1032 to false.

This can be presented more concisely with an expression describing causal relationships:

$$T_{RPC} = +client.blocked \rightarrow client.transmits \rightarrow$$

$$+server.serving \rightarrow server.transmits \rightarrow$$

$$(\text{-}server.serving \parallel client.receives) \rightarrow \text{-}client.blocked$$

The transactions above describe what is supposed to happen. Other properties of this protocol must be described with temporal logic predicates.

*server. serving* $\Rightarrow$ *client.blocked*
*server.serving* $\Rightarrow$ *F(server.r.output)*
*server.a.input* $\Rightarrow$ *F(server. serving)*

The *r* in *server.r.output* refers to the server output data port 1018, also labeled as the *r* event port on the server, and the *a* in *serving.a.input* refers to server input data port 1016, also labeled as the *a* port on the server (see Fig. 10).

Together, these predicates indicate that (1) it is an error for server 1010 to be in serving mode if client 1028 is not blocked; (2) after server 1010 enters serving mode, a response message is sent or else an error occurs; and (3) server 1010 receiving a message means that server 1010 must enter serving mode. Relationships between control state and data paths must also be considered, such as:

(*client.a* $\Rightarrow$ *client.blocked*)

In other words, client 1028 must be in blocked mode whenever it sends an argument message.

The first predicate takes the same form as a constraint; however, since dedicated RPC coordinator 1000 only imports the client:blocked and server:serving modes (*i.e.*, through RPC client imported state port 1022 and RPC server imported state port 1004 respectively), dedicated RPC coordinator 1000 is not allowed to alter these values to comply. In fact, none of these predicates is explicitly enforced by a runtime system. However, the last two can be used as requirements and guarantees for interface type-checking.

### 7. System-Level Execution

Coordination-centric design methodology lets system specifications be executed directly, according to the semantics described above. When components and coordinators are composed into higher-order structures, however, it becomes essential to consider hazards that can affect system behavior. Examples include conflicting constraints, in which local resolution semantics may either leave the system in an inconsistent state or make it cycle forever, and conflicting actions that undo one another's behavior. In the remainder of this section, the effect of composition issues on system-level executions is explained.

### A. System Control Configurations

A configuration is the combined control state of a system-basically, the set of active modes at a point in time. In other words, a configuration in coordination-centric design is a bit vector containing one bit for each mode in the system. The bit representing a control state is true when the control state is active and false when the control state is inactive. Configurations representing the complete system control state facilitate reasoning on system properties and enable several forms of static analysis of system behavior.

### B. Action-Trigger Propagation

Triggers are formal parameters for events. As mentioned earlier, there are two types of triggers: (1) control triggers, invoked by control events such as mode change requests, and (2) data flow triggers, invoked by data events such as message arrivals or departures. Components and coordinators can both request mode changes (on the modes visible to them) and generate new messages (on the message ports visible to them). Using actions, these events can be propagated through the components and coordinators in the system, causing a cascade of data transmissions and mode change requests, some of which can cancel other requests. When the requests, and secondary requests implied by them, are all propagated through the system, any requests that have not been canceled are confirmed and made part of the system's new configuration.

Triggers can be immediately propagated through their respective actions or delayed by a scheduling step. Recall that component actions can be either transparent or opaque. Transparent actions typically propagate their triggers immediately, although it is not absolutely necessary that they do so. Opaque actions typically must always delay propagation.

### 1. Immediate Propagation

Some triggers must be immediately propagated through actions, but only on certain types of transparent actions. Immediate propagation can often involve static precomputation of the effect of changes, which means that certain actions may never actually be performed. For example, consider a system with a coordinator that has an action that activates mode A and a coordinator with an action that deactivates mode B whenever A is activated. Static analysis can be used to determine in advance that any event that activates A will also deactivate B; therefore, this effect can be executed immediately without actually propagating it through A.

2. Delayed Propagation

Trigger propagation through opaque actions must typically be delayed, since the system cannot look into opaque actions to precompute their results. Propagation may be delayed for other reasons, such as system efficiency. For example, immediate propagation requires tight synchronization among software components. If functionality is spread among a number of architectural components, immediate propagation is impractical.

C. A Protocol Implemented with a Compound Coordinator

Multiple coordinators are typically needed in the design of a system. The multiple coordinators can be used together for a single, unified behavior. Unfortunately, one coordinator may interfere with another's behavior.

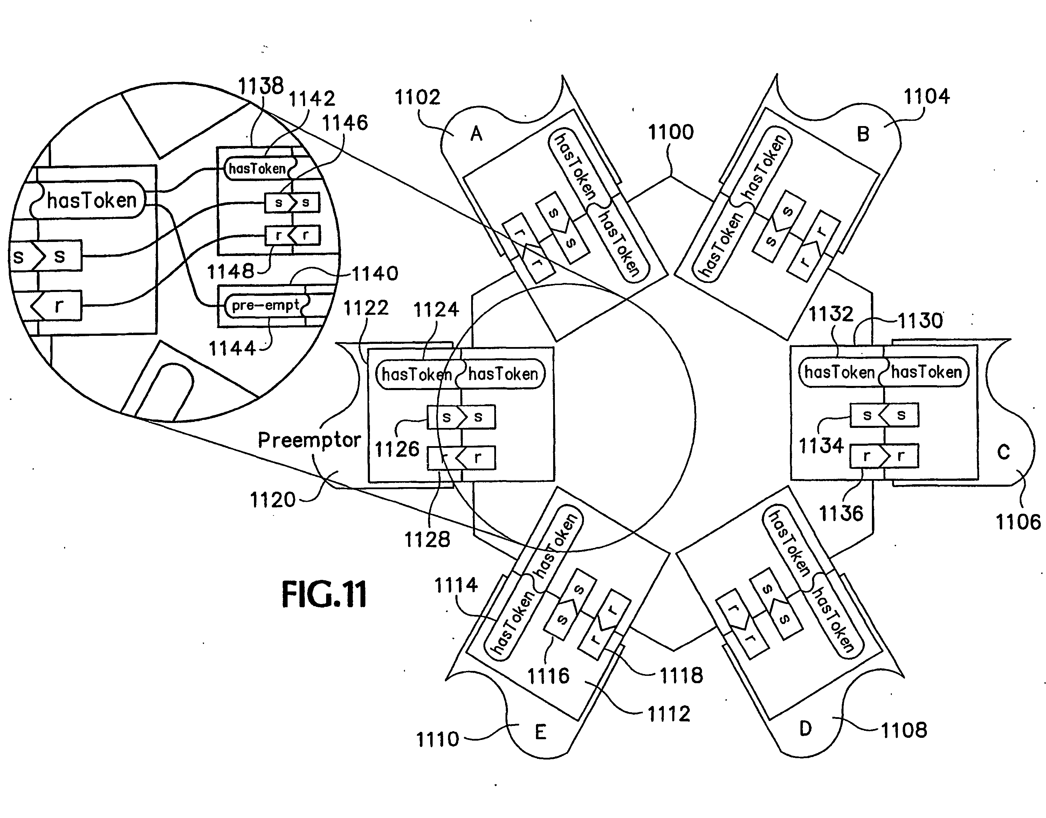

Fig. 11 shows a combined coordinator 1100 with both preemption and round-robin coordination for controlling access to a resource, as discussed above. With reference to Fig. 11, components 1102, 1104, 1106, 1108, and 1110 primarily use round-robin coordination, and each includes a component coordination interface 1112, which has a component arbitrated control port 1114 and a component output message port 1116. However, when a preemptor component 1120 needs the resource, preemptor component 1120 is allowed to grab the resource immediately. Preemptor component 1120 has a preemptor component coordination interface 1122. Preemptor component coordination interface 1122 has a preemptor arbitrated state port 1124, a preemptor output message port 1126, and a preemptor input message port 1128.

All component coordination interfaces 1112 and preemptor component coordination interface 1122 are connected to a complementary combined coordinator coordination interface 1130, which has a coordinator arbitrated state port 1132, a coordinator input message port 1134, and a coordinator output message port 1136. Combined coordinator 1100 is a hierarchical coordinator and internally has a round-robin coordinator (not shown) and a preemption coordinator (not shown). Combined coordinator coordination interface 1130 is connected to a coordination interface to round-robin 1138 and a coordination interface to preempt 1140. Coordinator arbitrated state port 1132 is bound to both a token arbitrated control port 1142, which is part of coordination interface to round-robin 1138, and to a preempt arbitrated control port 1144, which is part of coordination interface to preempt 1140. Coordinator input message port 1134 is bound to an interface to a round-robin output message port 1146, and coordinator output message port 1136 is bound to an interface to round-robin input message port 1148.

Thus preemption interferes with the normal round-robin ordering of access to the resource. After a preemption-based access, the resource moves to the component that in round-robin-ordered access would be the successor to preemptor component 1120. If the resource is preempted too frequently, some components may starve.

D. Mixing Control and Data in Coordinators

Since triggers can be control-based, data-based, or both, and actions can produce both control and data events, control and dataflow aspects of a system are coupled through actions. Through combinations of actions, designers can effectively employ modal data flow, in which relative schedules are switched on and off based on the system configuration.

Relative scheduling is a form of coordination. Recognizing this and understanding how it affects a design can allow a powerful class of optimizations. Many data-centric systems (or subsystems) use conjunctive firing, which means that a component buffers messages until a firing rule is matched. When matching occurs, the component fires, consuming the messages in its buffer that caused it to fire and generating a message or messages of its own. Synchronous data flow systems are those in which all components have only firing rules with constant message consumption and generation.

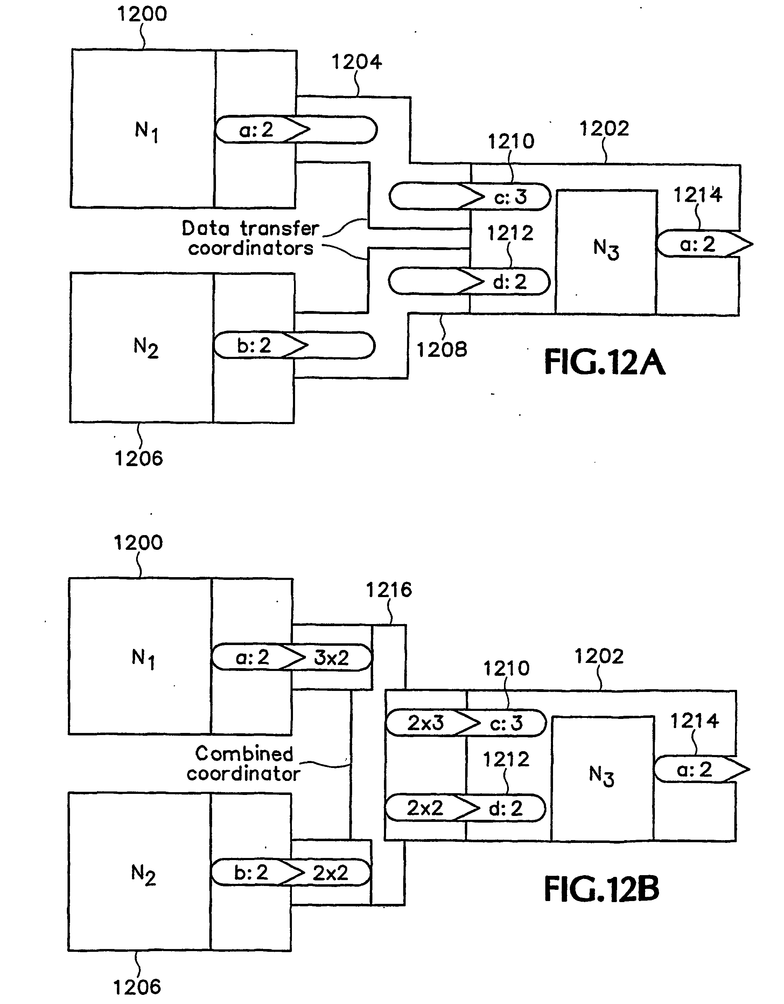

Fig. 12A shows a system in which a component N1 1200 is connected to a component N3 1202 by a data transfer coordinator 1204 and a component N2 1206 is connected to component N3 1202 by a second data transfer coordinator 1208. Component N3 1202 fires when it accumulates three messages on a port c 1210 and two messages on a port d 1212. On firing, component N3 1202 produces two messages on a port o 1214. Coordination control state tracks the logical buffer depth for these components. This is shown with numbers representing the logical queue depth of each port in Fig. 12.

Fig. 12B shows the system of Fig. 12A in which data transfer coordinator 1204 and second data transfer coordinator 1208 have been merged to form a merged data transfer coordinator 1216. Merging the coordinators in this example provides an efficient static schedule for component firing. Merged data transfer coordinator 1216 fires component N1 1200 three times and component N2 1206 twice. Merged data transfer coordinator 1216 then fires component N3 1202 twice (to consume all messages produced by component N1 1200 and component N2 1206).

Message rates can vary based on mode. For example, a component may consume two messages each time it fires in one mode and four each time it fires in a second mode. For a component like this, it is often possible to merge schedules on a configuration basis, in which each configuration has static consumption and production rates for all affected components.

### E. Coordination Transformations

In specifying complete systems, designers must often specify not only the coordination between two objects, but also the intermediate mechanism they must use to implement this coordination. While this intermediate mechanism can be as simple as shared memory, it can also be another coordinator; hence coordination may be, and often is, layered. For example, RPC coordination often sits on top of a TCP/IP stack or on an IrDA stack, in which each layer coordinates with peer layers on other processing elements using unique coordination protocols. Here, each layer provides certain capabilities to the layer directly above it, and the upper layer must be implemented in terms of them.
In many cases, control and communication synthesis can be employed to automatically transform user-specified coordination to a selected set of standard protocols. Designers may have to manually produce transformations for nonstandard protocols.

### F. Dynamic Behavior with Compound Coordinators

Even in statically bound systems, components may need to interact in a fashion that appears dynamic. For example, RPC-style coordination often has multiple clients for individual servers. Here, there is no apparent connection between client and server until one is forged for a transaction. After the connection is forged, however, the coordination proceeds in the same fashion as dedicated RPC.
Our approach to this is to treat the RPC server as a shared resource, requiring resource allocation protocols to control access. However, none of the resource allocation protocols described thus far would work efficiently under these circumstances. In the following subsections, an appropriate protocol for treating the RPC as a shared resource will be described and how that protocol should be used as part of a complete multiclient RPC coordination class-one that uses the same RPC coordination interfaces described earlier-will be discussed.

### 1. First Come/First Serve protocol (FCFS)

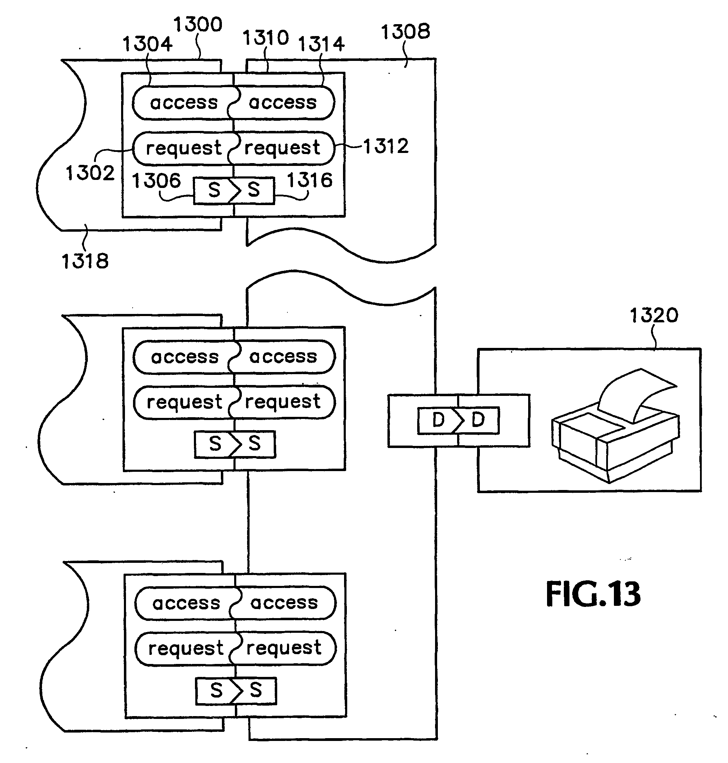

Fig. 13 illustrates a first come/first serve (FCFS) resource allocation protocol, which is a protocol that allocates a shared resource to the requester that has waited longest. With reference to Fig. 13, a FCFS component interface 1300 for this protocol has a request control port 1302, an access control port 1304 and a component outgoing message port 1306. A FCFS coordinator 1308 for this protocol has a set of FCFS interfaces 1310 that are complementary to FCFS component interfaces 1300, having a FCFS coordinator request control port 1312, a FCFS coordinator access port 1314, and a FCFS coordinator input message port 1316. When a component 1318 needs to access a resource 1320, it asserts request control port 1302. When granted access, FCFS coordinator 1308 asserts the appropriate FCFS coordinator access port 1314, releasing FCFS coordinator request control port 1312.
To do this, FCFS coordinator 1308 uses a rendezvous coordinator and two round-robin coordinators. One round-robin coordinator maintains a list of empty slots in which a component may be enqueued, and the other round-robin coordinator maintains a list showing the next component to be granted access. When an FCFS coordinator request control port 1312 becomes active, FCFS coordinator 1308 begins a rendezvous access to a binder action. When activated, this action maps the appropriate component 1318 to a position in the round-robin queues. A separate action cycles through one of the queues and selects the next component to access the server. As much as possible, FCFS coordinator 1308 attempts to grant access to resource 1320 to the earliest component 1318 having requested resource 1320, with concurrent requests determined based on the order in the rendezvous coordinator of the respective components 1318.

### 2. Multiclient RPC

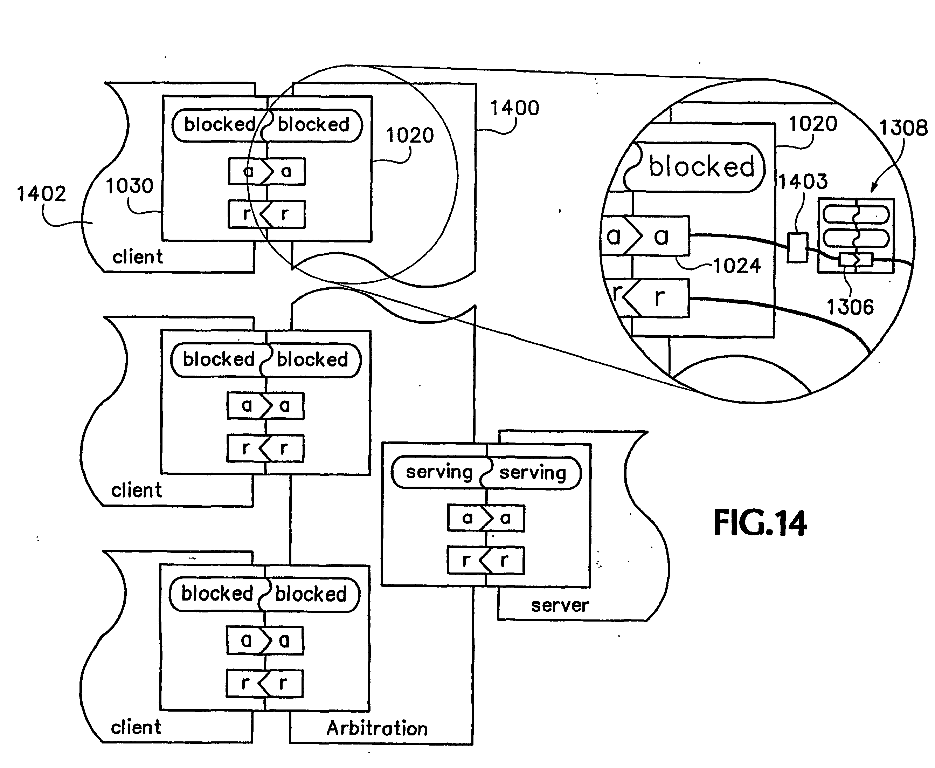

Fig. 14 depicts a multiclient RPC coordinator 1400 formed by combining FCFS coordinator 1308 with dedicated RPC coordinator 1000. With reference to Fig. 14, a set of clients 1402 have a set of client coordination interfaces 1030, as shown in Fig. 10. In addition, multiclient RPC coordinator 1400 has a set of RPC client coordination interfaces 1020, as shown in Fig. 10. For each RPC client coordination interface 1020, RPC client input message port 1024, of RPC client coordination interface 1020, is bound to the component outgoing message port 1306 of FCFS coordinator 1308. Message transfer action 1403 serves to transfer messages between RPC client input message port 1024 and component outgoing message port 1306. For coordinating the actions of multiple clients 1402, multiclient RPC coordinator 1400 must negotiate accesses to a server 1404 and keep track of the values returned by server 1404.

G. Monitor Modes and Continuations

Features such as blocking behavior and exceptions can be implemented in the coordination-centric design methodology with the aid of monitor modes. Monitor modes are modes that exclude all but a selected set of actions called continuations, which are actions that continue a behavior started by another action.

1. Blocking Behavior

With blocking behavior, one action releases control while entering a monitor mode, and a continuation resumes execution after the anticipated response event. Monitor mode entry must be immediate (at least locally), so that no unexpected actions can execute before they are blocked by such a mode.

Each monitor mode has a list of actions that cannot be executed when it is entered. The allowed (unlisted) actions are either irrelevant or are continuations of the action that caused entry into this mode. There are other conditions, as well. This mode requires an exception action if forced to exit. However, this exception action is not executed if the monitor mode is turned off locally.

When components are distributed over a number of processing elements, it is not practical to assume complete synchronization of the control state. In fact, there are a number of synchronization options available as detailed in Chou, P "Control Composition and Synthesis of Distributed Real-Time Embedded Systems", Ph.D. dissertation, University of Washington, 1998.

2. Exception Handling

Exception actions are a type of continuation. When in a monitor mode, exception actions respond to unexpected events or events that signal error conditions. For example, multiclient RPC coordinator 1400 can bind ¬*client.blocked* to a monitor mode and set an exception action on +*server.serving*. This will signal an error whenever the server begins to work when the client is not blocked for a response.

8. A Complete System Example

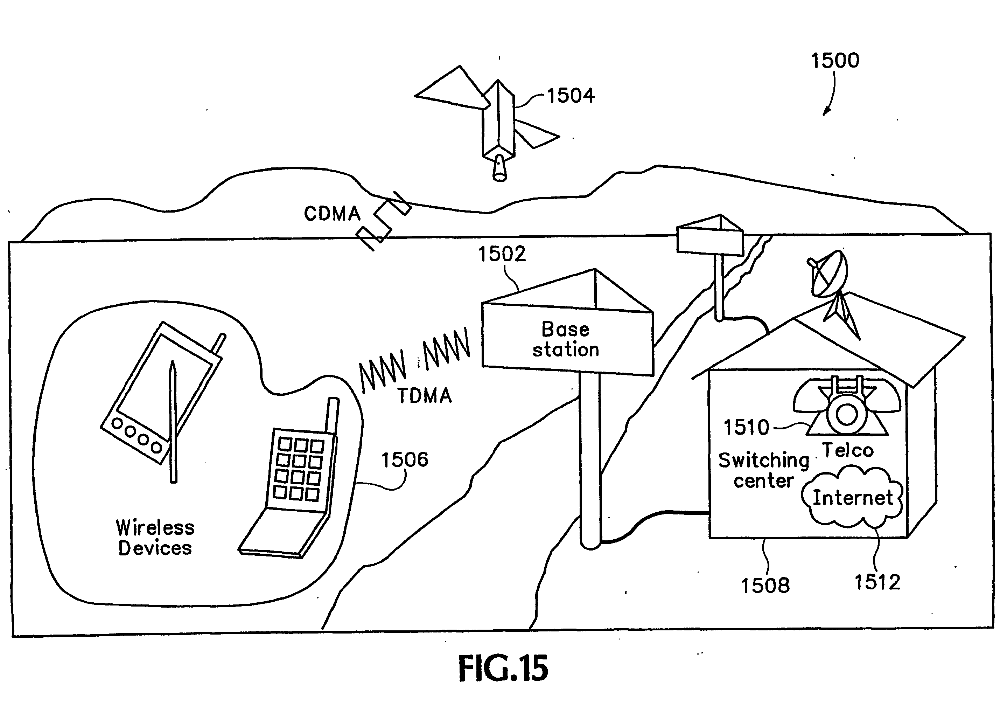

Figure 15 depicts a large-scale example system under the coordination-centric design methodology. With reference to Fig. 15, the large scale system is a bimodal digital cellular network 1500. Network 1500 is for the most part a simplified version of a GSM (global system for mobile communications) cellular network. This example shows in greater detail how the parts of coordination-centric design work together and demonstrates a practical application of the methodology. Network 1500 has two different types of cells, a surface cell 1502 (also referred to as a base station 1502) and a satellite cell 1504. These cells are not only differentiated by physical position, but by the technologies they use to share network 1500. Satellite cells 1504 use a code division multiple access (CDMA) technology, and surface cells 1502 use a time division multiple access (TDMA) technology. Typically, there are seven frequency bands reserved for TDMA and one band reserved for CDMA. The goal is for as much communication as possible to be conducted through the smaller TDMA cells, here surface cells 1502, because power requirements for a CDMA cells, here satellite cell 1504, increase with the number of users in the CDMA cell. Mobile units 1506, or wireless devices, can move between surface cells 1502, requiring horizontal handoffs between surface cells 1502. Several surface cells 1502 are typically connected to a switching center 1508. Switching center 1508 is typically connected to a telephone network or the Internet 1512. In addition to handoffs between surface cells 1502, the network must be able to hand off between switching centers 1508. When mobile units 1506 leave the TDMA region, they remain covered by satellite cells 1504 via vertical handoffs between cells. Since vertical handoffs require changing protocols as well as changing base stations and switching centers, they can be complicated in terms of control.

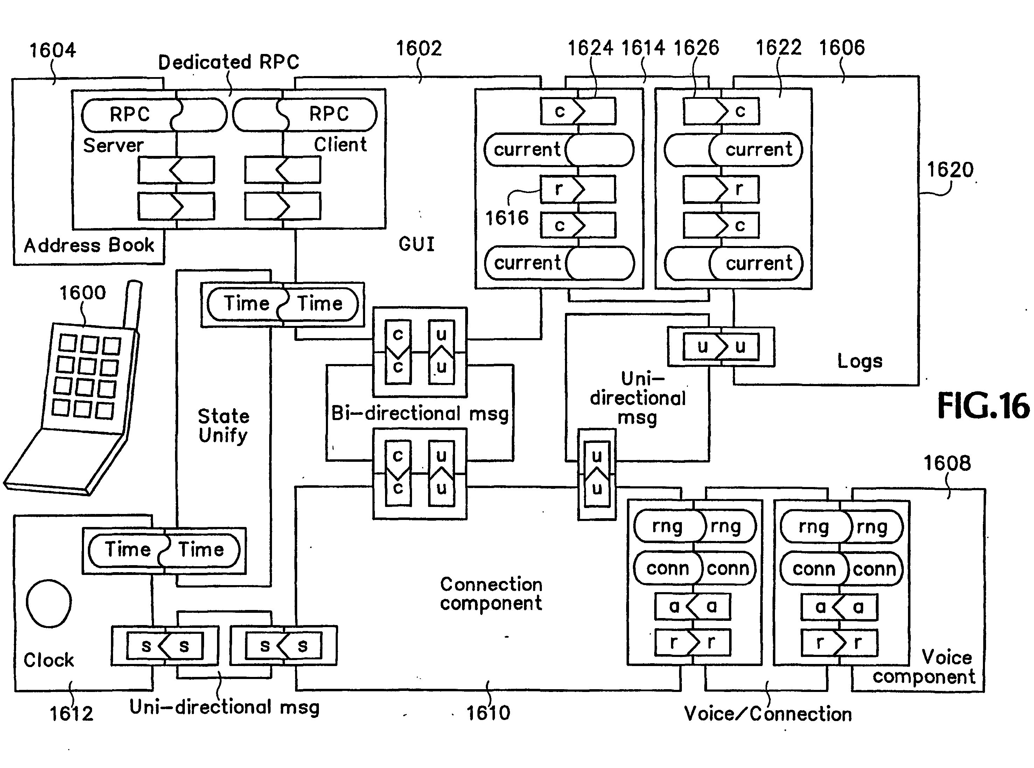

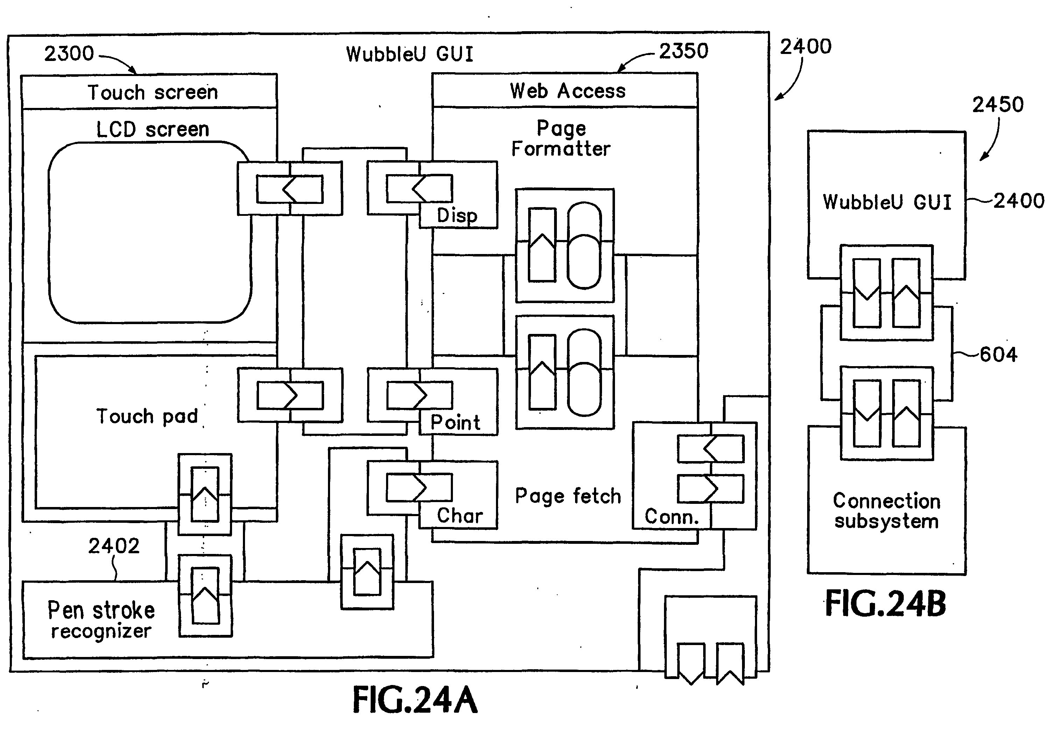

Numerous embedded systems comprise the overall system. For example, switching center 1508 and base stations, surface cells 1502, are required as part of the network infrastructure, but cellular phones, handheld Web browsers, and other mobile units 1506 may be supported for access through network 1500. This section concentrates on the software systems for two particular mobile units 1506: a simple digital cellular phone (shown in Fig. 16) and a handheld Web browser (shown in Fig. 24). These examples require a wide variety of coordinators and reusable components. Layered coordination is a feature in each system, because a function of many subsystems is to perform a layered protocol. Furthermore, this example displays how the hierarchically constructed components can be applied in a realistic system to help manage the complexity of the overall design.

To begin this discussion, the cellular phone is described with a focus on the cellular phones functional components and the formalization of the interaction protocols for those substantive components. The handheld Web browser is then discussed, highlighting the main ways in which its functionality and coordination differ from those of the cellular phone.

A. Cellular Phone

Fig. 16 shows a top-level coordination diagram of the behavior of a cell phone 1600. Rather than using a single coordinator that integrates the components under a single protocol, we use several coordinators in concert:

With reference to Fig. 16, cell phone 1600 supports digital encoding of voice streams. Each component of cell phone 1600 is hierarchical. A GUI 1602 lets users enter phone numbers while displaying them and query an address book 1604 and a logs component 1606. Address book 1604 is a database that can map names to phone numbers and vice versa. GUI 1602 uses address book 1604 to help identify callers and to look up phone numbers to be dialed. Logs 1606 track both incoming and outgoing calls as they are dialed. A voice component 1608 digitally encodes and decodes, and compresses and decompresses, an audio signal. A connection component 1610 multiplexes, transmits, receives, and demultiplexes the radio signal and separates out the voice stream and caller identification information.

Coordination among the above components makes use of several of the coordinators discussed above. Between connection component 1610 and a clock 1612, and between logs 1606 and connection component 1610, are unidirectional data transfer coordinators 600 as described with reference to Fig. 6A. Between voice component 1608 and connection component 1610, and between GUI 1602 and connection component 1610, are bi-directional data transfer coordinators 604, as described with reference to Fig. 6B. Between clock 1612 and GUI 1602 is a state unification coordinator 606, as described with reference to Fig. 6C. Between GUI 1602 and address book 1604 is a dedicated RPC coordinator 1000 as described with reference to Fig. 10, in which address book 1604 has client 1028 and GUI 1602 has server 1010.

There is also a custom GUI/log coordinator 1614 between logs 1606 and GUI 1602. GUI/log coordinator 1614 lets GUI 1602 transfer new logged information through an r output message port 1616 on a GUI coordination interface 1618 to an r input message port 1620 on a log coordination interface 1622. GUI/log coordinator 1614 also lets GUI 1602 choose current log entries through a pair of c output message ports 1624 on GUI coordination interface 1618 and a pair of c input message ports 1626 on log coordination interface 1622. Logs 1606 continuously display one entry each for incoming and outgoing calls.

1. GUI Component

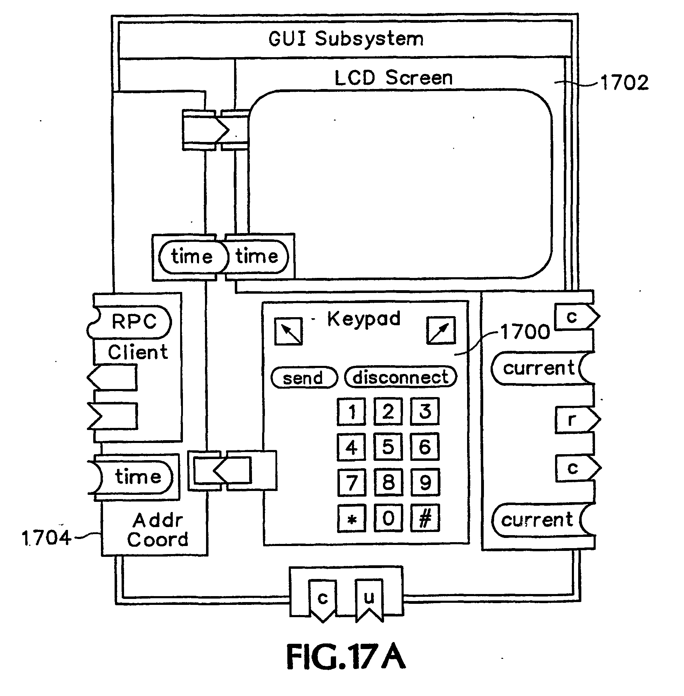

Fig. 17A is a detailed view of GUI component 1602, of Fig. 16. With reference to Fig. 17A, GUI component 1602 has two inner components, a keypad 1700 and a text-based liquid crystal display 1702, as well as several functions of its own (not shown). Each time a key press occurs, it triggers an action that interprets the press, depending on the mode of the system. Numeric presses enter values into a shared dialing buffer. When a complete number is entered, the contents of this buffer are used to establish a new connection through connection component 1610. Table 5 shows the action triples for GUI 1602.

Table 5

| Mode | Trigger | Action |
|---|---|---|
| Idle | `, — "` | numBuffer.append(keypress.val) |
| | Send | radio.send(numBuffer.val) +outgoingCall |
| | Disconnect | Nil |
| | Leftarrow | AddressBook.forward() +lookupMode |
| | Rightarrow | log.lastcall() +outlog |
| LookupMode | Leftarrow | AddressBook.forward() |
| | Rightarrow | AddressBook.backward() |

An "Addr Coord" coordinator 1704 includes an address book mode (not shown) in which arrow key presses are transformed into RPC calls.

2. Logs Component

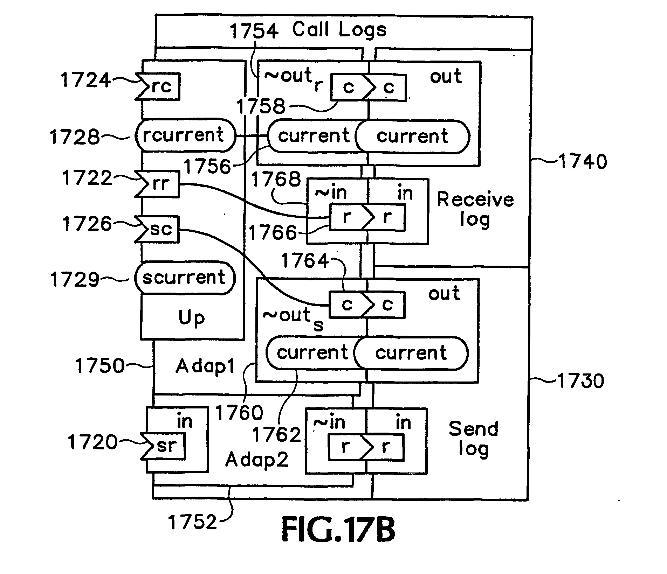

Fig. 17B is a detailed view of logs component 1606, which tracks all incoming and outgoing calls. With reference to Fig. 17B, both GUI component 1602 and connection component 1610 must communicate with logs component 1606 through specific message ports. Those specific message ports include a transmitted number message port 1720, a received number message port 1722, a change current received message port 1724, a change current transmitted message port 1726, and two state ports 1728 and 1729 for presenting the current received and current transmitted values, respectively.

Logs component 1606 contains two identical single-log components: a send log 1730 for outgoing calls and a receive log 1740 for incoming calls. The interface of logs component 1606 is connected to the individual log components by a pair of adapter coordinators, Adap1 1750 and Adap2 1752. Adap1 1750 has an adapter receive interface 1754, which has a receive imported state port 1756 and a receive output message port 1758. Adap1 1750 further has an adapter send interface 1760, which has a send imported state port 1762 and a send output message port 1764. Within Adap1, state port 1728 is bound to receive imported state port 1756, change current received message port 1724 is bound to receive output message port 1758, received number message port 1722 is bound to a received interface output message port 1766 on a received number coordination interface 1768, change current transmitted message port 1726 is bound to send output message port 1764, and state port 1729 is bound to Up.rc is bound to send imported state port 1762 .

3. Voice Component

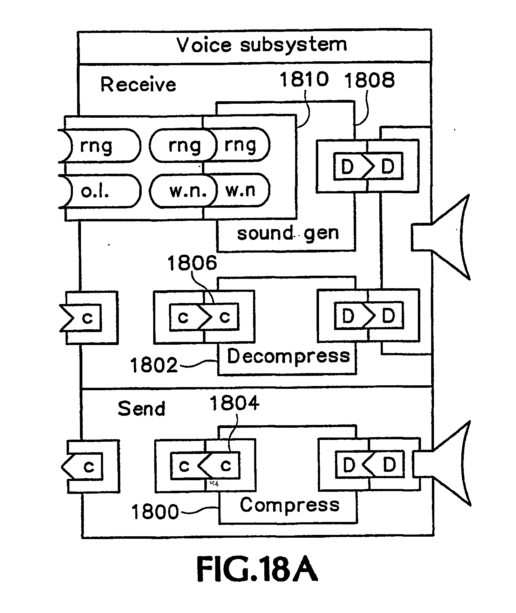

Fig. 18A is a detailed view of voice component 1608 of Fig. 16. Voice component 1608 has a compression component 1800 for compressing digitized voice signals before transmission, a decompression component 1802 for decompressing received digitized voice signals, and interfaces 1804 and 1806 to analog transducers (not shown) for digitizing sound to be transmitted and for converting received transmissions into sound. Voice component 1608 is a pure data flow component containing sound generator 1808 which functions as a white-noise generator, a ring tone generator, and which has a separate port for each on sound generator interface 1810, and voice compression functionality in the form of compression component 1800 and decompression component 1802.

4. Connection Component

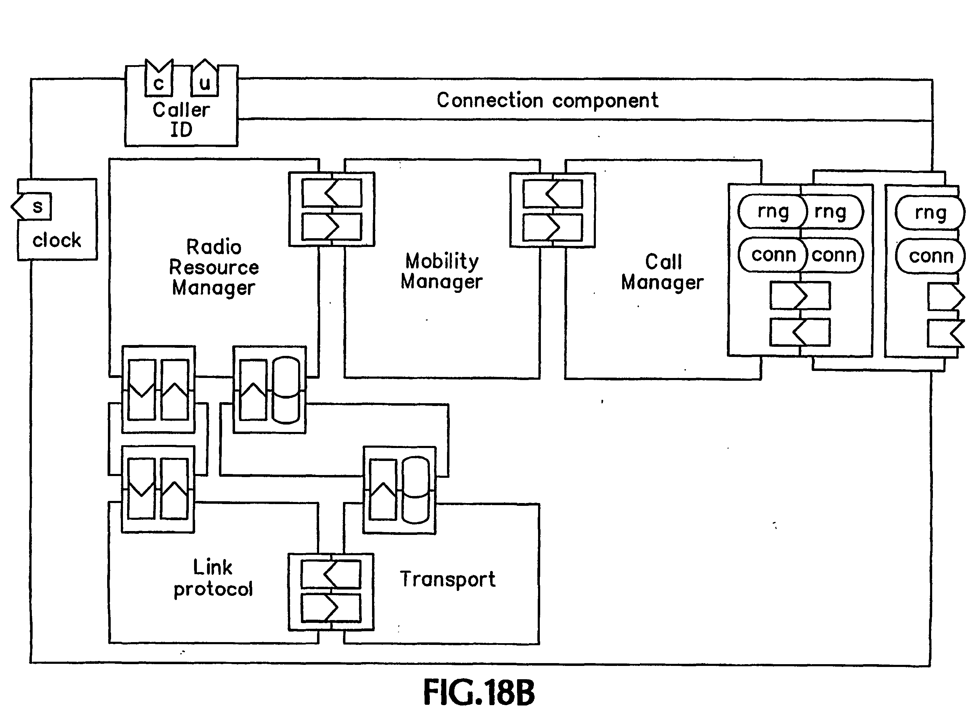

Fig. 18B is a detailed view of connection component 1610 of Fig. 16. With reference to Fig. 18B, connection component 1610 coordinates with voice component 1608, logs component 1606, clock 1612, and GUI 1602. In addition, connection component 1610 is responsible for coordinating the behavior of cell phone 1600 with a base station that owns the surface cell 1502 (shown in Fig. 15), a switching center 1508 (shown in Fig. 15), and all other phones (not shown) within surface cell 1502. Connection component 1610 must authenticate users, establish connections, and perform handoffs as needed-including appropriate changes in any low-level protocols (such as a switch from TDMA to CDMA).

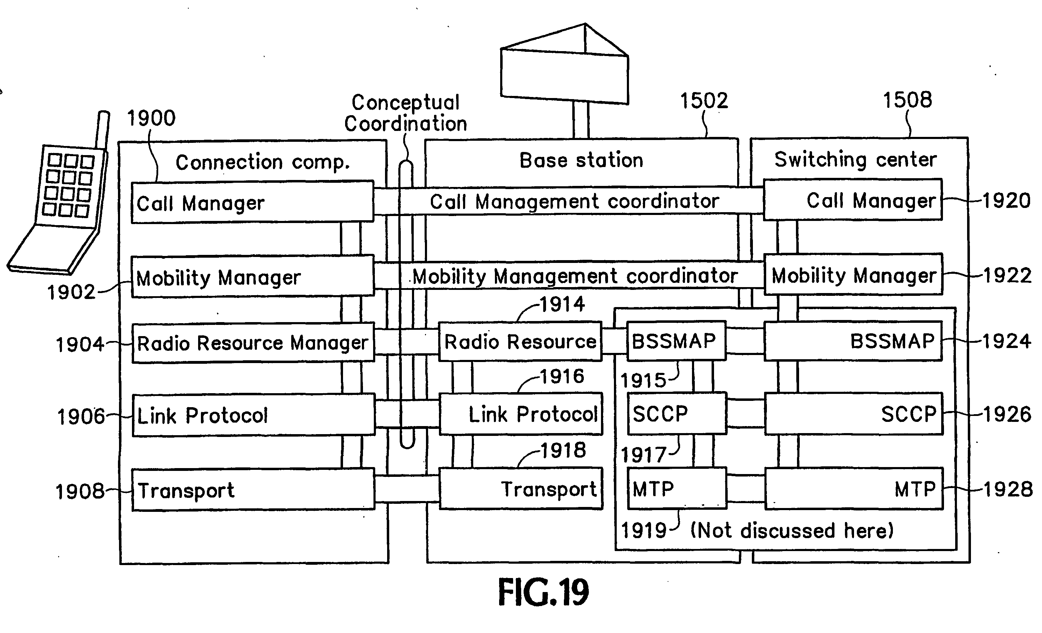

Fig. 19 depicts a set of communication layers between connection component 1610 of cell phone 1600 and base station 1502 or switching center 1508. With reference to Fig. 19, has several subcomponents, or lower-level components, each of which coordinates with an equivalent, or peer, layer on either base station 1502 or switching center 1508. The subcomponents of connection component 1610 include a cell phone call manager 1900, a cell phone mobility manager 1902, a cell phone radio resource manager 1904, a cell phone link protocol manager 1906, and a cell phone transport manager 1908 which is responsible for coordinating access to and transferring data through the shared airwaves TDMA and CDMA coordination. Each subcomponent will be described in detail including how each fits into the complete system.

Base station 1502 has a call management coordinator 1910, a mobility management coordinator 1912, a radio resource coordinator 1914 (BSSMAP 1915), a link protocol coordinator 1916 (SCCO 1917), and a transport coordinator 1918 (MTP 1919). Switching center 1508 has a switching center call manager 1920, a switching center mobility manager 1922, (a BSSMAP 1924, a SCCP 1926, and an MTP 1928.

a. Call Management

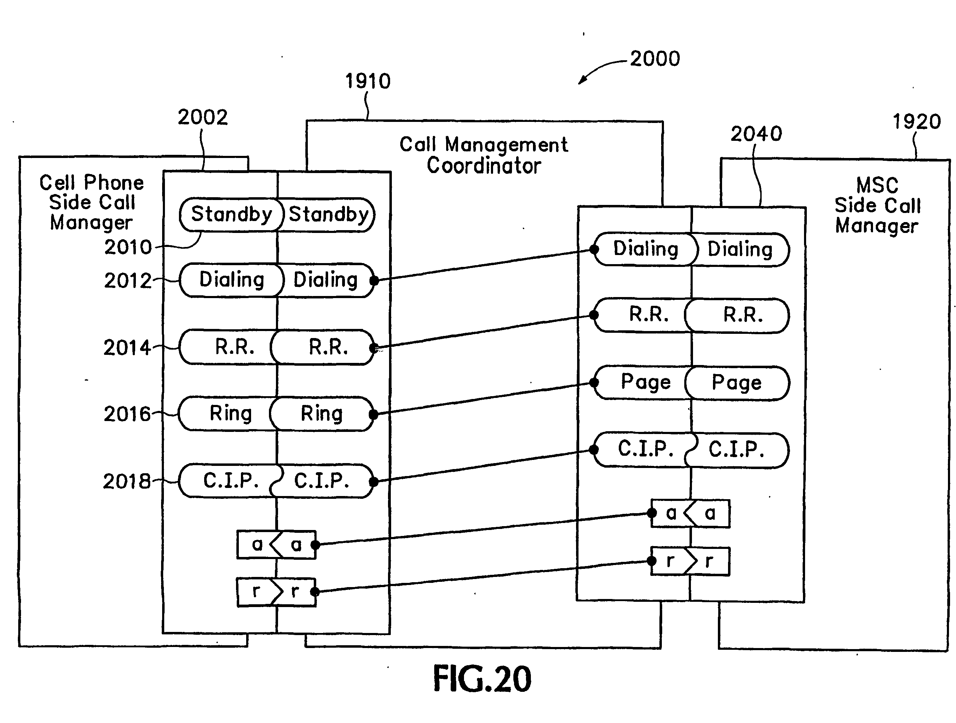

Fig. 20 is a detailed view of a call management layer 2000 consisting of cell phone call manager 1900, which is connected to switching center call manager 1920 by call management coordinator 1910. With reference to Fig. 20, call management layer 2000 coordinates the connection between cell phone 1600 and switching center 1508. Call management layer 2000 is responsible for dialing, paging, and talking. Call management layer 2000 is always present in cell phone 1600, though not necessarily in Internet appliances (discussed later). Cell phone call manager 1900 includes a set of modes (not shown) for call management coordination that consists of the following modes:

- Standby
- Dialing
- RingingRemote
- Ringing
- CallInProgress

Cell phone call manager 1900 has a cell phone call manager interface 2002. Cell phone call manager interface 2002 has a port corresponding to each of the above modes. The standby mode is bound to a standby exported state port 2010. The dialing mode is bound to a dialing exported state port 2012. The RingingRemote mode is bound to a RingingRemote imported state port 2014. The Ringing mode is bound to a ringing imported state port 2016. The CallInProgress mode is bound to a CallInProgress arbitrated state port 2018.

Switching center call manager 1920 includes the following modes (not shown) for call management coordination at the switching center:

- Dialing
- RingingRemote
- Paging
- CallInProgress

Switching center call manager 1920 has a switching center call manager coordination interface 2040, which includes a port for each of the above modes within switching center call manager 1920.

When cell phone 1600 requests a connection, switching center 1508 creates a new switching center call manager and establishes a call management coordinator 1910 between cell phone 1600 and switching center call manager 1920.

b. Mobility Management

A mobility management layer authenticates mobile unit 1506 or cell phone 1600. When there is a surface cell 1502 available, mobility manager 1902 contacts the switching center 1508 for surface cell 1502 and transfers a mobile unit identifier (not shown) for mobile unit 1506 to switching center 1508. Switching center 1508 then looks up a home motor switching center for mobile unit 1506 and establishes a set of permissions assigned to mobile unit 1506. This layer also acts as a conduit for the call management layer. In addition, the mobility management layer performs handoffs between base stations 1502 and switching centers 1508 based on information received from the radio resource layer.

c. Radio Resource

In the radio resource layer, radio resource manager 1904, chooses the target base station 1502 and tracks changes in frequencies, time slices, and CDMA codes. Cell phones may negotiate with up to 16 base stations simultaneously. This layer also identifies when handoffs are necessary.

d. Link Protocol

The link layer manages a connection between cell phone 1600 and base station 1502. In this layer, link protocol manager 1906 packages data for transfer to base station 1502 from cell phone 1600.

e. Transport

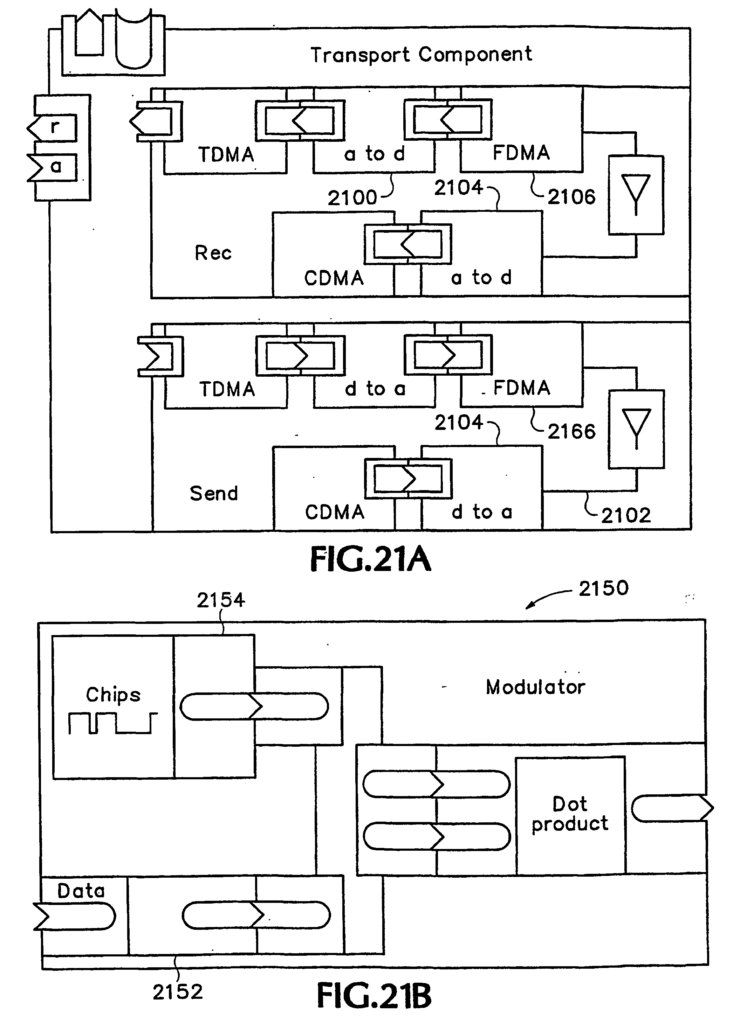

Fig. 21A is a detailed view of transport component 1908 of connection component 1610. Transport component 1908 has two subcomponents, a receive component 2100 for receiving data and a transmit component 2102 for transmitting data. Each of these subcomponents has two parallel data paths a CDMA path 2104 and a TDMA/FDMA path 2106 for communicating in the respective network protocols.
Fig. 21B is a detailed view of a CDMA modulator 2150, which implements a synchronous data flow data path. CDMA modulator 2150 takes the dot-product of an incoming data signal along path 2152 and a stored modulation code for cell phone 1600 along path 2154, which is a sequence of chips, which are measured time signals having a value of -1 or +1.
Transport component 1908 uses CDMA and TDMA technologies to coordinate access to a resource shared among several cell phones 1600, *i.e.*, the airwaves. Transport components 1908 supersede the FDMA technologies (*e.g.*, AM and FM) used for analog cellular phones and for radio and television broadcasts. In FDMA, a signal is encoded for transmission by modulating it with a carrier frequency. A signal is decoded by demodulation after being passed through a band pass filter to remove other carrier frequencies. Each base station 1502 has a set of frequencies-chosen to minimize interference between adjacent cells. (The area covered by a cell may be much smaller than the net range of the transmitters within it.)

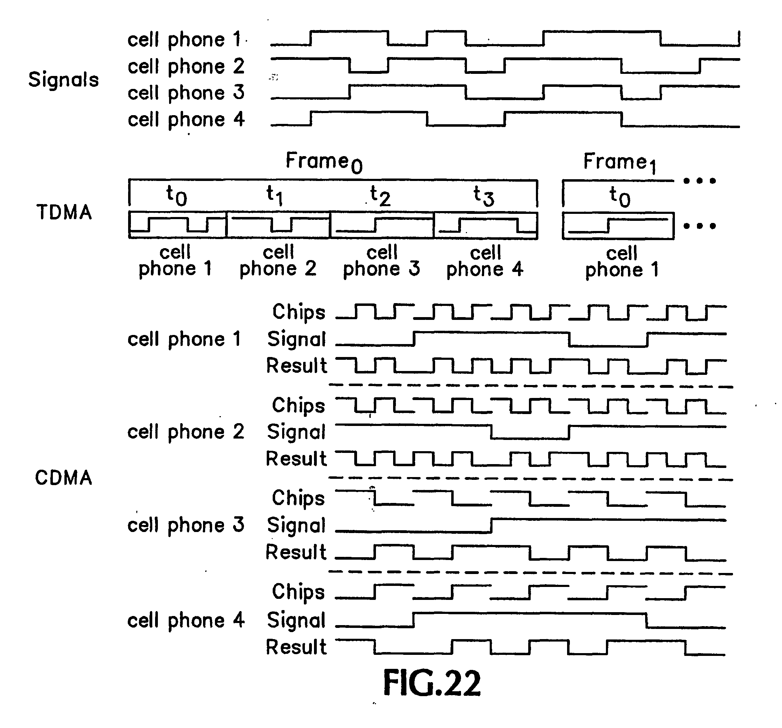

Fig. 22 shows TDMA and CDMA signals for four cell phones 1600. With reference to Fig. 22, for TDMA, each cell phone 1600 is assigned a time slice during which it can transmit. Cell phone 1 is assigned time slice t0, cell phone 2 is assigned time slice t1, cell phone 3 is assigned time slice t2, and cell phone 4 is assigned time slice t3. For CDMA, each cell phone 1600 is assigned a basis vector that it multiplies with its signal. The basis vectors assigned to cell phones 1 through 4 forms an orthogonal basis.

B. Handheld Web Browser

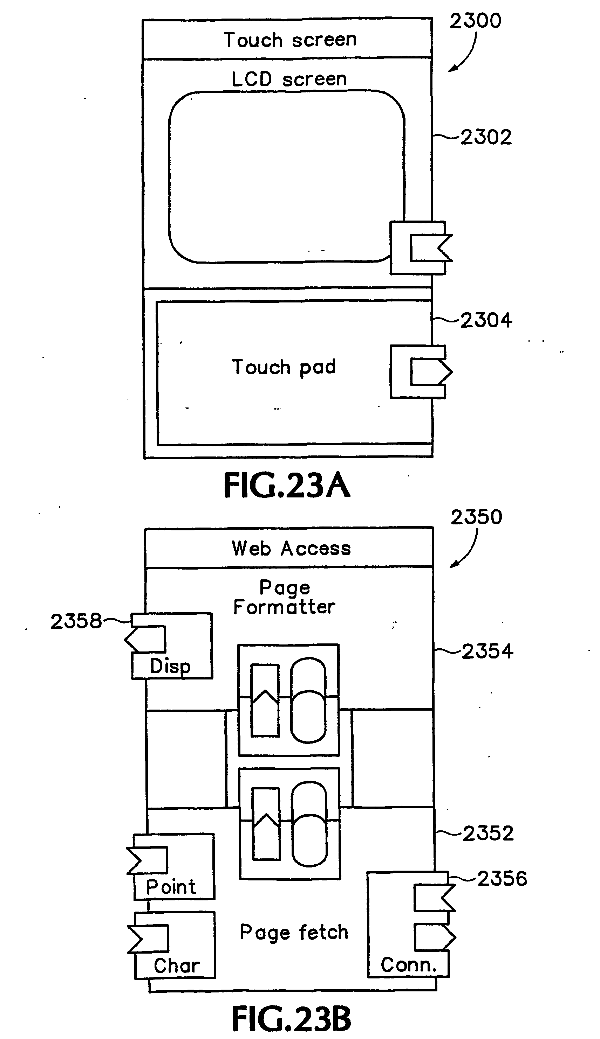

Fig. 23A is a LCD touch screen component 2300 for a Web browser GUI (shown in Fig. 24A) for a wireless device 1506. With reference to Fig. 23A, a LCD touch screen component 2300, has an LCD screen 2302 and a touch pad 2304.
Fig. 23B is a Web page access component 2350 for fetching and formatting web pages. With reference to Fig. 23B, web access component 2350 has a page fetch subcomponent 2352 and a page format subcomponent 2354. Web access component 2350 reads hypertext markup language (HTML) from a connection interface 2356, sends word placement requests to a display interface 2358, and sends image requests to the connection interface 2356. Web access component 2350 also has a character input interface to allow users to enter page requests directly and to fill out forms on pages that have forms.
Fig. 24A shows a completed handheld Web browser GUI 2400. With reference to Fig. 24A, handheld Web browser GUI 2400, has LCD touch screen component 2300, web access component 2350, and a pen stroke recognition component 2402 that translates pen strokes entered on touch pad 2304 into characters.
Fig. 24B shows the complete component view of a handheld Web browser 2450. With reference to Fig. 24B, handheld Web browser 2450 is formed by connecting handheld Web browser GUI 2400 to connection component 1610 of cell phone 1600 (described with reference to Fig. 16) with bi-directional data transfer coordinator 604 (described with reference to Fig. 6B). Handheld Web browser 2450 is an example of mobile unit 1506, and connects to the Internet through the cellular infrastructure described above. However, handheld Web browser 2450 has different access requirements than does cell phone 1600. For handheld Web browser 2450, reliability is more important than real-time delivery. Dropped packets usually require retransmission, so it is better to deliver a packet late than to drop it. Real-time issues primarily affect download time and are therefore secondary. Despite this, handheld Web browser 2450 must coordinate media access with cell phones 1600, and so it must use the same protocol as cell phones 1600 to connect to the network. For that reason, handheld Web browser 2450 can reuse connection component 1610 from cell phone 1600.

Debugging Techniques

In concept, debugging is a simple process. A designer locates the cause of undesired behavior in a system and fixes the cause. In practice, debugging-even of sequential software-remains difficult. Embedded systems are considerably more complicated to debug than sequential software, due to factors such as concurrence, distributed architectures, and real-time concerns. Issues taken for granted in sequential software, like a schedule that determines the order of all events (the program), are nonexistent in a typical distributed system. Locating and fixing bugs in these complex systems requires many factors, including an understanding of the thought processes underpinning the design. The two general classes of debugging techniques are event-based debugging and state-based debugging.

Events may be primitive, or they may be hierarchical clusters of other events. Primitive events are abstractions of individual local occurrences that might be important to a debugger. Primitive events for distributed systems include message send and receive events. Event-based debugging techniques operate by collecting event traces from individual system components and causally relating those event traces. These techniques require an ability to determine efficiently the causal ordering among any given pair of events. Determining the causal order in distributed systems can be difficult and costly.

State-based debugging techniques are less commonly used in debugging distributed systems. State-based debugging techniques typically operate by presenting designers with views or snapshots of a process state. Distributed systems are not tightly synchronized, and so these techniques traditionally involve only the state of individual processes. However, state-based debugging techniques can be applied more generally by relaxing the concept of an "instant in time" so that it can be effectively applied to asynchronous processes.

1. Event-Based Debugging

A. Event Order Determination and Observation

Determining the order in which events occur in a distributed system is subject to the limits of observation. An observation is an event record collected by an observer. An observer is an entity that watches the progress of an execution and records events but does not interfere with the system. To determine the order in which two events occur, an observer must measure them both against a common reference.

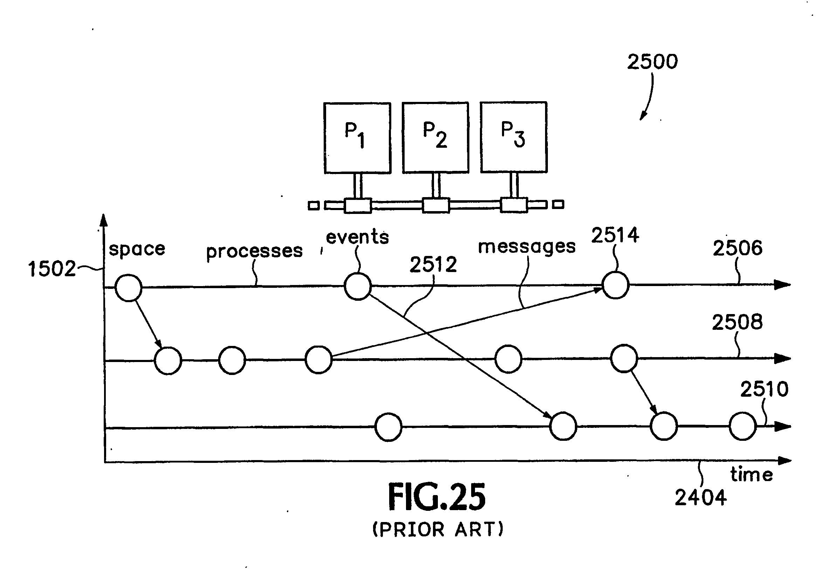

Fig. 25 shows a typical space/time diagram 2500, with space represented on a vertical axis 2502 and time represented on a horizontal axis 2504. With reference to Fig. 25, space/time diagram 2500 provides a starting point for discussing executions in distributed systems. Space/time diagram 2500 gives us a visual representation for discussing event ordering and for comparing various styles of observation. A set of horizontal world lines 2506, 2508, and 2510 each represent an entity that is stationary in space. The entities represented by horizontal world lines 2506, 2508, and 2510 are called processes and typically represent software processes in the subject system. The entities can also represent any entity that generates events in a sequential fashion. A diagonal world line 2512 is called a message and represents discrete communications that pass between two processes. A sphere 2514 represents an event. In subsequent figures vertical axis 2502 and horizontal axis 2504 are omitted from any space/time diagrams, unless vertical axis 2502 and horizontal axis 2504 provide additional clarity to a particular figure.

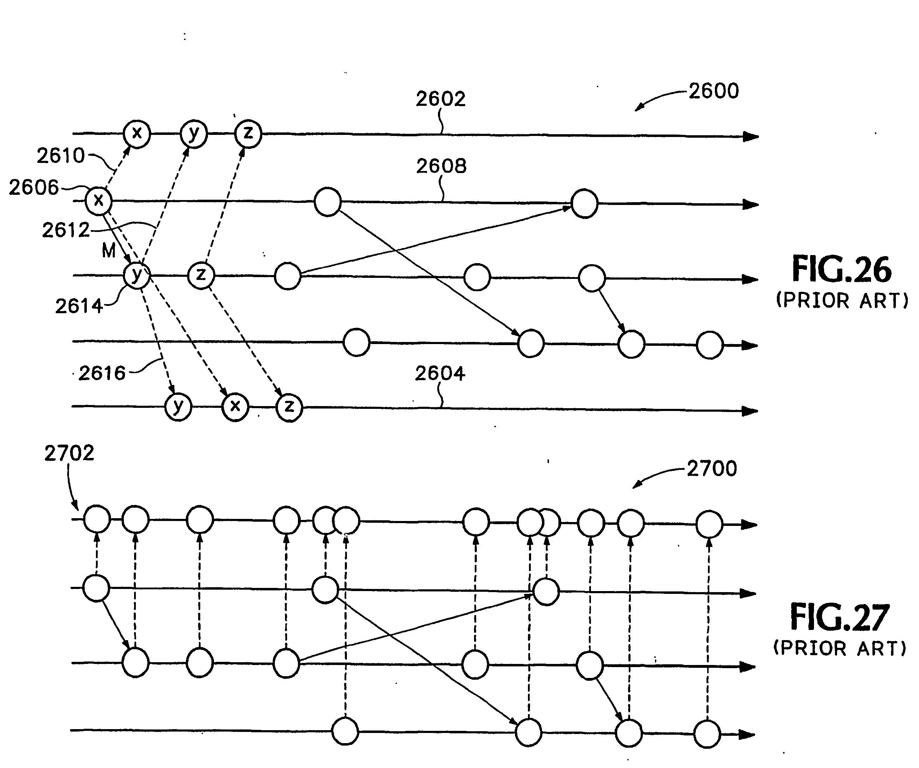

Fig. 26 shows a space/time diagram 2600 of two different observations of a single system execution, taken by a first observer 2602 and a second observer 2604. With reference to Fig. 26, first observer 2602 and second observer 2604 are entities that record event occurrence. First observer 2602 and second observer 2604 must each receive distinct notifications of each event that occurs and each must record the events in some total order. First observer 2602 and second observer 2604 are represented in space/time diagram 2600 as additional processes, or horizontal world lines. Each event recorded requires a signal from its respective process to both first observer 2602 and second observer 2604. The signals from an event x 2606 on a process 2608 to both first observer 2602 and second observer 2604 are embodied in messages 2610 and 2612, respectively. First observer 2602 records event x 2606 as preceding an event y 2614. However, second observer 2604 records event y 2614 as preceding event x 2606. Such effects may be caused by nonuniform latencies within the system.

However, the observations of first observer 2602 and second observer 2604 are not equally valid. A valid observation is typically an observation that preserves the order of events that depend on each other. Second observer 2604 records the receipt of a message 2616 before that message is transmitted. Thus the observation from second observer 2604 is not valid.

Fig. 27 shows a space/time diagram 2700 for a special, ideal observer, called the real-time observer (RTO) 2702. With reference to Fig. 27, RTO 2702 can view each event immediately as it occurs. Due to the limitations of physical clocks, and efficiency issues in employing them, it is usually not practical to implement RTO 2702. However, RTO 2702 represents an upper bound on precision in event-order determination.

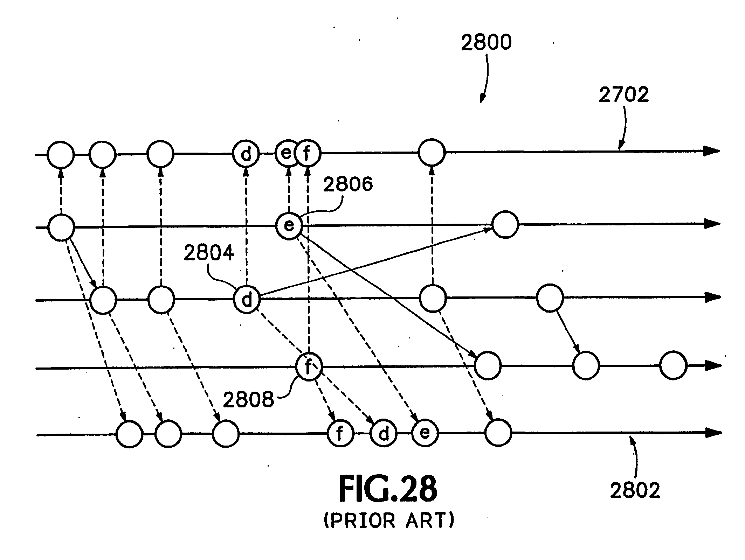

Fig. 28 shows a space/time graph 2800 showing two valid observations of a system taken by two separate observers: RTO 2702 and a third observer 2802. With reference to Fig. 28, there is nothing special about the ordering of the observation taken by RTO 2702. Events d 2804, e 2806, and f 2808 are all independent events in this execution. Therefore, the observation produced by RTO 2702 and the observation produced by third observer 2802 can each be used to reproduce equivalent executions of the system. Any observation in which event dependencies are preserved is typically equal in value to an observation by RTO 2702. However, real-time distributed systems may need additional processes to emulate timing constraints.

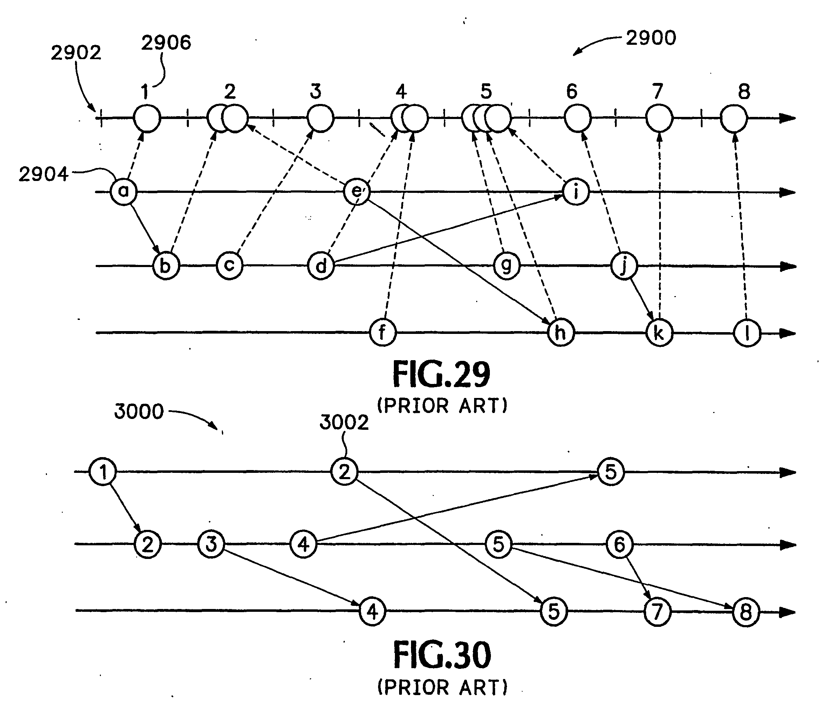

Fig. 29 is a space/time diagram 2900 of a methodological observer, called the discrete Lamport Observer (DLO) 2902, that records each event in a set of ordered bins. With reference to Fig. 29, DLO 2902 records an event 2904 in an ordered bin 2906 based on the following rule: each event is recorded in the leftmost bin that follows all events on which it depends. DLO 2902 views events discretely and does not need a clock. DLO 2902 does, however, require explicit knowledge of event dependency. To determine the bin in which each event must be placed, DLO 2902 needs to know the bins of the immediately preceding events. The observation produced by DLO 2902 is also referred to as a topological sort of the system execution's event graph.

Each event has at most two immediate predecessors. Therefore, DLO 2902 need only find the bins of at most two records before each placement. The transitive closure of the immediate predecessor relation forms a causal relation. The causal relation, $\leadsto \subseteq E \times E$, is the smallest transitive relation such that $e_i \to e_j \Rightarrow \leadsto e_j$.

A valid observation is an ordered record of events from a given execution, *i.e.,* $(R, \prec)$, where $e \in E \Rightarrow (\text{record } (e)) \in R$ and $\prec$ is an ordering operator. A valid observation has:

$$e_i; e_j \in E, e_i \leadsto e_j \Rightarrow \text{record } (e_i) \prec \text{record } (e_j)$$

The dual of the causal relation is a concurrence relation. The concurrence relation, $E \times E$, includes all pairs $(e_a, e_b)$ such that neither $e_a \leadsto e_b$ nor $e_b \leadsto e_a$. While the causal relation is transitive, the concurrence relation is not. The concurrence relation is symmetric, while the causal relation is not.

B. <u>Event-Order Tracking</u>

Fig. 30 depicts a space/time graph 3000 with each event having a label 3002. With reference to Fig. 30, DLO 2902 can accurately place event records in their proper bins-even if received out of order-as long as it knows the bins of the immediate predecessors. If we know the bins in which events are recorded, we can determine something about their causality. Fortunately, it is easy to label each event with the number of its intended bin. Labels 3002 are analogous to time and are typically called Lamport timestamps.

Lamport timestamps can be assigned as needed, provided the labels of an event's immediate predecessors are known. This information can be maintained with a local counter, called a Lamport clock (not shown), $t_{Pi}$, on each process, $P_i$. The clock's value is transmitted with each message $M_j$ as $t_{Mj}$. Although Lamport timestamps are consistent with causality, they do not characterize the causal relation.

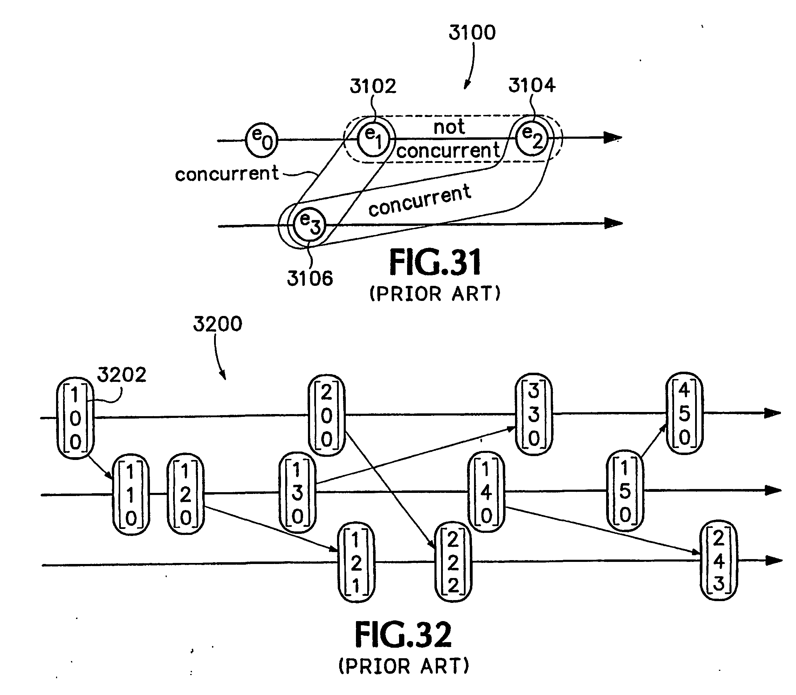

Fig. 31 is a space/time graph 3100 that demonstrates the inability of scalar timestamps to characterize causality between events. With reference to Fig. 31, space/time graph 3100 shows event $e_1$ 3102, event $e_2$ 3104, and event $e_3$ 3106. $e_1$ 3102 causes $e_2$ 3104, and also $e_1$ 3102 is concurrent with $e_3$ 3106, $e_2$ 3104 is concurrent with $e_3$ 3106 and it can be shown that $e_3$ 3106 appears, when scalar timestamps are used, concurrent with both $e_1$ 3102 and $e_2$ 3104. However, since $e_1$ 3102 $\leadsto e_2$ 3104 it is not possible for $e_3$ 3106 to be concurrent with both.

Event causality can be tracked completely using explicit event dependence graphs, with directed edges from each event to its immediate predecessors. Unfortunately, this method cannot store enough information with each record to determine whether two arbitrarily chosen events are causally related without traversing the dependence graph.

Other labeling techniques, such as vector timestamps, can characterize causality. The typical formulation of vector timestamps is based on the cardinality of event histories. A basis for vector timestamp is established based on the following definitions and theorems. An event history, $H(e_j)$, of an event $e_j$ is the set of all events, $e_i$, such that either $e_i \rightsquigarrow e_j$ or $e_1 \rightsquigarrow e_i = e_j$. The event history can be projected against specific processes. For a process $P_j$: the $P_j$ history projection of $H(e_i)$, $H_{P_j}(e_i)$, is the intersection of $H(e_i)$ and the set of events local to $P_j$. The event graph represented by a space/time diagram can be partitioned into equivalence classes, with one class for each process. The set of events local to $P_j$ is just the $P_j$ equivalence class.

Fig. 32 shows a space/time diagram 3200 with vector timestamped events. A vector timestamp 3202 is a vector label, $t_e$, assigned to each event, $e \in E$, such that the $i^{th}$ element represents $[H_{P_i}(e)]$. Given two events, $e_1$ and $e_2$, we can determine their causal ordering: if vector $t_{ei}$ has a smaller value for its own process's entry than the other, $t_{ej}$, has at that same position, then $ei \rightsquigarrow ej$. If both vectors have larger values for their own process entries, then $e_i \parallel e_j$. It is not possible for both events to have smaller values for their own entries because for events $e_a$ and $e_b$, $e_a \nrightarrow e_b$ implies $H_{Pea}(e_a) \supseteq H_{Pea}(e_b)$. It is not necessary to know the local processes of events to determine their causal order using vector timestamps.

Computing vector timestamps at runtime is similar to Lamport timestamp computation. Each process contains a vector clock with elements for every process in the system. Snapshots of this vector counter are used to label each event, and snapshots are transmitted with each message. The recipient of a message with a vector snapshot can update its own vector counter based on the snapshot. This technique places enough information with each message to determine message ordering. This technique is performed by comparing snapshots attached to each message. However, transmission of entire snapshots is usually not practical, especially if the system contains a large number of processes.

Vector clocks can however be maintained without transmitting complete snapshots. A transmitting process, $P_s$, can send a list that includes only those vector clock values that have changed since its last message. A recipient, $P_r$, then compares the change list to its current elements and updates those that are smaller. This requires each process to maintain several vectors: one for itself and one for each process to which it has sent messages. However, change lists do not contain enough information to independently track message order.

The expense of maintaining vector clocks can be a strong deterrent to employing them. Unfortunately, no technique with smaller labels can characterize causality. The problem results from concurrence, without which Lamport time would be sufficient. Concurrence can be tracked with concurrency maps, where each event keeps track of all events with which it is concurrent. Since the maps characterize concurrency, adding Lamport time lets them also characterize causality (the concurrency information disambiguates the scalar time). Unfortunately, concurrency maps can only be constructed after-the-fact, since doing so requires an examination of events from all processes.

## C. Space/Time Displays in Debugging Tools

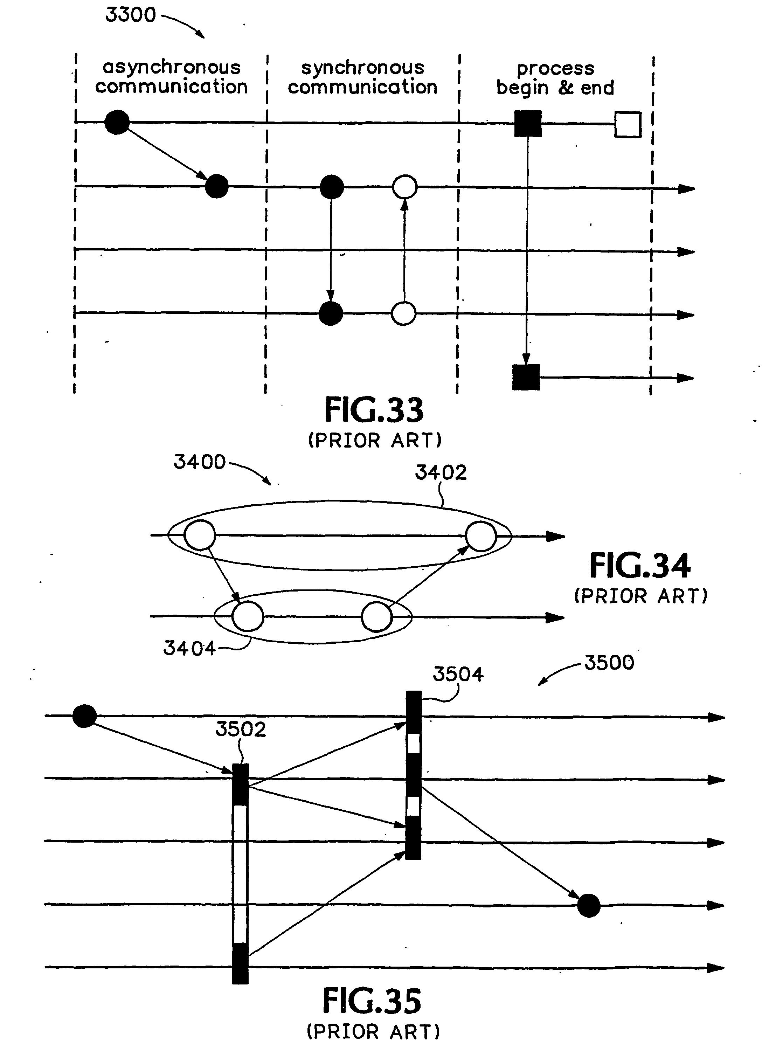

Fig. 33 shows a Partial-Order Event Tracer (POET) display 3300. The POET system supports several different languages and run-time environments, including Hermes, a high-level interpreted language for distributed systems, and Java. With reference to Fig. 33, POET display 3300 distinguishes among several types of events by shapes, shading, and alignment of corresponding message lines.

## 2. Abstraction in Event-Based Debugging

Fig. 34 is a space/time diagram 3400 having a first compound event 3402 and a second compound event 3404. With reference to Fig. 34, even though a pair of primitive events are either causally related or concurrent, first and second compound events 3402 and 3404, or any other pair of compound events, might be neither causally related nor concurrent. Abstraction is typically applied across two dimensions-events and processes-to aid in the task of debugging distributed software. Event abstraction represents sequences of events as single entities in order to more easily recognize the semantic meaning of the sequence of events.

## A. Event Filtering and Clustering

Event filtering and clustering are techniques used to hide events from a designer and thereby reduce clutter. Event filters exclude selected events from being tracked in event-based debugging techniques. In most cases, this filtering is implicit and cannot be modified without changing the source code because the source code being debugged is designed to report only certain events to the debugger. When deployed, the code will report all such events to the tool. This approach is employed in both DPD and POET, although some events may be filtered from the display at a later time. An event cluster, on the other hand, is a group of events represented as a single event. The placement of an event in a cluster is based on simple parameters, such as virtual time bounds and process groups.

Fig. 35 shows a POET display 3500 involving a first convex event cluster 3502 and a second convex event cluster 3504. POET uses a virtual-time-based clustering technique that represents convex event clusters as single abstract events. A convex event cluster is a set of event instances, C, such that for events

$$a, b, c \in E \text{ with } a, c \in C, a \rightsquigarrow b \wedge b \rightsquigarrow c \Rightarrow b \in C$$

Convex event clusters, unlike generic event clusters, cannot overlap.

B. Event Interpretation (Specific Background for Behavioral Abstraction)

The third technique for applying event abstraction is interpretation, also referred to as behavioral abstraction. Both terms describe techniques that use debugging tools to interpret the behavior represented by sequences of events and present results to a designer. Most approaches to behavioral abstraction let a designer describe sequences of events using expressions, and the tools recognize the sequence of events through a combination of customized finite automata followed by explicit checks.

1. Event Description Language (EDL)

One of the earliest behavioral abstraction technique was Bates's event description language (EDL), in which event streams are pattern-matched using shuffle automata. A match produces a new event that can, in turn, be part of another pattern. Essentially, abstract events are hierarchical and are built from the bottom up.

This approach can recognize event patterns that contain concurrent events. There are, however, several weaknesses in this approach. First, shuffle automata match events from a linear stream, which is subject to a strong observational bias. In addition, even if the stream constitutes a valid observation, interleaving may cause false intermediates between an event and its immediate successor. Finally, concurrent events appear to occur in some specific order. These weaknesses can be partially compensated for however the compensation process makes error detection difficult, difficulty in recognizing event order, or a lack of causality and concurrence checks.

2. Chain Expressions

Chain expressions are an alternate way to describe distributed behavior patterns that have both causality and concurrence. These behavioral descriptions are based on chains of events (abstract sequences not bound to processes), p-chains (chains bound to processes), and pt-chains (composed p-chains). A recognition algorithm for chain expressions has two functions. First, the algorithm recognizes the appropriate event sequence from a linear stream, using a nondeterminate finite automaton (NFA). Second, the algorithm checks the relationships between specific events. Unfortunately, the fact that sequences are picked in order from a linear stream before relationships are checked can cause certain matches to be missed.

3. Distributed Abstraction

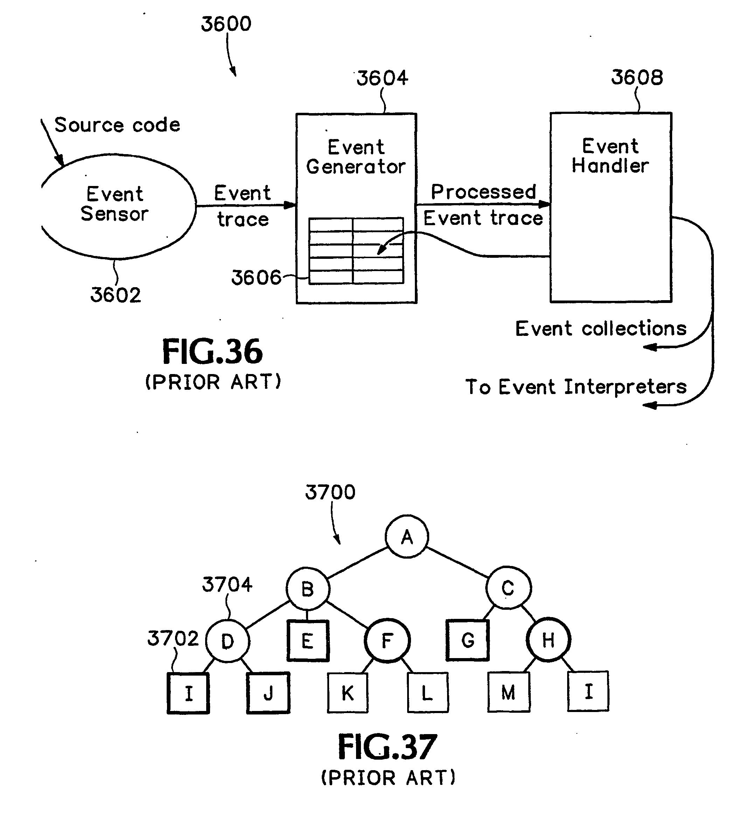

Fig. 36 show a Basis for distributed Event Environments (BEE) (a distributed, hierarchical, event collection system) abstraction facility 3600 for a single client. With reference to Fig. 36, event interpretation is performed at several levels. The first is an event sensor 3602, inserted into the source of the program under test and invoked whenever a primitive event occurs during execution. The next level is an event generator 3604, where information-including timestamps and process identifiers-is attached to each event. Event generator 3604 uses an event table 3606 to determine whether events should be passed to an event handler 3608 or simply dropped. Event handler 3608 manages event table 3606 within event generator 3604. Event handler 3608 filters and collects events and routes them to appropriate event interpreters (not shown). Event interpreters (not shown) gather events from a number of clients (not shown) and aggregate them for presentation to a programmer. Clients and their related event interpreters are placed together in groups managed by an event manager (not shown). A weakness of this technique is that it does not specifically track causality. Instead, this technique relies on the real-timestamps attached to specific primitive or abstract events. However, as discussed above these timestamps are not able to characterize causality.

C. Process Clustering

Most distributed computing environments feature flat process structures, with few formally stated relationships among processes. Automatic process clustering tools can partially reverse-engineer a hierarchical structure to help remove spurious information from a debugger's view. Intuitively, a good cluster hierarchy should reveal, at the top level, high-level system behavior, and the resolution should improve proportionally with the number of processes exposed.

A poor cluster hierarchy would show very little at the top level and would require a programmer to descend several hierarchical levels before getting even a rough idea about system behavior. Process clustering tools attempt to identify common interaction patterns-such as client-server, master-slave, complex server, layered system, and so forth. When these patterns are identified, the participants are clustered together. Clusters can then serve as participants in interaction patterns to be further clustered. In the past these cluster hierarchies are depicted strictly as trees, as shown in Fig. 37, which depicts a hierarchical construction of process clusters 3700. With reference to Fig. 37, a square node 3702 represents a process (not shown) and a round node 3704 represents a process cluster (not shown).

Programmers can choose a debugging focus, in which they specify the aspects and detail levels they want to use to observe an execution. With reference to Fig. 37, a representative debugging focus that includes nodes I, J, E, F, G, and H is shown. One drawback of this approach is that when a parent cluster is in focus, none of its children can be. For example, if we wanted to look at process K in detail, we would also need to expose at least as much detail for processes E and L and process cluster D.

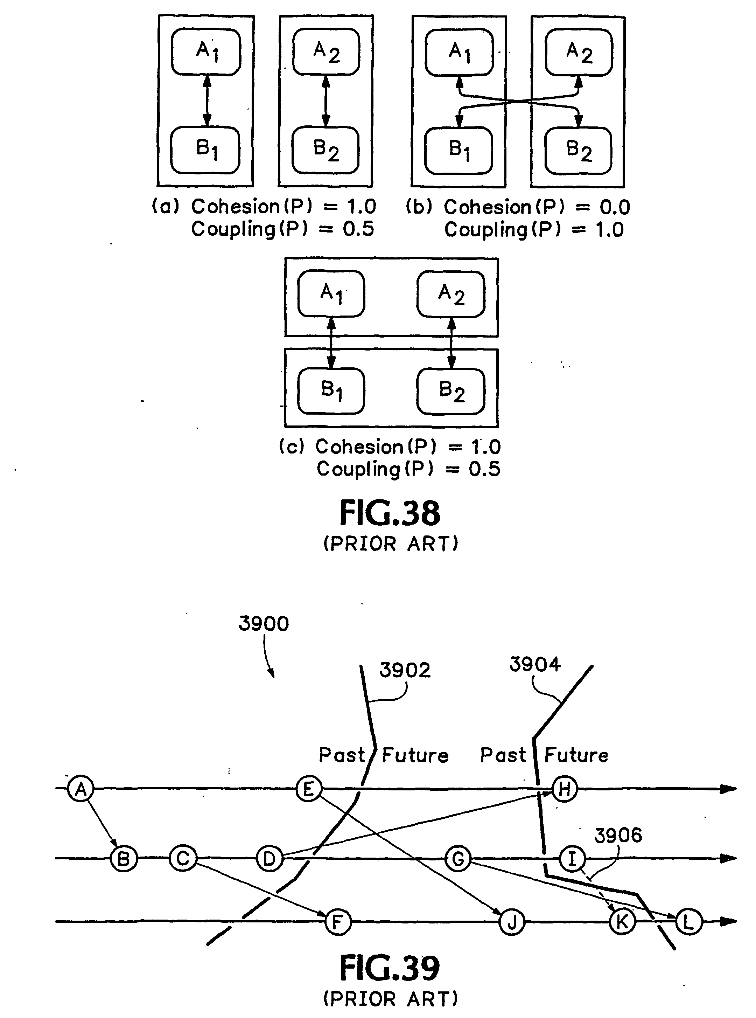

Each process usually participates in many types of interactions with other processes. Therefore, the abstraction tools must heuristically decide between several options. These decisions have a substantial impact on the quality of a cluster hierarchy. Prior art systems have typically evaluated the quality of a clustering tool by measuring the cohesion, which though expressed quantitatively is actually a qualitative measurement (the higher the better) within a cluster and the coupling, a qualitative measure of the information clusters must know about each other (the higher the worse), between clusters. The quality of a cluster is quantified as its Coupling minus its Cohesion. In many cases, these metrics match many of the characteristics that intuitively differentiate good and poor clusters, as shown in Figs. 38A, B, and C. With reference to Figs. 38A and C, Cohesion is high where clusters correspond to heavy communication and where clusters correspond to processes instantiated from the same source code. Coupling is shown to be low in each of the above cases. With reference to Fig. 38B, Coupling is high when clusters do not correspond to heavily communicating processes or to instances of the same source code. It is not clear, however, that the cluster in Fig. 38C should be assigned the same quality value as the cluster in Fig. 38A. Using these metrics, Kunz achieved qualities of between :15 and :31 for his clustering techniques. However, it is hard to tell what this means in terms of cluster usefulness.

3. State-Based Debugging

State-based debugging techniques focus on the state of the system and the state changes caused by events, rather than on events themselves. The familiar source-level debugger for sequential program debugging is state-based. This source-level debugger lets designers set breakpoints in the execution of a program, enabling them to investigate the state left by the execution to that point. This source-level debugger also lets programmers step through a program's execution and view changes in state caused by each step. However, concurrent systems have no unique meaning for an instant in execution time.

A. Consistent Cuts and Global State

In distributed event-based debugging, the concept of causality is typically of such importance that little of value can be discussed without a firm understanding of causality and its implications. In distributed state-based debugging, the concept of a global instant in time is equally important. Just as determining the real-time order of events is not practical or even particularly useful, finding accurate real-time instants makes little sense. Instead, a global instant is represented by a consistent cut. A consistent cut is a cut of an event dependency graph representing an execution that (a) intersects each process exactly once and (b) points all dependencies crossing the cut in the same direction. Like real-time instants, consistent cuts have both a past and a future. These are the subgraphs on each side of the cut.

Fig. 39 shows that consistent cuts can be represented as a jagged line across the space/time diagram that meets the above requirements. With reference to Fig. 39, a space/time graph 3900 is shown having a first cut 3902 and a second cut 3904. All events to the left of either first cut 3902 or second cut 3904 are in the past of each cut, and all events to the right are in the future of each cut, respectively. First cut 3902 is a consistent cut because no message travels from the future to the past. Second cut 3904, however, is not consistent because a message 3906 travels from the future to the past.

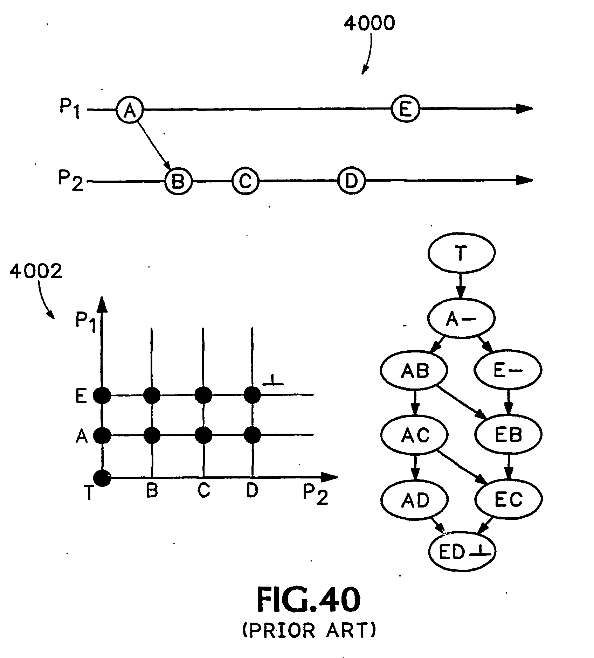

Figs. 40A, B, and C show that a distributed execution shown in a space/time diagram 4000 can be represented by a lattice of consistent cuts 4002, in which T is the start of the execution and ⊥ is system termination. With reference to Figs. 40A, B, and C, lattice of consistent cuts 4002 represents the global statespace traversed by a single execution. Since lattice of consistent cuts 4002's size is on the order of $|E|^{|P|}$, it, unlike space/time diagrams, is never actually constructed. In the remainder of this chapter, to describe properties of consistent cut lattices, the symbol $\xrightarrow{\ 1\ }$ relates cuts such that one immediately precedes the other and $\rightsquigarrow$ relates cuts between which there is a path.

B. Single Stepping in a Distributed Environment

Controlled stepping, or single-stepping, through regions of an execution can help with an analysis of system behavior. The programmer can examine changes in state at the completion of each step to get a better understanding of system control flow. Coherent single-stepping for a distributed system requires steps to align with a path through a normal execution's consistent cut lattice.

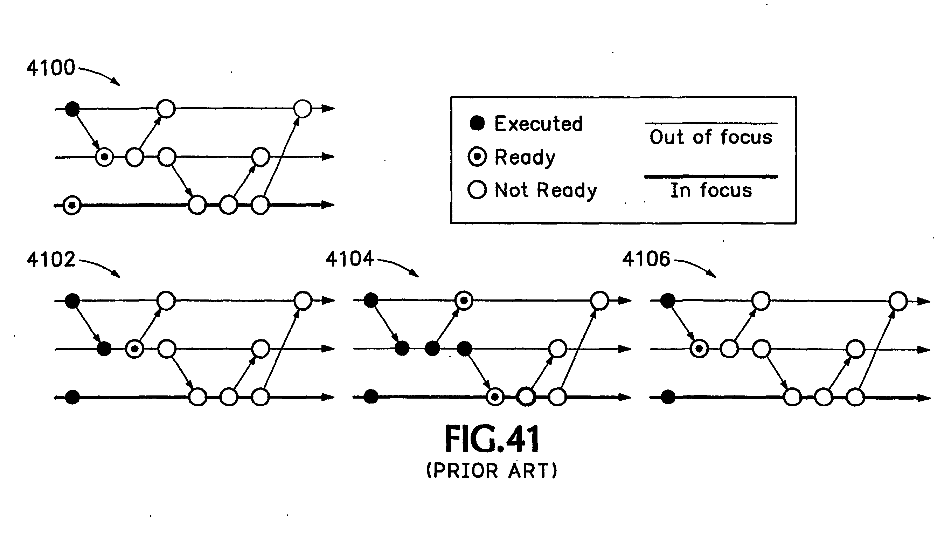

DPD works with standard single-process debuggers (called client debuggers), such as DBX, GDB, etc. Other systems give a simple procedure for single-stepping using a post-mortem traversal of a consistent cut lattice. At each point in the step process, there are two disjoint sets of events: the past set, or events that have already been encountered by the stepping tool, and the future set, or those that have yet to be encountered. To allow more types of steps, POET's support for single-stepping uses three disjoint sets: executed, ready, and nonready. Using these sets, it is possible to perform three different types of steps: global-step, step-over, and step-in. Global-step and step-over may progress between two consistent cuts, even if there are several intermediate consistent cuts between the step cuts. Figs. 41A, B, C, and D show a space/time diagram before a step 4100 and a resulting space/time diagram after performing a global-step 4102, a step-over 4104, and a step-in 4106.

C. Runtime Consistent Cut Algorithms

It is occasionally necessary to capture consistent cuts at runtime. To do so, each process performs some type of cut action (*e.g.*, state saving). This can be done with barrier synchronization, which erects a temporal barrier that no process can pass until all processes arrive. Any cut taken immediately before, or immediately after, the barrier is consistent. However, with barrier synchronization, some processes may have a long wait before the final process arrives.

A more proactive technique is to use a process called the cut initiator to send perform-cut messages to all other system processes. Upon receiving a perform-cut message, a process performs its cut action, sends a cut-finished message to the initiator, and then suspends itself. After the cut initiator receives cut-finished messages from all processes, it sends each of them a message to resume computation. This algorithm has the undesirable characteristic of stopping the system for the duration of the cut. The following algorithms differ in that they allow some processing to continue.

1. Chandy-Lamport Algorithm

The Chandy-Lamport algorithm does not require the system to be stopped. Once again, the cut starts when a cut initiator sends perform-cut messages to all of the processes. When a process receives a perform-cut message, it stops all work, performs its cut action, and then sends a mark on each of its outgoing channels; a mark is a special message that tells its recipient to perform a cut action before reading the next message from the channel. When all marks have been sent, the process is free to continue computation. If the recipient has already performed the cut action when it receives a mark, it can continue working as normal.

2. Color-Based Algorithms

Color based algorithms allow a variant of the Chandry-Lamport algorithm to be used on channels that are non-FIFO (First In First Out). The first is called the two-color, or red-white, algorithm. With this algorithm, information about the cut state is transferred with each message. Each process in the system has a color. Processes not currently involved in a consistent cut are white, and all messages transmitted are given a white tag. Again, there is a cut initiator that sends perform-cut messages to all system processes. When a process receives this request, it halts, performs the cut action, and changes its color to red. From this point on, all messages transmitted are tagged with red to inform the recipients that a cut has occurred.

A three color algorithm addressed a disadvantage of the two color algorithm, The three-color algorithm resembles the two-color algorithm in that every process changes color after performing a cut. However, the three color algorithm differs in that every change in color represents a cut. For colors zero through two, if a process with the color $c$ receives a message with the color $(c - 1)$ mod 3, it registers this as a message-in-flight (see below). On the other hand, if it receives a message with the color $(c + 1)$ mod 3, it must perform its cut action and switch color to $(c + 1)$ mod 3 before receiving the message. Of course, this can now be generalized to n-color algorithms, but three colors are usually sufficient.

D. State Recovery-Rollback and Replay

Since distributed executions tend to be nondeterministic, it is often difficult to reproduce bugs that occur during individual executions. To do so, most distributed debuggers contain a rollback facility that returns the system to a previous state. For this to be feasible, all processes in the system must occasionally save their state. This is called checkpointing the system. Checkpoints do not have to save the entire state of the system. It is sufficient to save only the changes since the last checkpoint. However, such incremental checkpointing can prolong recovery.

Processes must sometimes be returned to states that were not specifically saved. In this case, the debugger must do additional work to advance the system to the desired point. This is called replay and is performed using event trace information to guide an execution of the system. In replay, the debugger chooses an enabled process (*i.e.*, one whose next event has no pending causal requirements) and executes it, using the event trace to determine where the process needs to block for a message that may have arrived asynchronously in the original execution. When the process blocks, the debugger chooses the next enabled process and continues from there. In this way, a replay is causally identical to the original execution.

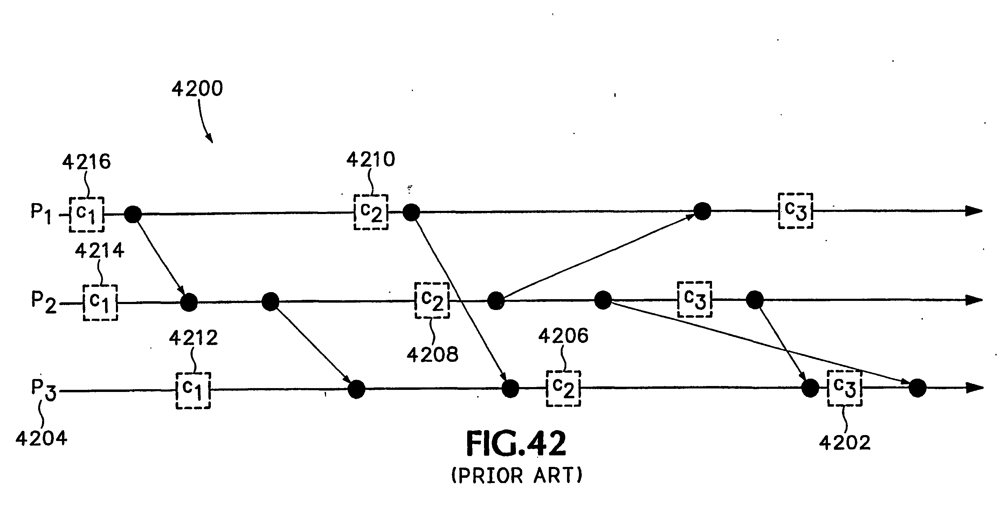

Checkpoints must be used in a way that prevents a domino effect. The domino effect occurs when rollbacks force processes to restore more than one state: Domino effects can roll the system back to the starting point. Fig. 42 shows a space time diagram 4200 for a system that is subject to the domino effect during rollback. With reference to Fig. 42, if the system requests a rollback to checkpoint $c_3$ 4202 of process $P_3$ 4204, all processes in the system must roll back to $c_1$ (*i.e.,* roll back to $P_3.c_2$ 4206 requires a roll back to $P_2.c_2$ 4208, which requires a roll back to $P_1.c_2$ 4210, which requires a roll back to $P_3.c_1$ 4212, which requires a roll back to $P_2.c_1$ 4214, which requires a final roll back to $P_1.c_1$ 4216). The problem is caused by causal overlaps between message transfers and checkpoints. Performing checkpoints only at consistent cuts avoids a domino effect.

E. Global State Predicates

The ability to detect the truth value of predicates on global state yields much leverage when debugging distributed systems. This technique lets programmers raise flags when global assertions fail, set global breakpoints, and monitor interesting aspects of an execution. Global predicates are those whose truth value depends on the state maintained by several processes. They are typically denoted with the symbol $\Phi$. Some examples include ($\Sigma_i\, c_i > 20$) and ($c_1 < 20 \wedge c_2\, 5$), where $c_i$ is some variable in process $P_i$ that stores positive integers. In the worst case (such as when ($\Sigma_i\, c_i > 20$) is false for an entire execution), it may be necessary to get the value of all such variables in all consistent cuts. In the following discussion, we use the notation $C_a\,| = \Phi$ to indicate that $\Phi$ is true in consistent cut $C_a$.

At this point, it is useful to introduce branching time temporal logic. Branching time temporal logic is predicate logic with temporal quantifiers, P, F, G, H, A, and E. $P\Phi$ is true in the present if $\Phi$ was true at some point in the past; $F\Phi$ is true in the present if $\Phi$ will be true at some point in the future; $G\Phi$ is true in the present if $\Phi$ will be true at every moment in the future; and $H\Phi$ is true in the present if $\Phi$ was true at every moment of the past. Notice that $G\Phi$ is the same as $\neg F\neg\Phi$, and $H\Phi$ is the same as $\neg P\neg\Phi$.

Since global time passage in distributed systems is marked by a partially ordered consistent cut lattice rather than by a totally ordered stream, we need the quantifiers *A,* which precedes a predicate that is true on all paths, and *E,* which precedes a predicate that is true on at least one path. So, *AF*$\Phi$ is true in the consistent cut representing the present if $\Phi$ is true at least once on all paths in the lattice leaving this cut. *EP*$\Phi$ is true in the consistent cut representing the present if $\Phi$ is true on at least one path leading to this cut.

A monotonic global predicate is a predicate $\Phi$ such that $C_a\,|= \Phi \Rightarrow C_a\,|= AG\Phi$. A monotonic global predicate is one that remains true after becoming true. An unstable global predicate, on the other hand, is a predicate $\Phi$ such that $C_a\,|= \Phi \Rightarrow C_a\,|= EG\neg\Phi$. An unstable global predicate is one that may become false after becoming true.

1. Detecting Monotonic Global Predicates

Monotonic predicates can be detected any time after becoming true. One algorithm is to occasionally take consistent cuts and evaluate the predicate at each. In fact, it is not necessary to use consistent cuts, since any transverse cut whose future is a subset of the future of the consistent cut in which the predicate first became true will also show the predicate true.

2. Detecting Unstable Global Predicates

Detecting arbitrary unstable global predicates can take at worst $|E|^{|P|}$ time, where $|E|^{|P|}$ is the size of an execution's consistent cut lattice, [E] is the number of events in the execution, and [P] is the number of processes. This is so, because it may be necessary to test for the predicate in every possible consistent cut. However, there are a few special circumstances that allow |E| time algorithms.

Some unstable global predicates are true on only a few paths through the consistent cut lattice, while others are true on all paths. In Cooper, R., and Marzullo, K., "Consistent Detection of Global Predicates," In *ACM/ONR Workshop on Parallel & Distributed Debugging* (1991), Cooper and Marzullo describe predicate qualifiers definitely Φ for predicates that are true on all paths (*i.e.,* ⊤ | = *A F* Φ) and possibly Φ for those that are true on at least one path (*i.e.,* ⊤ | => *E F* Φ).

The detection of possibly Φ for weak conjunctive predicates, or global predicates that can be expressed as conjunctions of local predicates, is $\varphi$ (|E|). The algorithm for this is to walk a path through the consistent cut lattice that aligns with a single process, $P_t$, until either (1) the process's component of Φ is true or (2) there is no way to proceed without diverging from $P_t$. In either case, the target process is switched and the walk continued. This algorithm continues until it reaches a state in which all components of the predicate are true or until it reaches ⊥. In this way, if there are any consistent cuts where all parts of the predicate simultaneously hold, the algorithm will encounter at least one.

Detection of possibly Φ for weak disjunctive predicates, or global predicates that can be expressed as disjunctions of local predicates, is also $\varphi$ (|*E*|); it is the same algorithm as above, except it halts at the first node where *any* component is true. However, weak conjunctive and disjunctive predicates constitute only a small portion of the types of predicates that could be useful in debugging distributed systems.

4. Conclusions

As distributed systems increase in size and complexity, the sheer volume of events generated during an execution grows to a point where it is exceedingly difficult for designers to correctly identify aspects of the execution that may be relevant in locating a bug. For distributed system debugging techniques to scale to larger and faster systems, behavioral abstraction will typically become a necessity to help designers identify and interpret complicated behavioral sequences in a system execution. Finally, embedded systems must execute in a separate environment from the one in which they were designed and embedded systems may also run for long periods of time without clear stopping points. Debugging them requires probes to report debugging information to a designer during the execution. These probes inevitably alter system behavior, which can mask existing bugs or create new bugs that are not present in the uninstrumented system. While it is not possible to completely avoid these probe effects, they can be minimized through careful placement, or masked through permanent placement.

**Static Control Graphs**

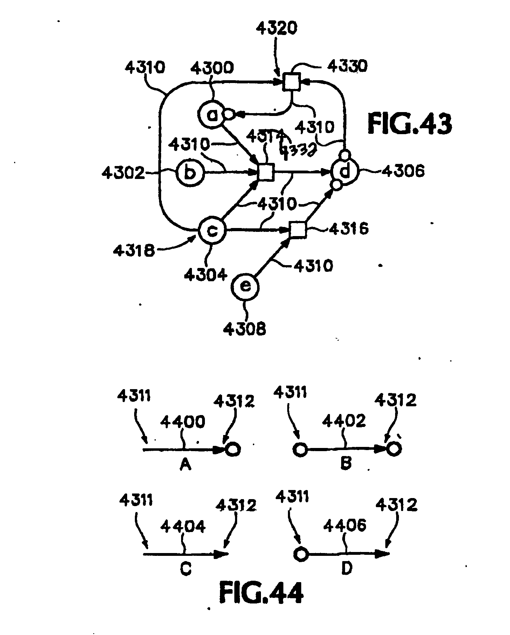

A static control graph (SCG) is a graph-theoretic representation of all pure control constraints. Fig. 43 shows a simple SCG. It is a bi-partite digraph, having two types of nodes: conjunctive nodes 4330 and 4332, which, as the name implies, produce results only when all incident edges 4310 are satisfied, and disjunctive nodes 4300, 4302, 4304, 4306, and 4308, which produce results if any incident edge 4310 is satisfied. Disjunctive nodes 4304, 4306, and 4308 correspond to modes 102 in components 100 and coordinators 410 (as previously shown in Fig. 1 and Fig. 4) throughout the system. An SCG for a complete system simultaneously represents all control constraints.

An SCG is a triple, G = (C, D, E), in which:

- C is a set of conjunctive nodes.

- D is a set of disjunctive nodes.

- $E \subseteq [\{T_f, T_t\} \times \{H_f ; Ht\} \times ((C \times D) \cup (D \times C))]$ is a set of directed, labeled edges. Edges are sensitive to either a false value or a true value at their tail 4311 ($T_f$ or $T_t$) and enforce either a false value or a true value at their head 4312 ($H_f$ or $H_t$). These are represented visually by a bubble at the appropriate end for a false value or the lack of a bubble for a true value.

An edge 4310 in an SCG can be either enabled or disabled; it produces the value true or the value false. Fig. 44 illustrates a graphic notation for edge labels. Edges 4400 and 4402 marked with a bubble on head 4312, as in Fig. 44A and Fig. 44B, assert the value false when activated. When there is no mark on head 4312, as in Fig. 44C and Fig. 44D, an edge 4404 and 4406 asserts the value true when activated. A bubble on tail 4311, as in Fig. 44B and Fig. 44D, indicates that edge 4406 and 4402 is sensitive to false on the node it exits. The lack of such bubbles, as in Fig. 44A and Fig. 44C, indicates that edge 4404 and 4400 is sensitive to true.

Referring back to Fig. 43, the figure shows a simple SCG in which a node d 4306 must be active whenever a conjunction (a ∧ b ∧ c) 4332 is active and inactive whenever a node e 4308 is active. Although this looks similar to a Boolean network, it differs because the SCG edges represent implication, not connection. This is illustrated in Fig.

45, which shows a Boolean network OR node 4500; when all inputs and outputs are negated, it is equivalent to an AND node 4502 (by DeMorgan's). A disjunctive SCG node with all inputs and outputs negated 4504 is equivalent to a disjunctive node with no inputs and outputs negated 4506.

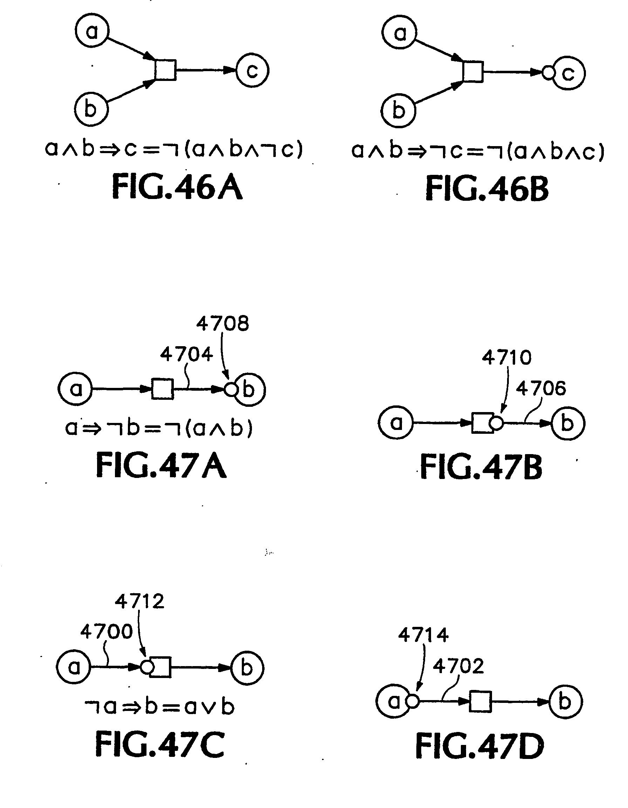

Each SCG has a Boolean characteristic function. This is a Boolean 164 function that is true for each configuration in which no constraints are violated and that is false for configurations with violated constraints. Fig. 46 shows two SCGs along with their reduced characteristic functions, in which the functions (*i.e.*, $a \wedge b \Rightarrow \neg c$) are reduced to functions using only basic operators, (*i.e.*, $\neg(a \wedge b \wedge c)$). Fig. 46A shows conjunction without negation, whereas Fig. 46B shows conjunction with negation. Characteristic functions for SCGs with several conjunctive nodes are the conjunction of all constraints and, as such, may not be satisfiable.

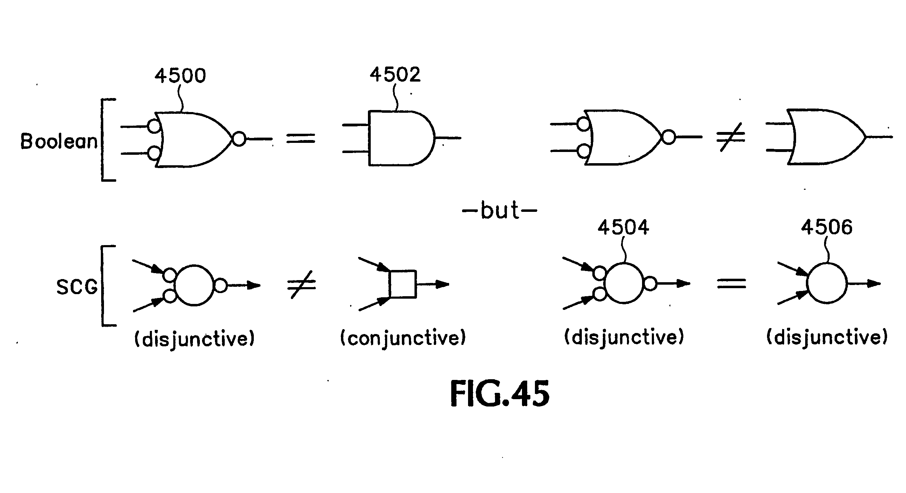

Fig. 47 shows the impact of edge semantics on SCG. Edges that are incident upon conjunctive nodes (*i.e.*, edges that take the form (d, c) for $d \in D$, $c \in C$) are called sensing edges 4700 and 4702; edges incident upon disjunctive nodes (*i.e.*, edges that take the form (c, d)) are called enforcing edges 4704 and 4706. All edges and nodes are labeled with their respective source object (*i.e.,* a mode/control port combination for a disjunctive node, and a constraint for a conjunctive node). When a bubble is placed at the head of an enforcing edge 4708, as in Fig. 47A, it has different semantics than when the bubble is placed at the tail of an enforcing edge 4710, as in Fig. 45B; at the head of a sensing edge 4712, as in Fig. 45C; or at the tail of a sensing edge 4714, as in Fig. 45D. However, the latter three have identical semantics.

Activation influences for conjunctive nodes are always apparent in an SCG: the disjunctive nodes that appear at the tail side of incident edges. As a result, conjunctive edges need never be labeled. Disjunctive nodes are frequently mapped to modes in the system; hence, they may have hidden activation influences. In these circumstances, node labels must be applied to indicate the modes to which they are mapped. It may not always be possible for all edges to assert their value. Edges that are prevented from doing so are said to be violated.

1. Instability and Dynamic Properties

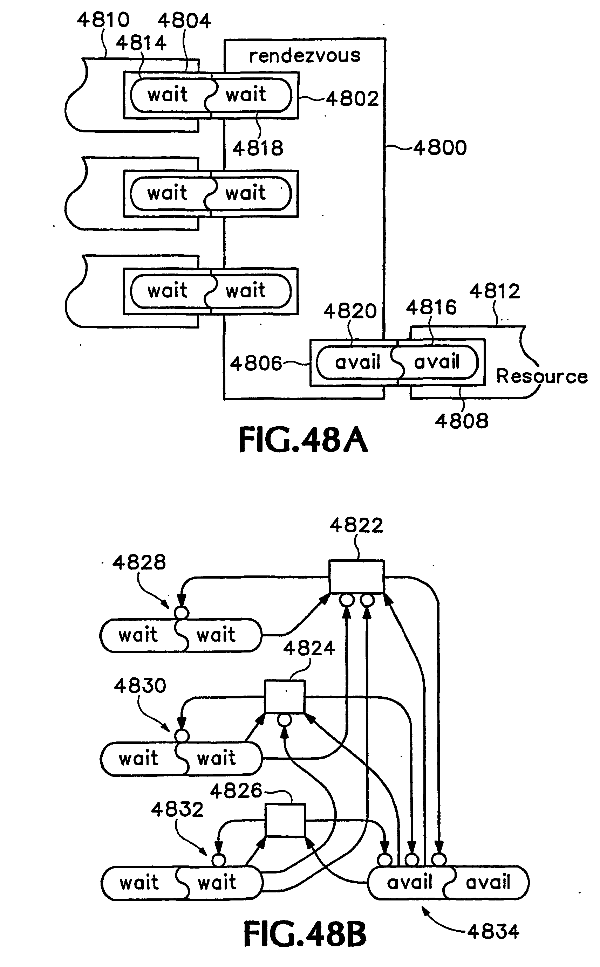

Although SCGs embody static relationships between modes, through unstable configurations (*viz*., configurations that are temporarily invalid and must hence attempt resolution), they can also model some dynamic properties. Recall the behavior of a rendezvous coordinator 4800; it contains interfaces 4802, 4804, 4806, and 4808 for two types of components: resource users 4810 and resources 4812. Rendezvous coordinator 4800 lets resource users 4810 enter a waiting mode 4814, and resources 4812 enter an available mode 4816. When possible, rendezvous coordinator 4800 releases a waiting component 4818 and an available component 4820 together. This can be modeled by the SCG shown in Fig. 48B. The SCG has three conjunctive nodes 4822, 4824, and 4826 that each sense (1) whether a particular wait node 4828, 4830, or 4832 and an avail node 4834 are simultaneously active and (2) whether there are any active wait nodes 4828, 4830, and 4832 with precedence. When one of conjunctive nodes 4822, 4824, or 4826 is satisfied, it releases its respective wait node 4828, 4830, or 4832 and avail node 4834-causing conjunctive node 4822, 4824, or 4826 to cease being satisfied.

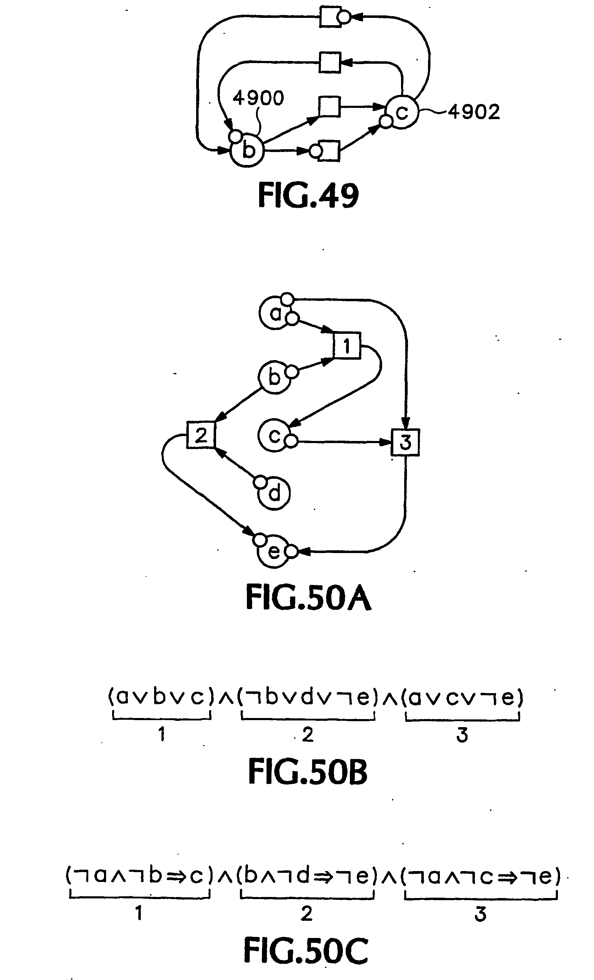

An important property of an SCG is the any stable state property (ASSP). ASSP of SCGs states that there is at least one stable configuration. An SCG is said to have this property if it has at least one configuration in which all constraints are simultaneously satisfied. A graph without the ASSP is shown in Fig. 49. Trying to enforce all constraints results in an inactive node b 4900 forcing a node c 4902 to be inactive, which in turn forces node b 4900 to be active, which forces node c 4902 to be active-forcing node b 4900 to be inactive and restarting the cycle.

It can be shown that finding the ASSP is NP-Complete, meaning that there are probably no general, efficient algorithms for determining whether an SCG has this property. A 3-SAT problem, which is a well-known NP-Complete problem, commonly used to prove by polynomial time reduction that other computational problems are NP-Hard, can be reduced to ASSP in polynomial time. Fig. 50A shows the SCG for a 3-SAT problem. Fig. 50B shows the 3-SAT problem. Fig. 50C shows the representative characteristic functions for the 3-SAT problem.

Two enforcing edges can conflict and possibly cause race conditions in certain configurations. To avert this, edge labels also contain a priority to indicate which will be enforced if there is a conflict. Usually, these priorities are supplied by the coordinators that define the constraint and hence the enforcing edge. Although finding a complete constraint system solution is NP-Hard, it is possible to present a solution consistent with a designer's expectations in less than exponential time.

2. Petri-net Similarities

SCGs are similar to Petri-nets in several significant ways. Petri-nets are also bi-partite digraphs with the node types - transitions and places. A system state is represented by a marking of places, where each place can be either marked by a token or not marked at all. A transition fires if there is a token on each of the places on the opposite side of incoming edges. When a transition fires, it consumes all enabling tokens and places tokens on each of the places on the opposite side of outgoing edges.

The main similarity between Petri-nets and SCGs is the conjunctive and disjunctive behaviors of transitions and places. The way in which a place in a Petri-net becomes marked is similar to the way in which a disjunctive node in an SCG is changed-namely, incident edges manipulate the state directly. The main difference is that, with Petri-nets, the only way a place can become unmarked is if a transition on an outgoing edge removes the token. With SCGs, the only conjunctive nodes that can cause changes in state are those on the incoming edges.

3. Construction of SCGs

SCG construction uses Boolean constraints from a standard product-of- sums. A standard form Boolean constraint is a tuple (I, O, R, A), in which:

- I is a set of input literals.

- O is a set of output literals.

- R is a set of disjunctions on input values, *i.e.,* $R \subseteq 2^I$.

- A is a set of output literals matched with conjunctions on values in R and values in $C \subseteq O \times 2^R$.

Algorithm 1 shows how an SCG is constructed from a set of constraints in a system.

---

**Algorithm 1** – SCG construction

**Require:** $M$, a set of modes, and $S$, a set of boolean constraints in standard form.

    create $G = (C, D, E)$, a new control graph
    **for all** $m \in M$ **do**
        add **new** $d_m$ to D // add a disjunctive node
    **end for**
    **for all** $s \in S$ **do**
        **for all** $a \in s.A$ **do**
            add **new** $c_{sa}$ to $C$ // add a conjunctive node
            **for all** $o \in a.O$ **do**
                add **new** edge $(c_{sa}, o)$ to E
            **end for**
            **for all** $i \in s.I$ **do**
                add **new** edge $(i, c_{sa})$ to E
            **end for**
        **end for**
    **end for**

---

Algorithm 1 takes a set of modes and constraints, and for each mode generates a new disjunctive node, and for each constraint adds a new conjunctive node. For each left argument of the constraint, the algorithm adds a new edge from the disjunctive node that corresponds to the argument to the conjunctive node. For each right argument of the constraint, the algorithm adds a new edge from the conjunctive node to the disjunctive node that corresponds to the argument.

4. Constraint Conflict Detection

The most important use of SCGs is in finding constraint enforcement conflicts. Constraint enforcement conflicts occur when two active constraints try to force a disjunctive node in opposite directions. Since constraints are prioritized, any conflicts can be resolved at runtime in favor of the constraint with the highest priority. However, resolution in this fashion can cause unexpected, undesired behavior (*i.e.*, bugs) in the embedded system. Pre-preemptive debugging, in the form of constraint conflict detection, aids designers in catching such problems.

There are two different types of constraint conflicts: first order and $n^{th}$ order. First order conflicts are fairly straightforward to detect, but detecting $n^{th}$ order conflicts is, in general, as hard as detecting ASSP. A number of techniques can be used to reduce the complexity of $n^{th}$ order conflict detection. The first technique conservatively approximates conjunctive nodes as disjunctive nodes. This technique is polynomial and detects all possible conflicts, but it may also deliver a number of false positives. The second technique exploits the hierarchical properties of systems designed using coordination-centric modeling to cache partial results; for certain SCGs called well-composed, this technique can deliver results in polynomial time. Many subgraphs in typical SCGs are replicated over and over. In these cases, replication can be exploited to deliver results in polynomial time. Finally, subgraphs may not relate to others, and in these cases, it is possible to analyze them separately.

A. <u>First Order Conflicts</u>

First order conflicts occur when two potentially coactive enforcing edges have opposite effects on the same disjunctive node. Fig. 51A shows one such conflict: if nodes a, b, c, and d 5100, 5102, 5104, and 5106, respectively, are all simultaneously active, a conflict 5108 occurs between $c \wedge d$ 5110 and $a \wedge b$ 5112. Since the conflicting edges 5114 and 5116 are prioritized, it is easy for the runtime system to dynamically resolve this in favor of $c \wedge d$ 5110.

First order conflicts are easy to detect-for each disjunctive node, simply find all enforcing edges that conflict in sense and trace back to their respective conjunctive nodes.

B. <u>$n^{th}$ Order Conflicts</u>

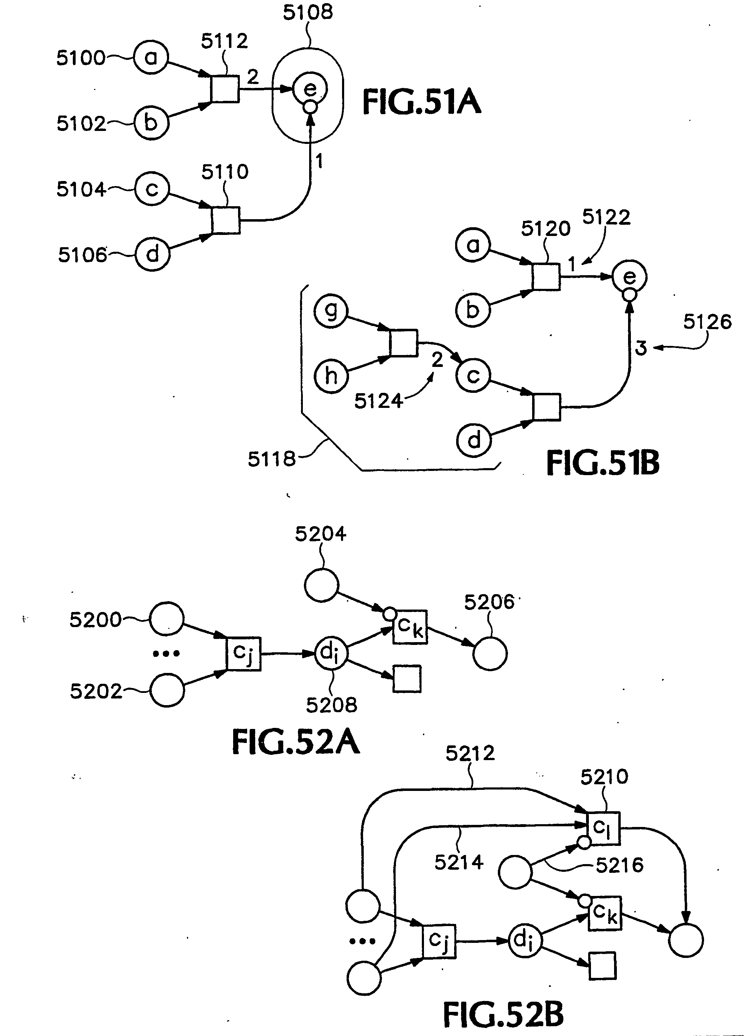

Fig. 51B shows a potential simple second order conflict between the terms $d \wedge g \wedge h$ 5118 and $a \wedge b$ 5120. In this case, priority labels 5122, 5124, and 5126 of the edges cause the $d \wedge g \wedge h$ 5118 term to be ignored whenever there is a conflict between them. Cyclic $n^{th}$ order conflicts are particularly bad, because they can cause instability in the underlying system-even with priority assignments.

Finding and eliminating $n^{th}$ order conflicts is another NP-Hard problem, so we are reduced to practical techniques that seem to perform well given the characteristics of common SCGs. Experience has shown that these graphs frequently embody exponential control state spaces; therefore, it is essential to avoid enumerating the entire control state space in conflict detection.

Algorithm 2 shows one conflict detection algorithm that can usually attain reasonable performance. This algorithm produces a complete closure of the SCG, such that conflicts are identified by conflicts in conjunctive node output.

The conjunction between terms is represented by a single conjunctive node, and a potential conflict is realized if and only if all intermediate disjunctive nodes are satisfied. In practice, SCGs and the systems from which they are derived often have characteristics that can be exploited to find these potential conflicts efficiently.

---

**<u>Algorithm 2 - Flattening static control graphs</u>**

```
Require: (D, C, E) is a copy of a system's static control graph
    for all dᵢ ∈ D, (cⱼ, dᵢ) and (dₗ, cₖ) ∈ E do
        if consistent ((cⱼ, dₖ), (dₗ, cₖ)) then
            if absent (cⱼ, cₖ) then
                add new cⱼₖ to C
                for all (dₘ; cⱼ) ∈ E do
                    add new (dₘ; cⱼₖ) to E
                end for
                for all (dₙ; cₖ) ∈ E with dₙ ≠ dᵢ do
                    add new (dₙ, cⱼₖ) to E
```

---

```
end for
for all (cₖ, dₚ) ∈ E do
        add new (cⱼₖ, dₚ) to E
end for


    end if
        end if
end for
```

Algorithm 2 finds all disjunctive nodes and, for each of them, takes all consistent edges and creates a new conjunctive node for each. For each of the new conjunctive nodes, the algorithm creates new edges (1) for each edge on the conjunctive node, on the tail side of the left edge and (2) for each edge on the conjunctive node, on the head side of the right edge. The consistency check ensures that no literals in one conjunctive node conflict with literals in the other (*e.g.,* it will return false if $c_j$ contains a and $c_k$ contains ¬a). The absence check ensures that the new node will not be redundant.

Fig. 52A shows a portion of an SCG before application of Algorithm 2 (flattening), and Fig. 52B shows the SCG after flattening. A new constraint between end nodes 5200, 5202, 5204, and 5206 is constructed; it includes $c_1$ 5210 and edges 5212, 5214, and 5216 entering and leaving $c_1$ 5210. This constraint represents the cascading effect through a node $d_i$ 5208.

To find an upper bound on the space and time required, assume that each possible consistent, distinct, conjunctive node will be created and that each of these will fan out to all disjunctive nodes. This means that for n disjunctive nodes, space for $3^n$ conjunctive nodes and $2n3^n$ edges (at most n edges on both sides of each conjunctive node) is required. Assuming that a vast majority of these are created during the execution of the algorithm, time must be approaching $4n3^n$. These space and time requirements are extremely sensitive to the initial fan-in and fan-out of nodes in the graph, the initial number of conjunctive nodes, and the length of acyclic, self-consistent paths (*i.e.*, paths along which a single change effect can be propagated).

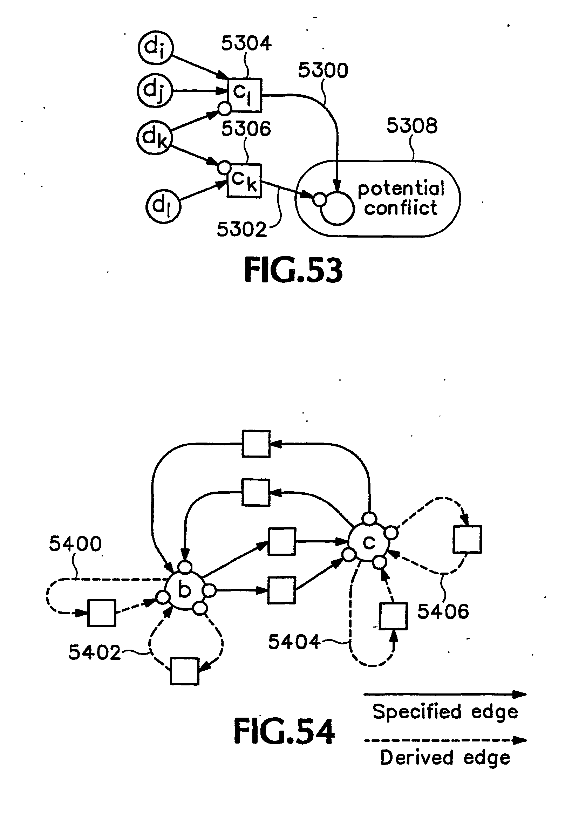

Once the graph has been flattened, true conflicts can be ascertained by tracing back pairs of edges that assert different values on any disjunctive node and by determining whether their source conjunctive nodes are mutually exclusive. An example is shown in Fig. 53. Outgoing edges 5300 and 5302 from $c_l$ 5304 and $c_k$ 5306 form a potential conflict 5308. To determine whether a conflict exists, the literals that make up the respective conjunctions are compared, treating unused variables as "don't cares." As Table 6 shows, conflict 5308 occurs for the configuration $d_i \land d_j \land \neg d_k \land d_l$.

Table 6.

| Finding the conflict from Fig. 54. | | | | |
|---|---|---|---|---|
| | $d_i$ | $d_j$ | $d_k$ | $d_l$ |
| $c_l$ | 1 | 1 | 0 | -- |
| $c_k$ | -- | -- | 0 | 1 |
| equivalent | 1 | 1 | 1 | 1 |
| conflict | 1 | 1 | 0 | 1 |

Algorithm 2 highlights instability, which shows up as simple cycles. For example, the instability in Fig. 49 is visible in Fig. 54 as four simple cycles 5400, 5402, 5404, and 5406 after flattening.

There are several techniques available to improve the performance of Algorithm 2 for a wide variety of SCGs. The following subsections describe some of them.

1. Disjunctive Graph Approximation

A special case of SCGs is one in which each conjunctive edge has only a single input. In this case, Algorithm 2 becomes a variety of Warshall's algorithm, in which conjunctive nodes just define relationships between disjunctive nodes. If there are only a few conjunctive nodes with more than one incident edge, each of them can be replaced with several conjunctive nodes with single incident edges.

This approach yields a conservative approximation of the conflicting edges, with the possibility of a large number of false positives. If the number of false positives that concern the designer is small, they can be individually verified against the original graph.

2. Hierarchical Reduction

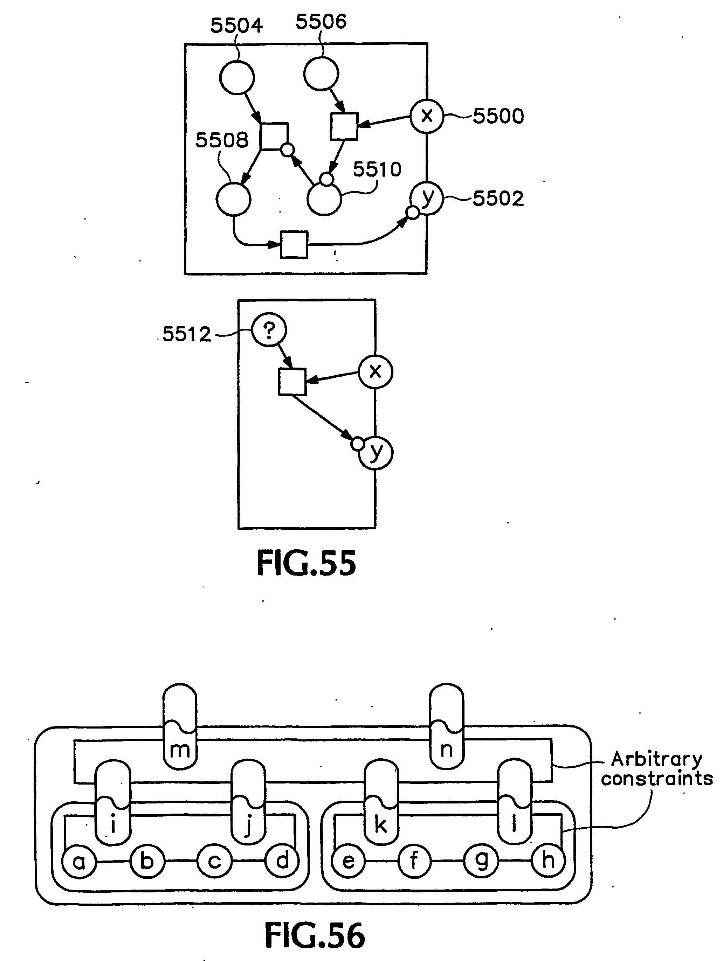

Recall that one element of a component's coordination interface is a set of guarantees. Guarantees are summaries of component properties that are already verified. These guarantees can include summaries of internal relationships between control ports on the interface. Fig. 55A shows one such summary. Although the actual relationship between x 5500 and ¬y 5502 involves a number of internal nodes 5504, 5506, 5508, and 5510, as seen in Fig. 55, none of them are part of the interface; therefore, they can be summarized as a single, independent node 5512, marked with "?", as shown in Fig. 55B.

Since our methodology encourages hierarchical composition, stable state consistency can often be applied hierarchically to these graphs. In this approach, each component provides a summary of the relationships between all interface modes. A system that is well-composed (as shown in Fig. 56) in this fashion will have the number of nodes visible in each scope less than some reasonable constant c, and the ratio of the number of non-interface nodes within a scope to the number of interface nodes is always greater than some constant factor d, where d > 1. With this, there are $\frac{n \log_d n}{c}$ different scopes to analyze, and the time required for each scope is then less than or equal to $4c3^c$; thus the time required for an entire well composed graph is:

$$t \le \frac{4c3^c\, n \log_d n}{c}$$

which can be stated as $t \le Pn \lg n$, where P is the constant $\frac{4(3^c)}{\lg d}$ . This means that hierarchical, stable-state consistency for well-composed graphs is O (n lg n).

While it is not possible to force arbitrary systems to fit this construct, it is possible to determine whether a system is well-composed before attempting this technique. Furthermore, for components supplied with models, the system can still use the interaction summary; therefore, it is not always necessary for components to be well-composed internally. Since the summary can be cached with components, the cost for preparing it can be amortized over many attempts at analysis.

3. Exploiting Replication

There are many protocols that have a large number of connected components, but how the components interact is independent of their number. In protocols such as token ring or subsumption, in which the interface is replicated with predictable relationships between instances, it may not be necessary to verify all possible conflicts between all components. For example, with subsumption, components interact cleanly with the protocol, and conflicts between components are minimal. The conflicts between a component and a protocol can be treated as independent from the other components plugged into a protocol, so the component can be simply checked against the protocol.

4. Orthogonal Reduction

Often, interactions between interfaces in a layered system are through opaque actions. Therefore, each layer can be considered a separate entity, and the graph for each layer can be constructed independently of the other graphs. In these cases, flattening need not consider the system as a whole, but merely the subgraphs for each particular layer.

*Dynamic Control Graphs*

A dynamic control graph (DCG) includes pure control actions as well as pure control constraints. DCGs can be defined as a triple ($\Gamma_d$, $D_d$, $E_e$) wherein:

- $\Gamma_d$ is a set of conjunctive and action nodes, *i.e.,*
  $\Gamma_d \subseteq (C \cup A)$,
  where C is the universe of all possible conjunctive nodes, and A is the universe of all possible actions.

- $D_d$ is a set of disjunctive nodes.

- $E_e \subseteq [\{T_f, T_t\} \times \{H_f, H_t\} \times \{T, N\} \times ((\Gamma_d \times D_d) \cup (D_d \times \Gamma_d))]$

is a set of directed edges that are labeled either Transient (T) or Continuous (N).

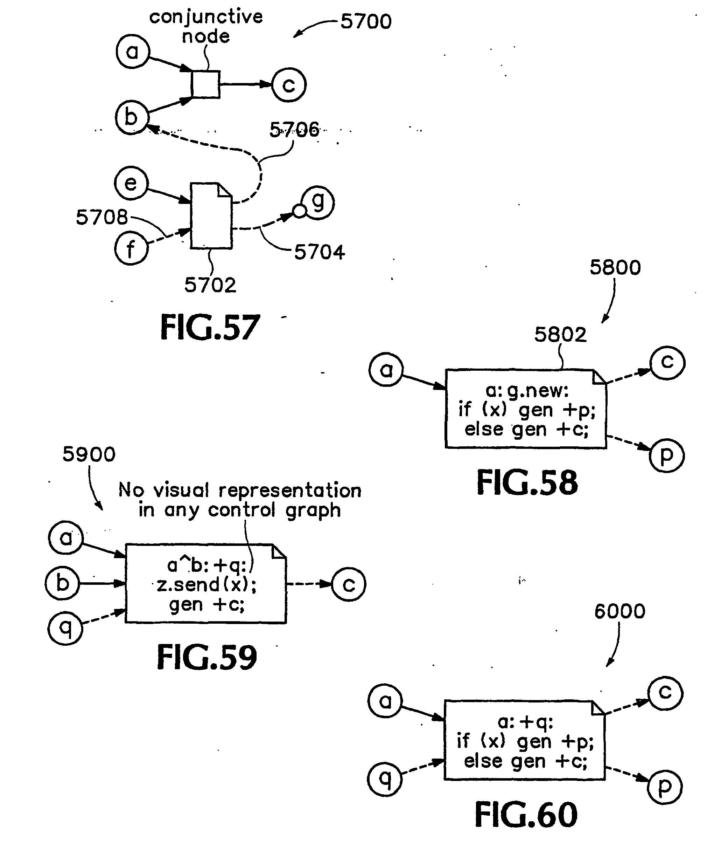

Fig. 57 depicts a DCG 5700. With reference to Fig. 57, a pure control action (not shown) is a transparent action that is triggered only by a control transient and that produces only a control transient. In DCG 5700, the pure control action is represented as a conjunctive node, an action node 5702, with dashed edges 5704 and 5706. A pure control constraint (not shown) is one that constrains only modes (not shown). As described above, an action can be one of two types: an instantaneous action or a delayed action. The instantaneous action type is executed immediately when its trigger is received, and the delayed action type is executed at some point in time after its trigger is received. The delay of an action is embodied in its action node 5702.

Fig. 58 depicts a DCG 5800 with an action node 5802. With reference to Fig. 58, action node 5802 has no apparent trigger. With this, DCG 5800 fully characterizes all control aspects of the action (although the data aspect, which in this case is the trigger, is not included in any control graph). Fig. 59 shows a DCG 5900 for an action (not shown) that is transparent with respect to control interactions. Fig. 60 shows a DCG 6000 for an action (not shown) that is opaque with respect to control; the graph shows a conservative approximation of the action's control behavior.

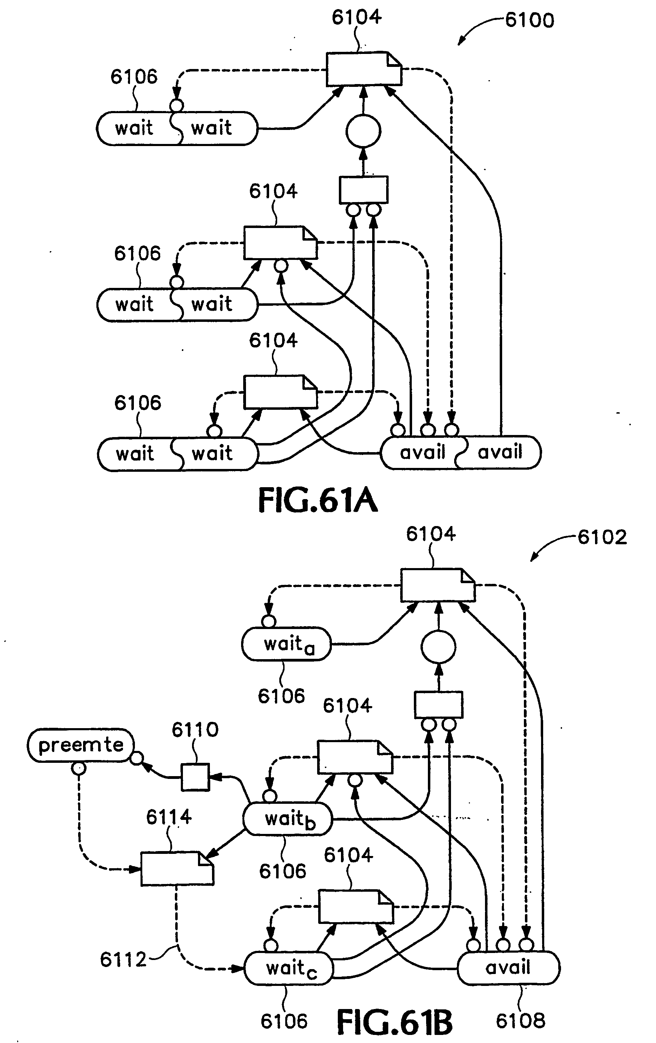

As mentioned earlier, it is better to model coordinator transitions through explicit actions rather than through static control graph (SCG) instability. Figs. 61A and 61B are two DCGs 6100 and 6102, for rendezvous coordinator 900. of Fig. 9, and a rendezvous coordinator with two-participant preemption, respectively. With reference to Figs. 61A and 61B, there are n control actions (not shown) (one for each component (not shown) with a wait coordination interface (not shown)). Each of the n control actions is represented in DCGs 6100 and 6102 by an action node 6104, and each action node is guarded by the conjunction of all wait modes 6106 with lower precedence being inactive. When an action is enabled and triggered, it deactivates its respective wait mode 6106 and an avail mode 6108.

DCGs expose hidden interactions between coordinators. As shown in Fig. 61B, DCG 6102 reveals that an interaction between $wait_b$ and $wait_c$, of wait modes 6106, occurs outside of the rendezvous coordinator with two-participant preemption. The interaction is shown as a combination of edges 6110 and 6112, and preempt action node 6114. As shown, the interaction might cause $wait_c$ to intercept $wait_b$'s wait for the resource.

### A. Partitioning SCGs and DCGs Across Action-Only Barriers

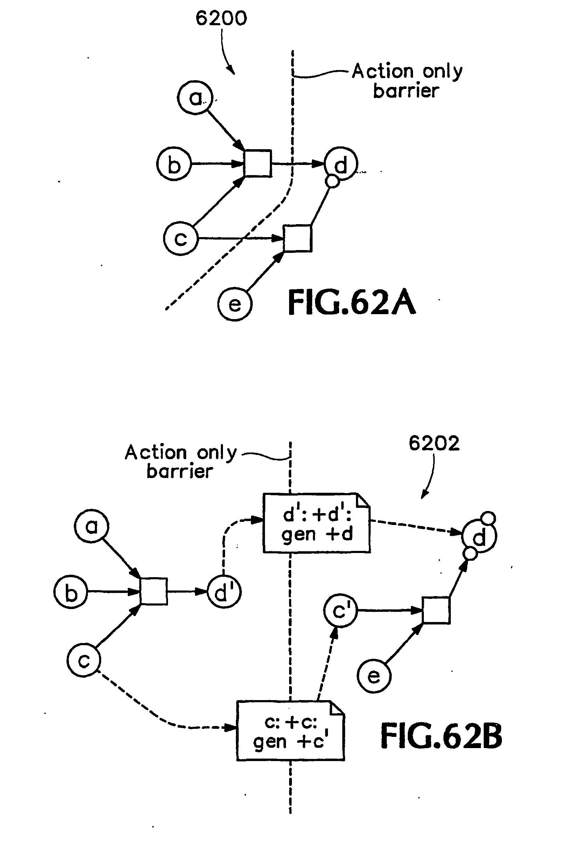

A useful static graph transformation that can be performed on both SCGs and DCGs is partitioning across action-only barriers. An action-only barrier is a barrier within the system across which state cannot be maintained. Fig. 62A shows a communication channel between partitions of an SCG 6200 that can cause an action-only barrier. Fig. 62B shows a DCG 6202, corresponding the SCG 6200 after partitioning across the access-only barrier. In applying this to DCGs, all transient edges are left unchanged.

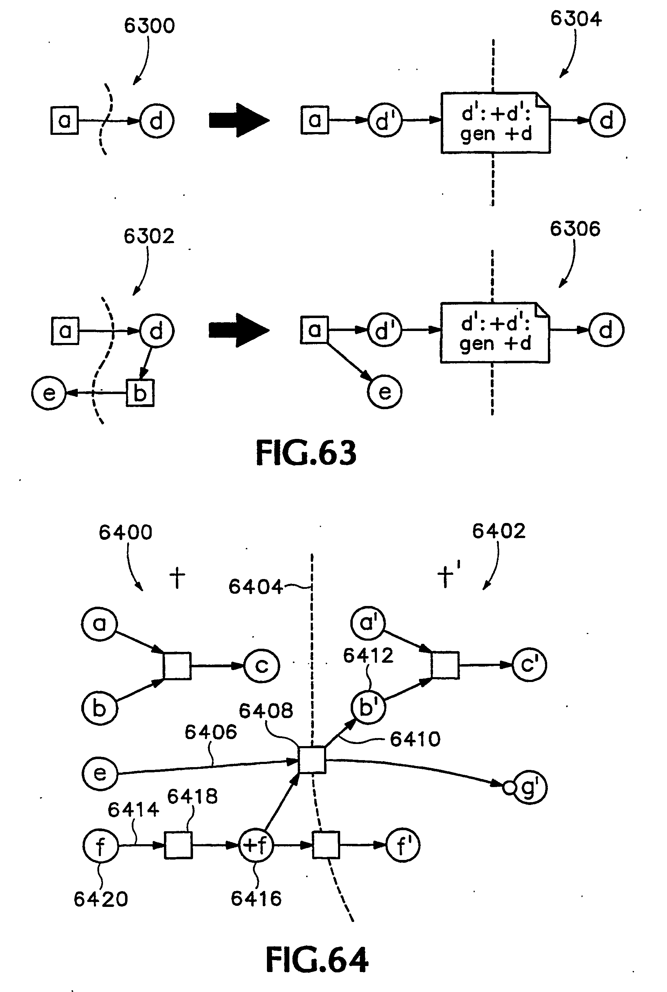

To perform the transformation across the action-only barrier the following steps are performed. First, the nodes within SCG 6200 that will be placed on each side of the action only barrier (in other words, perform a graph cut across the barrier, as in Fig. 62A) are identified. Second, each constraint edge that crosses the action-only barrier is replaced with an appropriate template. Fig. 63 depicts constraint edges 6300 and 6302 that cross the action-only barrier, from Fig. 62A, and their corresponding templates 6304 and 6306. Finally, an action node created in the last step is filled in with an action sensitive to the activation (or deactivation) of the disjunctive node d opposite the incident edge.

### B. Action/Constraint Conflicts

It is possible for an action to conflict with stable states during the execution of a software system. If the action has higher priority than a constraint on the stable state, then a glitch will occur whenever the situation is exercised. The glitch infers a system state that may, or may not, actually be entered. However, the effects of the glitch can be propagated through the rest of the system software system, even though the system state inferred by the glitch has not been entered. On the other hand, if the relevant constraint has a higher priority than the action, then the action cannot be performed in a given system configuration and may be a candidate for removal from the software system.

### C. Action/Action Conflicts

An action can sometimes conflict with another action. Action/action conflicts are detected using similar checks to those given for stable-state consistency. These check may occasionally leave two or more triples with overlapping modes and triggers but with contradictory actions. These contradictory actions can be resolved in a number of ways, some static and some dynamic. A static solution to the contradictory actions is to conservatively eliminate any possible conflicting portions from one of the triples. An example of a runtime solution is to allow the conflicting actions to propagate throughout the rest of the triples, resolving the conflict based on priority when it is time to lock down the new configuration.

### 4. Model Checking

SCGs and DCGs can be used directly for a wide variety of checks involving what is allowed in particular configurations and what effects can result from changes on a small scale. However, for checking properties that may span several different system configurations in a sequence, other transformations can perform these checks more efficiently.

Model checking describes techniques in which finite state system models are checked against predicates in temporal logic. Control graph configurations, both SCGs and DCGs, represent systemwide state for a software system; it therefore follows that many abstract control graph properties can be verified using standard model checking. A binary decision diagram (BDD) can be a compact, though not always optimal, representation of transition relations of an extremely large-state machine. BDDs frequently provide representations of systemwide state that are logarithmic relative to the size of the software system's statespace. SCGs and DCGs are also compact representations of large statespaces. However, there are many standard checks that can be easily performed on BDD representations that are would be difficult to perform on a SCG or DCG representation of a software system.

To take advantage of the standard checks available for BDDs, embodiments according to the present disclosure may include a system and method for converting SCGs and DCGs into BDDs, without incurring the penalty of fully elaborating the state space of the software system.

### A. Temporal Unrolling

Fig. 64 depicts a current DCG 6400 along with a next DCG 6402, which is the result of temporally unrolling DCG 6400. With reference to Fig. 64, a temporal line 6404 separates current DCG 6400 from next DCG 6402. Temporal unrolling of current DCG 6400 allows a current control graph configuration, embodied in current DCG 6400, to be related to a set of next configurations, embodied in next DCG 6402, of the DCG for a particular software system. Unrolling current DCG 6400 across temporal line 6404 involves making a copy, to the right of temporal line 6404, of all disjunctive nodes, constraints, and all nondelayed actions within current DCG 6406. For clarity, a prime is added to the label of each copied element. For each delayed action within current DCG 6400, a sensing edge 6406 is connected to the each appropriate nonprimed node 6408, and an enforcing edge 6410 is connected to each appropriate primed node 6412. When a sensing edge is an event edge, some additional nodes must be created. For an event sensing edge 6414, a new disjunctive node 6416, which represents the event itself, is created. A new conjunctive node 6418 tying new conjunctive node 6418 back to a creating node 6420 that created the event, constraining new conjunctive node 6418 state and its primed state appropriately (*e.g.,* a+f event can only occur when f is already deactivated, but it leaves f' activated, as shown).

This unrolled DCG has the characteristic function:

$$f_c = (\neg a \lor \neg b \lor c) \land (\neg a' \lor \neg b' \lor c') \land (\neg f \lor \neg {+}f) \land (\neg {+}f \lor f') \land (\neg e$$

$$\lor \neg {+}f \lor b') \land (\neg e \lor \neg {+}f \lor \neg g').$$

This function now encodes the relation between current configuration and next configuration, which is annotated

$$C \xrightarrow{\ c\ } C'$$

for configurations *C* and *C'*.

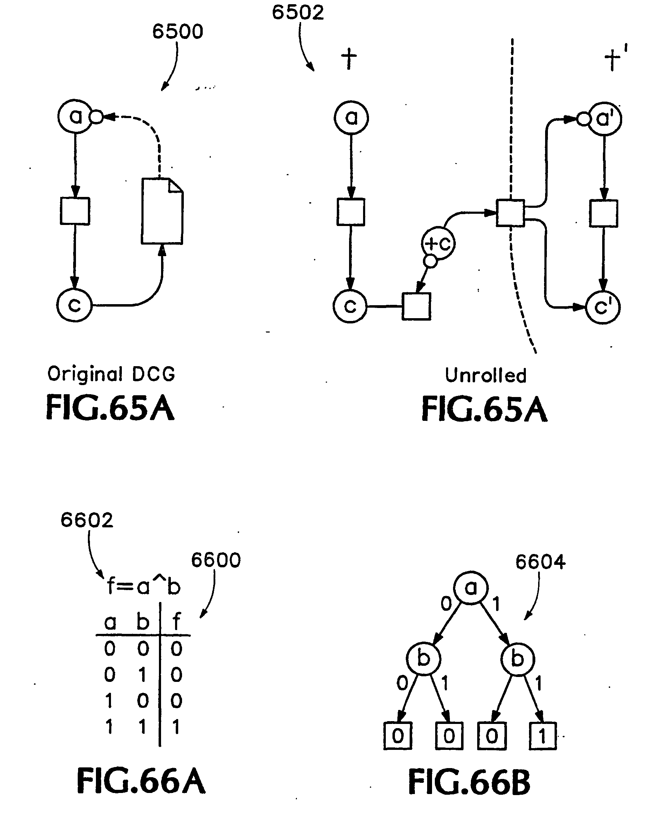

Fig. 65A depicts a simple DCG 6500. Fig. 65B depicts an unrolled DCG 6502 for simple DCG 6500. With reference to Figs. 65A and 65B, the characteristic function of unrolled DCG 6502 is as follows:

$$fc = (\neg a \lor c) \land (\neg c \lor \neg {+}c) \land (\neg {+}c \lor \neg a') \land (\neg a' \lor c') \land (\neg {+}c \lor c'),$$

and its transition relation is enumerated in Table 7.

Table 7:

| A transition relation for the characteristic function of unrolled DCG 6502. | | | | |
|---|---|---|---|---|
| C | | | C' | |
| a | c | +c | a' | c' |
| 0 | 0 | 0 | 0 | 0 |
| 0 | 0 | 0 | 0 | 1 |
| 0 | 0 | 0 | 1 | 1 |
| 0 | 0 | 1 | 0 | 1 |
| 0 | 1 | 0 | 0 | 0 |
| 0 | 1 | 0 | 0 | 1 |
| 0 | 1 | 0 | 1 | 1 |
| 1 | 1 | 0 | 0 | 0 |
| 1 | 1 | 0 | 0 | 1 |
| 1 | 1 | 0 | 1 | 1 |

B. Computation Tree Logic

Application of model checking requires a predicate logic that is powerful enough to express the temporal state relationships that will be checked. Computation tree logic (CTL) is a superset of the temporal logic introduced above, and it includes two new operators: X (for neXt) and U (for Until). A X $\Phi$ is true in the present if $\Phi$ is true in all possible next states. E X $\Phi$ is true in the present if $\Phi$ is true in at least one of the possible next states. A ($\Phi_0$ U $\Phi_1$) is true in the present if, on all outgoing paths, $\Phi_0$ is true until $\Phi_1$ becomes true.

The lambda calculus provides a flexible form for representing temporal logic expressions. Lambda expressions (*i.e.,* expressions taking the form $\lambda x.E$) are often used to represent functionals, or functions that operate on other functions. The expression $\lambda x.E$ p represents the expression E with p replacing each occurrence of x. For example, $\lambda x.(x + y)$ 3 is equivalent to $(3 + y)$, and $\lambda x.(x + y)$ 3y + z is equivalent to $(3y + z + y)$ or $(4y + z)$.

To make use of this with CTL, first consider that

$$S \vDash E X \Phi$$

is equivalent to

$$\exists y(S \xrightarrow{c} y \land y \vDash \Phi);$$

the notation

$$S_a \vDash \Phi$$

indicates that $\Phi$ is true in state $S_a$.

Therefore, a lambda expression representing all configurations for which predicate $\Phi$ is true on the next step on some path would be:

$$E X \Phi = \lambda x.\exists C.((x \xrightarrow{c} C) \land (C \vDash \Phi))$$

This defines $E X \Phi$ as a functional that can be applied to a configuration $Z$ and that evaluates to true if and only if

$$Z \vDash E X \Phi.$$

Using this, along with boolean functions representing the transition relation and all configurations for which Φ is true, we can derive an additional boolean function that represents all configurations for which $E X \Phi$ is true.

Consider again the graph in Fig. 65. The characteristic function of unrolled DCG 6502 is

$$f_c = (\neg a \vee c) \wedge (\neg a' \vee c') \wedge (\neg c \vee \neg a').$$

To find a function that represents all configurations such that $E X \Phi$ where Φ equals $a \wedge c$, we have:

$$EX(a \wedge c) = \exists C'.(fc \wedge C' \vDash (a \wedge c))$$

$$= \exists C'.(fc \wedge (a' \wedge c'))$$

$$= \exists C'.((\neg a \vee c) \wedge (\neg a' \vee c') \wedge (\neg c \vee \neg a') \wedge a' \wedge c')$$

$$= \exists C'.(\neg a \wedge \neg c \wedge a' \wedge c')$$

$$= \neg a \wedge \neg c$$

And so, using the lambda calculus version of

$$E X (a \wedge b)$$

and some boolean manipulation, we have obtained an expression

$$(\neg a \wedge \neg b)$$

that is equivalent to the expression

$$E X (a \wedge b)$$

in terms of this particular control graph.

A fixed point of a Lambda expression (L) is an expression (F) such that L F = F. For example, if L = $\lambda x.(x \vee y)$ and F = true, L F = true $\vee y$ = true, and so true is a fixed point of L. The least fixed point of Lambda expression $\lambda x.E_x$ is notated as $\mu x.E_x$, and the greatest fixed point is notated $v x.E_x$. Using these, we can describe two more functional representations:

$$E F \Phi = \mu Y.(\Phi \vee E X Y)$$

$$E G \Phi = v Y.(\Phi \wedge E X Y)$$

C. Binary Decision Diagrams (BDDs)

The weakest link of symbolic model checking is the fact that boolean manipulation is *NP-hard* and can require large amounts of space in a computer's memory. However, it has been shown that for a large class of problems, binary decision diagrams can provide efficient representations for state machine transition relations that are easy to manipulate and combine. A BDD is a reduced representation of a truth table for a boolean function. Although any boolean function can be represented as a truth table, the truth table is exponential in size relative to the number of variables in the boolean function. A truth table can be represented as a tree in which each boolean variable corresponds to nodes and each assignment of values corresponds to a directed edge. Fig. 66A shows a truth table 6600 for a boolean "and" function 6602. Fig. 66B shows a truth tree 6604 that corresponds to truth table 6600.

Finding the truth value of an assignment is performed as follows. Starting from the root, edges are traversed until a leaf node is reached. The particular edge traversed from each node is labeled with the value assigned to the corresponding boolean variable. The leaf node reached contains the truth value of the assignment.

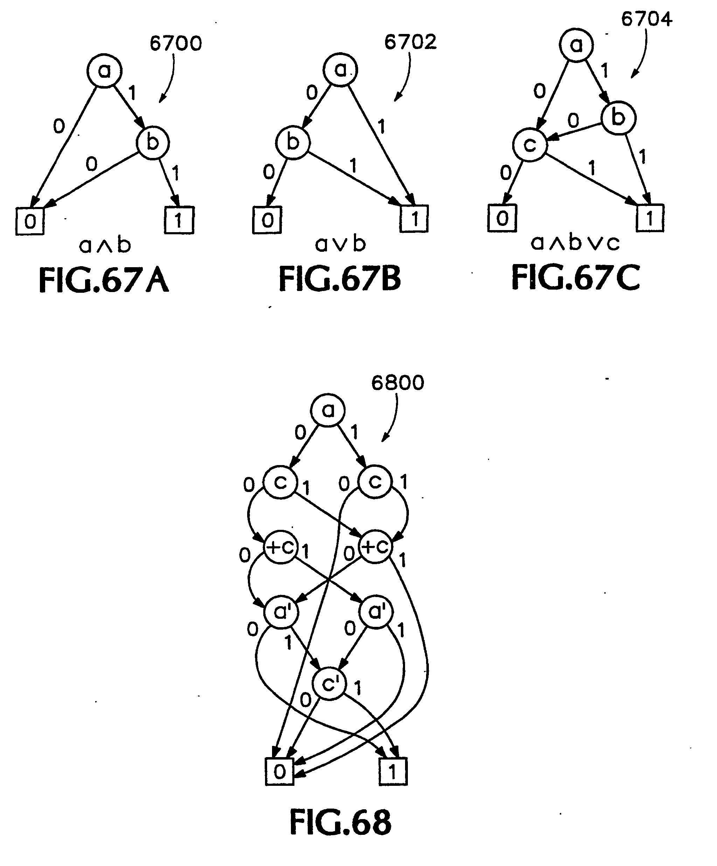

Figs. 67A, B, and C show several reduced BDDs 6700, 6702, and 6704 for truth tree 6604, shown in Fig. 66B. The procedure for looking up truth values is to start at the root and traverse the edges labeled with the value assigned to the corresponding variable.

Whereas the number of nodes in a truth tree grows exponentially with the number of variables in a corresponding function, a BDD that grows only polynomially can often be found. Reduction of a BDD is performed with the aid of a cache, where reduced subgraphs can be stored. This cache can be a hash table. In the reduce algorithm, as disclosed in, BRYANT, R. E. Symbolic boolean manipulation with ordered binary-decision diagrams. *ACM Computing Surveys* 24, 3 (September 1992), 293-318, assume that each BDD node is a tuple (n, l, r), where n is the name of the corresponding variable, l is the BDD connected by the left edge, and r is the BDD connected by the right edge. Furthermore, a BDD cache has two operations - (1) put(BDD), for placing BDDs in the cache, and (2) lookup(name, BDD, BDD) (where the BDD parameters are the l and r subgraphs of the cached BDD) - for finding BDDs already cached and returning null if none is found.

Thus a BDD can be created for any boolean function by enumerating its truth table in the form of a truth tree and calling the "reduce" algorithm, shown below as Algorithm 3. However, this approach still suffers from exponential growth, since it requires exponential space for the truth tree until the BDD is constructed. However, BDDs can be efficiently and methodically grown using a procedure embodied in the "apply" algorithm, shown below as Algorithm 4, as disclosed in BRYANT, R. E. Symbolic boolean manipulation with ordered binary-decision diagrams, *ACM Computing Surveys* 24, 3 (September 1992), 293-318. Apply generates a BDD that represents an arbitrary boolean operation applied to two BDDs, *i.e.*, $B_r$ such that $B_r = B_1 op B_2$.

The apply algorithm is derived from Shannon expansions of the functions represented by the input BDDs. A Shannon expansion represents a boolean function as an expression containing partial evaluations. For example, expanding f(x, y, z) in terms of x:

$$f(x, y, z) = (x \wedge f(1, y, z)) \vee (\neg x \wedge f(0, y, z))$$

which can, of course, be further expanded in terms of *y* and *z*. It is typically notated

$$f = (\neg x \wedge f|_{x \leftarrow 0}) \vee (x \wedge f|_{x \leftarrow 1}).$$

This is also known as the cofactor expansion of a function. A Shannon expansion of f op g is:

$$f \text{ op } g = \neg[x \wedge (f|x \leftarrow 0 \text{ op } g|x \leftarrow 0)] \vee [x \wedge (f|x \leftarrow 1 \text{ op } g|x \leftarrow 1)]$$

**Algorithm 3** BDD *reduce*.
_____

**BDD** reduce (*T*)

**Require:** *T* is a BDD

     C ← **new** BDD cache

     C.put(**new** BDD(1, **null, null**)) // *cache leaf nodes*

     C.put(**new** BDD(0, **null, null**))

     **return** reduceC (*T, C*)

**end**

```
BDD reduceC(T, C)
Require: T is a BDD, and C is a BDD cache
        if T = null then
                return null
        else
                l ← reduceC(T.l, C)
                r ← reduceC(T.r, C)
        end if
        return C:lookup(T.n, l, r)
end
```

---

**Algorithm 4** BDD *apply*.

```
BDD apply (op, B₁, B₂)
Require: op is an operator; B₁ and B₂ are BDDs
        C ← new BDD cache
        C.put(1, null, null)) // cache leaf nodes
        C.put(0 null, null)
        return applyC(op, B₁, B₂, C)
end
BDD applyC(op, B₁, B₂, C)
        if depth (B₁, n) = depth(B₂.n) then // Same variable
           n ← B₁,.n
           l ← applyC (op, B₁, l, B₂, l, C)
           r ← applyC (op, B₁, r, B₂, r, C)
        else if depth (B₁.n) < depth(B₂.n) then // B₁ precedes B₂
           n ← B₁,.n
           l ← applyC (op, B₁, l, B₂, C)
           r ← applyC (op, B₁, r, B₂, C)
        else // B₂ precedes B₁
           n ← B₂.n
           l ← applyC (op, B₁, B₂, l, C)
           r ← applyC (op, B₁, B₂, r, C)
        end if
        return C.lookup(n, l, r)
end
```

---

D. BDD Representations of Control Graphs

A BDD can often be used to represent transition relations with exponential state-spaces while using only polynomial storage space. A BDD can be constructed from a control graph by unrolling the control graph, as described above, and then using the apply algorithm, described above, to build a BDD from a characteristic function for the unrolled control graph. To efficiently represent the state-space, attention must be paid to variable ordering within the characteristic function. Good orderings have contiguous sequences of highly correlated variables.

Consider DCG 6102, which represents the unrolled three-client rendezvous/preempt coordinator, shown in Fig. 61. This example is interesting because the state-space represented grows exponentially with the number of participants. BDD representations would be of little value for our purposes if they experienced exponential growth in creation or if they required exponential storage. As shown below, BDDs provide compact representations for such examples.

Fig. 68 shows the results of using the apply algorithm to grow a BDD 6800, which represents the characteristic function of unrolled DCG 6502 from Fig. 65.

An unrolled DCG contains a great deal of information that can aid a designer in finding an efficient variable ordering. Constraints and pseudo-constraints *(i.e.,* those introduced by unrolling) connect variables that are likely to have the least change with respect to each other. For example, given the following constraints:

$$\{..., C \Rightarrow \neg G, C \Rightarrow B, B \Rightarrow C, ...\}$$

if $C \Rightarrow \neg G$ is uncontested, we know that C and G are fairly strong candidates to be located next to each other in the variable ordering. However, $C \Rightarrow B$ and $B \Rightarrow C$ suggest that B and C are even stronger candidates.

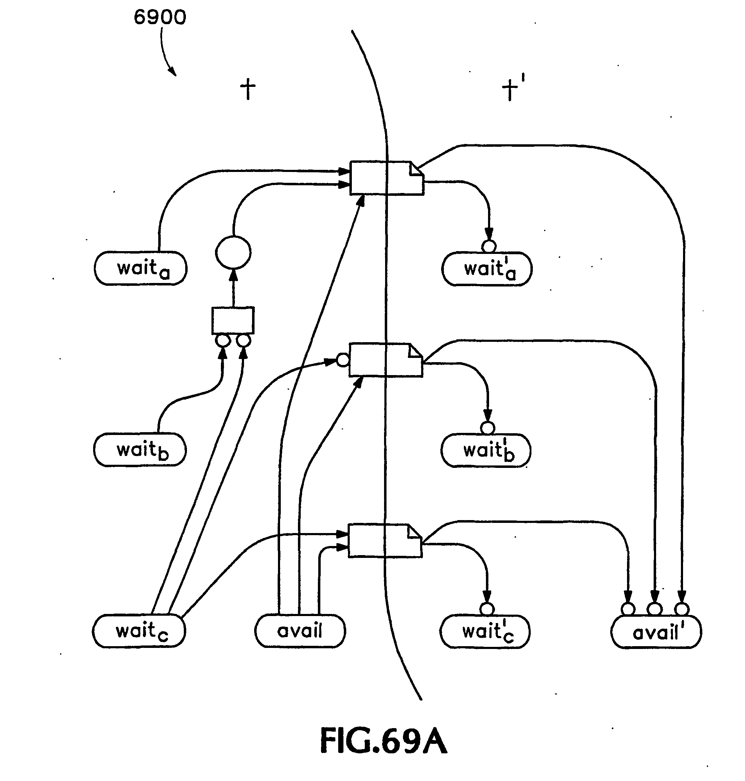

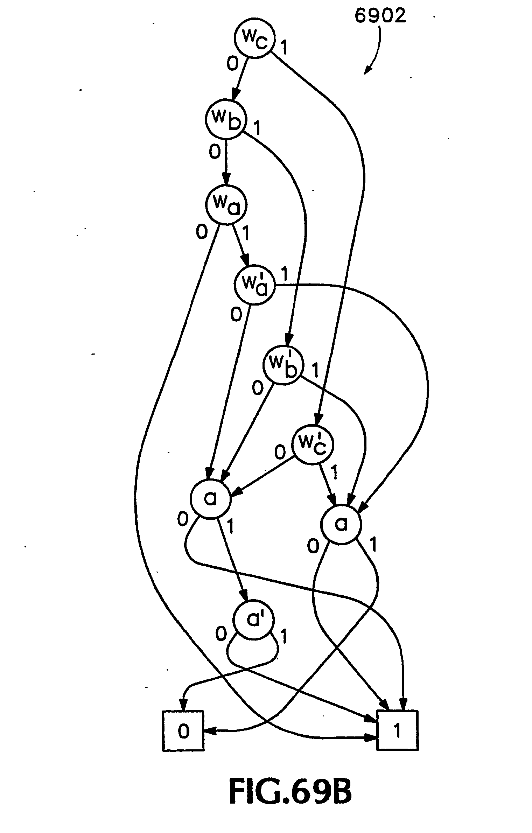

Fig. 69A shows an unrolled rendezvous DCG 6900. With reference to Fig. 69A, unrolled rendezvous DCG 6900 is created by temporally unrolling DCG 6102, which represents the rendezvous coordinator, as described with reference to Fig. 61. The characteristic functions for unrolled rendezvous DCG 6900 are as follows:

$$f_a = \text{wait}_a \wedge (\neg\text{wait}_b \wedge \neg\text{wait}_c) \wedge \text{avail} \Rightarrow \neg\text{wait'}_a, \neg\text{avail'}$$

$$f_b = \text{wait}_b \wedge \neg\text{wait}_c \wedge \text{avail} \Rightarrow \neg\text{wait'}_b, \neg\text{avail'}$$

$$fc = \text{wait}_c \wedge \text{avail} \Rightarrow \neg\text{wait'}_c, \neg\text{avail'}$$

The DCG shows that $\text{wait}_x$s could be strong candidates for colocation with their respective $\text{wait'}_x$s, with $\text{wait}_a$, $\text{wait'}_a$, $\text{wait}_b$, $\text{wait'}_b$, $\text{wait}_c$, $\text{wait'}_c$, avail, avail' as a reasonable order. The above variable ordering yields a BDD that has fifteen nodes, which can be referred to as a temporal cluster.

For further improvement, notice that each of the primed wait nodes depends upon unprimed versions of wait nodes adjacent to and below it in the graph (*e.g.*, $\text{wait'}_a$ depends upon $\text{wait}_a$, $\neg\text{wait}_b$, and $\neg\text{wait}_c$). This suggests that $\text{wait}_a$, $\text{wait}_b$, and $\text{wait}_c$ should all precede $\text{wait'}_a$ in a BDD, $\text{wait}_b$ and $\text{wait}_c$ should precede $\text{wait'}_b$, and so forth. This, combined with the order constraint suggested in the last paragraph, indicates that $\text{wait}_c$, $\text{wait'}_c$, $\text{wait}_b$, $\text{wait'}_b$, $\text{wait}_a$, $\text{wait'}_a$, avail, avail' should be a very good ordering. In fact, it yields a BDD with eleven nodes. This variable ordering will be referred to as cluster/depend. While cluster/depend is only slightly better than the order given in the previous example, it offers an advantage when the number of rendezvous wait participants increases from three. As shown in Table 8, the simple temporal cluster order creates BDDs that consistently have around four times the number of nodes as there are variables. The cluster/depend order creates BDDs that are only around twice the number of participants. Both, however, are linear in size based on the number of participants. This is much better than the boolean expression form of the characteristic function, which grows quadratically with the number of participants.

Table 8:

| Growth rate for BDDs representing temporally unfolded rendezvous. | | |
|---|---|---|
| **wait participants** | **temporal cluster** | **cluster/depend** |
| 3 | 15 | 11 |
| 8 | 35 | 21 |
| 15 | 63 | 35 |
| 25 | 103 | 55 |

Table 8:   (continued)

| Growth rate for BDDs representing temporally unfolded rendezvous. | | |
|---|---|---|
| **wait participants** | **temporal cluster** | **cluster/depend** |
| 50 | 203 | 105 |

Fig. 69B shows that the critical factor in ordering for this DCG is really just the order of $wait_c$, $wait_b$, and $wait_a$ with respect to each other. The ordering shown in Fig 69B is equivalent in quality to cluster/depend in quality.

With these compact and canonical symbolic representations of rendezvous and other coordinators' exponential statespaces, we can apply model checking techniques to perform preemptive debugging and catch many bugs before implementation software is synthesized, compiled, and run.

E. Application of Model Checking

Model checking is performed using McMillan's *AndExists* algorithm, as shown below in two parts, Algorithm 5 and Algorithm 6.

**Algorithm 5** BDD *AndExists* Part 1.

```
BDD AndExists(V, B₁, B₂)
Require:  V is a state vector; B₁ and B₂ are BDDs representing p and q respectively.
    C ← new BDD cache
    C.put(1, null, null) // cache leaf nodes
    C.put(0, null, null)
    return AndExistsC(op, B₁, B₂, C)
end
```

**Algorithm 6** BDD *AndExists*  Part 2.

```
BDD AndExistsC(V, B₁, B₂, C)
    if height(B₁.n) = height(B₂.n)=0 then // Both leaves
        return B₁ ∧ B₂
    end if
    if depth(B₁.n) = depth(B₂.n) then // Same height
        n ← B₁.n
        l ← AndExistsC(V, B₁, l, B₂, l, C)
        r ← AndExistsC(V, B₁, r, B₂, r, C)
    else if depth(B₁.n) < depth(B₂.n) then // B₁ precedes B₂
        n ← B₁.n
        l ← AndExistsC(V, B₁, l, B₂, C)
        r ← AndExistsC(V, B₁, r, B₂, C)
    else // B₂ precedes B₁
        n ← B₂.n
        l ← AndExistsC(V, B₁, B₂, l, C)
        r ← AndExistsC(V, B₁, B₂, r, C)
    end if
    if ∃v ∈ V.(n = v.n) then
        return applyC(v, l, r, C)
    else if l = r then
        return 1
    else
        return C.lookup(n, l, r)
    end if
    end
```

AndExists evaluates

$$\lambda x. \exists V.(p \wedge q)$$

where $p$ and $q$ are boolean expressions represented as BDDs and $V$ is a boolean assignment vector

$$(v_i \in \{false, true\}).$$

In conjunction with

$$E X \Phi = \lambda x. \exists C.((x \xrightarrow{c} C) \wedge (C \models \Phi))$$

the above allows $E X \Phi$ to be computed.

Many system properties can be verified by checking multiple components simultaneously. Some examples for deadlock

$$(\exists S : S \vDash A \, G \text{ false})$$

and livelock

$$(\exists S : S \mid = A \, F \, S).$$

An important check is determining whether a software system always converges on a consistent state. When a DCG is partitioned among several subsystems *(e.g.,* on a multiprocessor architecture), an action-only barrier is formed between the portions on each subsystem. Frequently, the actions that cross have delays that can span several scheduling steps, and these delays are often functions of bus traffic or other factors. To make such a system match the semantics described here, it is necessary to synchronize all subsystems so that action delays are never more than a single scheduling step. However, this is too conservative for an execution model, and it eliminates some of the advantage of multiprocessor architectures. It often makes more sense to let components interact asynchronously when possible and to ensure that the system will always resolve to a consistent state. To do so, it is necessary to choose an execution model that represents asynchrony.

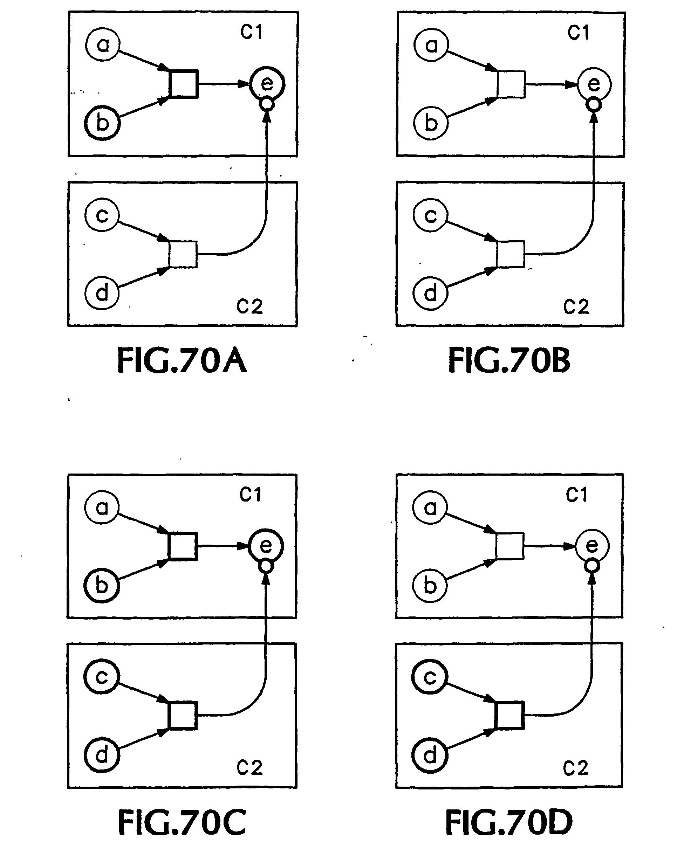

Interleaving asynchronous models assume that processes can change state at any time-but only one at a time. However, this assumption may be too conservative, since several correlations can be made between state-bits on a single component. It is more accurate to say that any component can perform any locally legal control state change at any time. As shown in Figs. 70A, B, C, and D, this means that one moment after the configuration shown in Fig. 70A is valid, either of the configurations shown in Fig. 70B or Fig. 70C can be valid. However, the configuration shown in Fig. 70D cannot be valid, because it reflects two simultaneous state changes. However, since these changes are concurrent, the configuration in Fig. 70D may result after two time steps of the configuration in Fig. 70A.

F. <u>Look-Ahead Predicates</u>

Using model checking to perform inquiries into a particular property in a DCG produces a boolean function that identifies all configurations for which it is true.

In debugging a system, designers want to track whether configurations in a particular execution can possibly lead to a configuration in which a particular predicate holds and which configurations would do so. The expressions derived from the application of model checking are look-ahead predicates.

**Control/Dataflow Graphs (CDGs)**

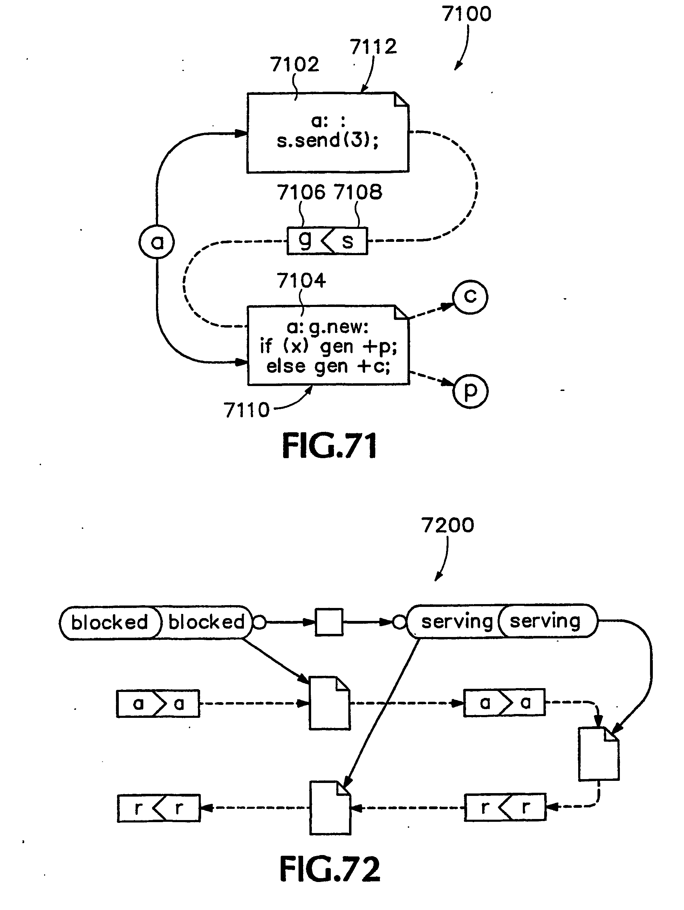

Fig. 71 shows a control/dataflow graph (CDG) 7100. CDG 7100 represents dataflow-based transparent actions 7102 and 7104 as part of its structure. CDG 7100 has the same overall structure as a DCG but further allows both data ports 7106 and 7108 and dataflow nodes 7110 and 7112. Dataflow actions are allowed, within this structure, to cause control changes.

A CDG is a triple, $G = (\Gamma f, \Delta f; Ef)$, in which:

- $\Gamma f$ is a set of conjunctive and action nodes, *i.e.*, $\Gamma f \subseteq (C \cup A)$, in which C is the universe of all possible conjunctive nodes and A is the universe of all possible actions.

- $\Delta f$ is a set of disjunctive and dataflow nodes, *i.e.*, $\Delta f \subseteq (D \cup F)$, in which D is the universe of all possible disjunctive nodes and F is the universe of all possible dataflow nodes.

- $Ef \subseteq [\{Tf, Tt\} \times \{Hf, Ht\} \times \{T, N\} \times ((\Gamma f \times \Delta f) \cup (\Delta f \times \Gamma f))]$ is a set of directed edges that are labeled either Transient (T) or continuous (N).

A. <u>Transaction/Constraint Conflicts</u>

Transactions are part of the definition of coordinators. However, they are not usually executed directly by the coordinator. Transactions may be initiated by components, and responses must often be generated by components rather than by the coordinator itself. Coordinators contain constraints that can play a role in enforcing these semantics, and it is important to ensure that a component's constraints are consistent with the transactions specified for the coordinator.

1. Dedicated RPC

Fig. 72 shows a CDG 7200 representation of an RPC system. CDG 7200 does not consider any coupling between control and data. There are two aspects to control. The first aspect of control is steady-state control, in which there is global control of transitions from one state to another. The second aspect of control is the interaction between control and data. Control typically must consider how the software system deals with the transfer of data, in the form of parameters, for the recipient and return values.

B. Partitioning CDGs Across Message-Only Barriers

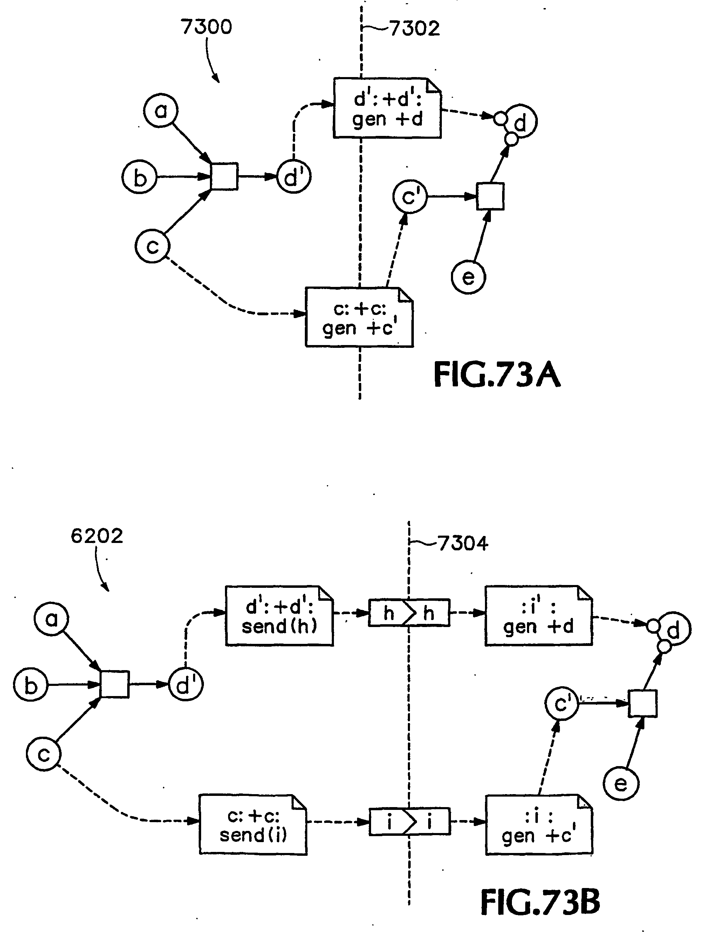

Just as SCGs and DCGs can be partitioned across action-only barriers through template-based graph transformations, both they and CDGs can be partitioned across barriers that permit only message traffic. The first stage in this transformation is as described above with respect to SCGs and CDGs. Fig. 73A shows the second step in partitioning a CDG 7300 across an action-only barrier 7302. With reference to Fig. 73A, the second step is to transform each action on the barrier into supplementary actions and messages. Fig. 73B shows the graph of DCG 6202, from Fig. 62B, with the action-only barrier transformed to a message-only barrier 7304.

C. Dataflow Consistency and SDF Extraction

Dataflow consistency means that when the system is viewed as a whole, production rates are compatible with their related consumption rates. A system that is consistent in terms of dataflow will have no configuration in which production exceeds consumption on any path. Failure to detect such inconsistencies in advance could result in difficult to track memory leak bugs and bugs wherein data is dropped: or overwritten before it is processed (depending on queue-management policies).

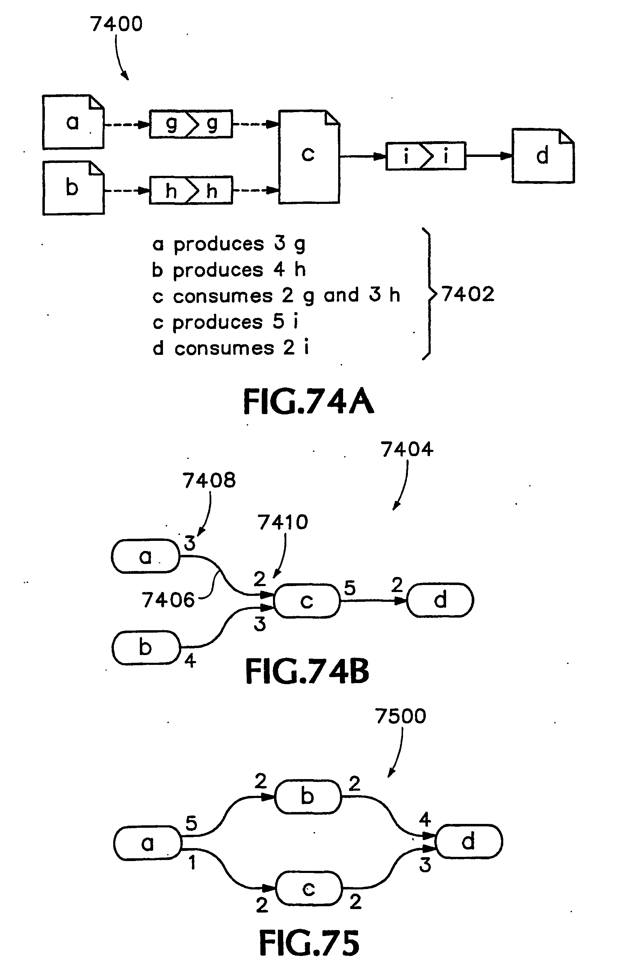

Synchronous dataflow extraction for these dataflow graphs is performed in two parts. First, a constant rate sub-DAG is fenced off through a pair of cuts. A constant-rate sub-DAG is a directed acyclic dataflow graph in which each port has constant token rates. Given a constant rate sub-DAG, each edge is a linear relation between two dataflow actions. Second, by solving a consistent series of linear equations, schedule components can be found for each node. Fig. 74A shows a CDG 7400 with a set of message rate guarantees 7402. Fig. 74B shows a dataflow graph 7404 based on CDG 7400. With reference to Figs. 74A and B, the start of each edge 7406 is labeled with a production rate 7408 and the sink is labeled with a consumption rate 7410. While inconsistent series of equations yield no solution, they also represent inconsistent dataflow. Hence, one algorithm can be used for both dataflow consistency and SDF extraction.

1. Finding Normalized Schedule Coefficients

Schedule coefficients indicate the number of times a particular component is to be executed sequentially to consume all tokens generated by a component earlier in the dataflow graph. The problem is now to find a set of minimum practical scheduling coefficients. For dataflow actions a, b, c, and d (shown in Fig. 74B) the minimum scheduling coefficients are notated $A_0$, $B_0$, $C_0$, and $D_0$. Practical schedule coefficients must be natural numbers because it is typically not possible to execute a component a fractional number of times. However, in obtaining these we need an intermediate step using rational relative schedule coefficients. Relative schedule coefficients are the minimum coefficients divided by a particular component's coefficient. The schedule coefficient for component a normalized to component d's coefficient is notated $A_d$. The value of $D_d$ is defined to be 1.

Finding relative schedule coefficients is accomplished by deriving a set of relative scheduling constraints between pairs of nodes. Each internal edge in a constant rate cluster must have constant token rates on each side. The relative rates for two nodes, x and y, connected by an edge with token rates of m on the x side and n on the y side is nx = my, which means that whenever x fires n times, y must fire m times. We can then relate their scheduling coefficients as mX = nY. This relationship holds for all valid practical and relative scheduling coefficients, not just the minimum coefficients.

Normalized scheduling rates can be expressed in terms of a single component reference. To do so, each set of relative rates is first expressed as a linear equation. For example, let $A_z$ be the normalized schedule coefficient for component a and $B_z$ be the normalized schedule coefficient for component b. We express their relative coefficient relationship as $nA_z - mB_z = 0$. And so, for the relative ratio matrix -R, we are solving for the schedule coefficient vector in terms of z or
$^\wedge\Gamma_z$, with $-R \cdot {}^\wedge\Gamma_z = {}^\wedge 1_z$, where $^\wedge 1_z$
is a vector that is zero in all except the z position.

For dataflow graph 7404, using d as the reference component this results in the following:

$$R = \begin{pmatrix} 3 & 0 & -2 & 0 \\ 0 & 4 & -3 & 0 \\ 0 & 0 & 5 & -2 \\ 0 & 0 & 0 & 1 \end{pmatrix}$$

and

$$1_d = \begin{pmatrix} 0 \\ 0 \\ 0 \\ 1 \end{pmatrix}$$

Solving $R \cdot \Gamma r_d = 1_d$ for $\Gamma_d$, we have:

$$\Gamma_d = \begin{pmatrix} A_d \\ B_d \\ C_d \\ D_d \end{pmatrix} = \begin{pmatrix} 4/15 \\ 3/10 \\ 2/5 \\ 1 \end{pmatrix}$$

Notice that the top three rows of $-R$ correspond to the three edges in dataflow graph 7404.

Notice that $^\wedge\Gamma_d$ has a solution if and only if the dataflow graph is consistent. Graph inconsistency is only possible if there are at least as many edges as actions, *i.e.*, if the system of equations is overdefined. If Gaussian elimination is used for solving the matrix system, then the goal with an overdefined system is to cancel out one row (typically the bottom), making that row all zeros. If the dataflow graph is inconsistent, then the result is dataflow graph 7404 will have a row of the form [0 0 0 0...0|*x*], where $x \neq 0$.

Fig. 75 shows a dataflow graph 7500. With reference to dataflow graph 7500, the starting Gaussian matrix is as follows:

$$\begin{pmatrix} 5 & -2 & 0 & 0 & | & 3 \\ 1 & 0 & -2 & 0 & | & 15/2 \\ 0 & 2 & 0 & -4 & | & 3/2 \\ 0 & 0 & 2 & -3 & | & 15/4 \\ 0 & 0 & 0 & 1 & | & -11/4 \end{pmatrix}$$

After elimination and attempting to zero out the bottom row, the result is as follows:

$$\begin{pmatrix} 1\ 0\ 0\ 0 & 3 \\ 0\ 1\ 0\ 0 & 15/2 \\ 0\ 0\ 1\ 0 & 3/2 \\ 0\ 0\ 0\ 1 & 15/4 \\ 0\ 0\ 0\ 0 & -11/4 \end{pmatrix}$$

The result shown above indicates that the system represented by dataflow graph 7500 cannot be properly scheduled. Furthermore, even without exact production and consumption rates, a similar procedure can be use to catch inconsistent dataflow.

2. Practical Schedule Coefficients

Executing a system requires all scheduling coefficients to be integers. This can be facilitated by finding a lowest common denominator (LCD) of a set of normalized scheduling coefficients and multiplying the LCD through. For Fig. 74B, the LCD is 30, and so:

$$\Gamma_0 = \begin{pmatrix} A_0 \\ B_0 \\ C_0 \\ D_0 \end{pmatrix} = \begin{pmatrix} 8 \\ 9 \\ 12 \\ 30 \end{pmatrix}$$

3. Schedule Ordering

The order of components in the schedule must be consistent with causality in the software system being modeled. A proper ordering can be determined by a topological sort of the dataflow graph *(e.g.,* b, a, c, d for the example in Fig. 74B). By combining scheduling coefficients, represented by vector $\Gamma_0$, with ordering, a complete consistent schedule can be found. For dataflow graph 7404, the complete consistent schedule is as follows: 9b · 8a · 12c · 30d. This means execute action b 9 times while buffering results, then execute a 8 times while buffering results, then execute c 12 times while buffering results, and finally execute d 30 times.

It will be obvious to those having skill in the art that many changes may be made to the details of the above-described embodiment or embodiments without departing from the underlying principles described herein. The scope of the present invention should, therefore, be determined only by the following claims.

**Claims**

1. Method performed by a software analysis tool for identifying constraint enforcement conflicts in a software system comprising at least two software elements (100) and at least one constraint (618,620), wherein each software element (100) comprises at least one mode (102) which, when activated, enables one or more actions (104) to be triggerable by an event, and each constraint (618,620), when enforced, generates an output that influences the activation state of at least one mode (102), the method comprising:

creating a disjunctive node (4304) for each mode (102);
creating a conjunctive node (4300) for each constraint (618,620);
creating, for each constraint that generates an output, a directed edge (4310) from the corresponding conjunctive node (4300) to the disjunctive node (4304) of each mode (102) whose activation state is influenced by the output, wherein each directed edge (4310) asserts a value on the disjunctive node (4304) indicative of the influence made by the constraint (618,620) to the activation state; and
presenting control interactions between the software elements in a static control graph comprising:

a first set of graphic symbols, each symbol representing a conjunctive node (4300);
a second set of graphic symbols, each symbol representing a disjunctive node (4304); and
a third set of graphic symbols, each symbol representing a directed edge (4310) and including visual indicia of an origin node and a destination node,

wherein a constraint enforcement conflict is identified as a disjunctive node (4304) having two or more incident directed edges (4310) which assert different values.

2. Method performed by a software analysis tool according to claim 1, wherein the output of a constraint (618,620) is influenced by the activation state of at least one mode (102), and the method further comprises:

creating, for each mode (102) whose activation state influences the output of a constraint (618,620), a directed edge (4310) from the corresponding disjunctive node (4304) to the conjunctive node (4300) of a constraint (618,620) whose output is influenced by the activation state.

3. The third performed by a software analysis tool according to claim 1 or 2, wherein the software analysis tool implements a data structure for representing control constraints and control actions of the software system, the data structure comprising:

a set of conjunctive Boolean guards on state changes (618,620) within the software system;
a set of Boolean guards on functional objects (102) within the software elements (100);
a set of functional control objects (104) within the software elements (100), each functional control object (104) being responsive to a control interaction and capable of producing a control interaction;
a set of data flow nodes, each of which represents a data flow interaction between a first and a second software elements; and
a set of relational connections between two elements from the set of conjunctive Boolean guards (618,620), the set of Boolean guards on objects (102), and the set of functional control objects (104), each relational connection representing implication between the two elements it connects.

4. Method performed by a software analysis tool according to Claim 1, wherein the static control graph further comprises a set of action nodes (5702), each of which represents a functional object (104) within one of the software elements (100) that responds to control interactions and produces control interactions.

5. Method performed by a software analysis tool according to any preceding claim, wherein the software system has a state space and an initial state, and the software analysis tool further includes means for converting the static control graph representation of the software system into a binary decision diagram of the software system, the converting means implementing the steps of:

transforming the control graph to express a potential next state of the software system after a predetermined period of time; and
generating a binary decision diagram based on the transformed control graph, whereby known static error checking techniques may be used to further identify any unexpected behavior of the software system without incurring the cost of fully elaborating the state space of the software system.

6. Method performed by a software analysis tool according to claim 5, wherein said step of transforming the control graph comprises unrolling the control graph.

7. Method performed by a software analysis tool according to claim 6, wherein generating the binary decision diagram comprises using an apply algorithm on a characteristic function of the unrolled control graph.

8. Method performed by a software analysis tool according to claim 6, wherein unrolling the control graph comprises:

creating a copy of each disjunctive node (4304), each disjunctive node (4304) representing a Boolean guard on a functional object (102) within one of the software elements (100);
creating a copy of each conjunctive node (4300), each conjunctive node (4300) representing a conjunctive Boolean guard on state changes (618,620) within the software system;
creating a copy of each action node (5702), each action node (5702) representing a functional object (104) within one of the software elements (100) that is responsive to a control interaction and capable of producing a control interaction, if the functional object (104) it represents performs a predetermined function without a predetermined delay;

for each delayed action node (5702) which represents a functional object (104) within one of the software elements (100) that has a predetermined delay in responding to, or producing, a control interaction, creating a sensing edge (6406) to connect the delayed action node to a corresponding node (6408) in the control graph (6400) representing the initial state of the system, and creating an enforcing edge (6410) to connect the corresponding node (6408) in the control graph (6400) representing the initial state of the system to a corresponding next node (6412), which represents the potential next state of the system;

for a directed edge that is also an event edge (6414), connecting the directed edge (6414) to a created event disjunctive node (6416), which represents an event generated by the corresponding node (6420) in the control graph (6400) representing the initial state of the system;

for each created event disjunctive node (6416), creating an edge from the created event disjunctive node (6416) to an event conjunctive node (6418);

for each event conjunctive node (6418), creating an edge (6414) from the node (6420) that generated the event to the event conjunctive node (6418), and creating an edge from the event conjunctive node (6418) to the copy of the node that generated the event.

**Patentansprüche**

1. Verfahren, welches von einem Softwareanalysetool zum Identifizieren von Beschränkungsdurchsetzungskonflikten in einem Softwaresystem durchgeführt wird, welches wenigstens zwei Softwareelemente (100) und wenigstens eine Beschränkung (618, 620) umfaßt, wobei jedes Softwareelement (100) wenigstens eine Betriebsart (102) umfaßt, die, wenn sie aktiviert ist, es einer oder mehreren Handlungen (104) ermöglicht, durch ein Ereignis auslösbar zu sein, und wobei jede Beschränkung (618, 620), wenn sie durchgesetzt ist, einen Output erzeugt, der den Aktivierungszustand von wenigstens einer Betriebsart (102) beeinflußt, wobei das Verfahren umfaßt:

   Erzeugen eines Disjunktionsknotens (4304) für jede Betriebsart (102);
   Erzeugen eines Konjunktionsknotens (4300) für jede Beschränkung (618, 620);
   Erzeugen einer gerichteten Kante (4310) für jede Beschränkung, die einen Output erzeugt, von dem entsprechenden Konjunktionsknoten (4300) zu dem Disjunktionsknoten (4304) jeder Betriebsart (102), deren Aktivierungszustand von dem Output beeinflußt ist, wobei jede gerichtete Kante (4310) einen Wert auf dem Disjunktionsknoten (4304) geltend macht, welcher auf den Einfluß schließen läßt, der von der Beschränkung (618, 620) auf den Aktivierungszustand ausgeübt wird; und
   Darstellen von Kontrollwechselwirkungen zwischen den Softwareelementen in einem statischen Kontrollgraph, welcher umfaßt:

      eine erste Gruppe graphischer Symbole, wobei jedes Symbol einen Konjunktionsknoten (4300) darstellt:

         eine zweite Gruppe graphischer Symbole, wobei jedes Symbol einen Disjunktionsknoten (4304) darstellt; und
         eine dritte Gruppe graphischer Symbole, wobei jedes Symbol eine gerichtete Kante (4310) darstellt und visuelle Merkmale eines Ursprungsknotens und eines Zielknotens umfaßt,

   wobei ein Beschränkungsdurchsetzungskonflikt als ein Disjunktionsknoten (4304) identifiziert ist, der zwei oder mehrere einfallende gerichtete Kanten (4310) aufweist, die verschiedene Werte geltend machen.

2. Verfahren, welches von einem Softwareanalysetool nach Anspruch 1 durchgeführt wird, wobei der Output einer Beschränkung (618, 620) durch den Aktivierungszustand von wenigstens einer Betriebsart (102) beeinflußt wird, und das Verfahren des weiteren umfaßt:

   Erzeugen einer gerichteten Kante (4310) für jede Betriebsart (102), deren Aktivierungszustand den Output einer Beschränkung (618, 620) beeinflußt, von dem entsprechenden Disjunktionsknoten (4304) zu dem Konjunktionsknoten (4300) einer Beschränkung (618, 620), deren Output von dem Aktivierungszustand beeinflußt ist.

3. Verfahren, welches von einem Softwareanalysetool nach Anspruch 1 oder 2 durchgeführt wird, wobei das Softwareanalysetool eine Datenstruktur zum Darstellen von Kontrollbeschränkungen und Kontrollhandlungen des Softwaresystems implementiert, wobei die Datenstruktur umfaßt:

eine Gruppe konjunktiver boolscher Guards von Zustandsänderungen (618, 620) innerhalb des Softwaresystems;

eine Gruppe boolscher Guards von funktionalen Objekten (102) innerhalb der Softwareelemente (100); eine Gruppe funktionaler Kontrollobjekte (104) innerhalb der Softwareelemente (100), wobei jedes funktionale Kontrollobjekt (104) auf eine Kontrollwechselwirkung anspricht und in der Lage ist, eine Kontrollwechselwirkung zu erzeugen;

eine Gruppe von Datenflußknoten, wobei jeder davon eine Datenflußwechselwirkung zwischen einem ersten und einem zweiten Softwareelement darstellt; und

eine Gruppe von Vergleichsverbindungen zwischen zwei Elementen aus der Gruppe der konjunktiven boolschen Guards (618, 620), der Gruppe der boolschen Guards von Objekten (102) und der Gruppe funktionaler Kontrollobjekte (104), wobei jede Vergleichsverbindung eine Implikation zwischen den beiden Elementen, welche sie verbindet, darstellt.

4. Verfahren, welches von einem Softwareanalysetool nach Anspruch 1 durchgeführt wird, wobei der statische Kontrollgraph des weiteren eine Gruppe von Aktionsknoten (5702) umfaßt, von denen jeder ein funktionales Objekt (104) innerhalb einer der Softwareelemente (100) darstellt, das auf Kontrollwechselwirkungen anspricht und Kontrollwechselwirkungen erzeugt.

5. Verfahren, welches von einem Softwareanalysetool nach einem der vorhergehenden Ansprüche durchgeführt wird, wobei das Softwaresystem einen Zustandsraum und einen anfänglichen Zustand aufweist, und das Softwareanalysetool des weiteren Vorrichtungen zum Konvertieren der statischen Kontrollgraphendarstellung des Softwaresystems in ein binäres Entscheidungsdiagramm des Softwaresystems umfaßt, wobei die Umwandelvorrichtung die folgenden Schritte implementiert:

Transformieren des Kontrollgraphen, um einen möglichen nächsten Zustand des Softwaresystems nach einer vorherbestimmten Zeitperiode auszudrücken; und

Erzeugen eines binären Entscheidungsdiagramms, welches auf dem transformierten Kontrollgraphen basiert, wobei bekannte statische Fehlerprüftechniken angewandt werden können, um unerwartetes Verhalten des Softwaresystems weiter zu identifizieren, ohne die Kosten eines vollständigen Ausarbeitens des Zustandstaumes des Softwaresystems hinzunehmen.

6. Verfahren, welches von einem Softwareanalysetool nach Anspruch 5 durchgeführt wird, wobei der Schritt des Transformierens des Kontrollgraphen ein Entrollen des Kontrollgraphen umfaßt.

7. Verfahren, welches von einem Softwareanalysetool nach Anspruch 6 durchgeführt wird, wobei das Erzeugen des binären Entscheidungsdiagramms das Verwenden eines Apply-Algorithmus auf einer charakteristischen Funktion des entrollten Kontrollgraphen umfaßt.

8. Verfahren, welches von einem Softwareanalysetool nach Anspruch 6 durchgeführt wird, wobei das Entrollen des Kontrollgraphen umfaßt:

Erzeugen einer Kopie jedes Disjunktionsknotens (4304), wobei jeder Disjunktionsknoten (4304) einen boolschen Guard von einem funktionalen Objekt (102) innerhalb eines der Softwareelemente (100) darstellt; Erzeugen einer Kopie jedes Konjunktionsknotens (4300), wobei jeder Konjunktionsknoten (4300) einen konjunktiven boolschen Guard von Zustandsänderungen (618, 620) innerhalb des Softwaresystems darstellt; Erzeugen einer Kopie jedes Aktionsknotens (5702), wobei jeder Aktionsknoten (5702) ein funktionales Objekt (104) innerhalb eines der Softwareelemente (100) darstellt, welches auf eine Kontrollwechselwirkung anspricht und fähig ist, eine Kontrollwechselwirkung zu erzeugen, falls das funktionale Objekt (104), welches es darstellt, eine vorbestimmte Funktion ohne eine vorbestimmte Verzögerung durchführt:

Erzeugen einer Überwachungskante (6406) für jeden der verzögerten Aktionsknoten (5702), welcher ein funktionales Objekt (104) innerhalb eines der Softwareelemente (100) darstellt, das eine vorbestimmte Verzögerung bei Ansprechen auf oder Erzeugen von einer Kontrollwechselwirkung aufweist, um den verzögerten Aktionsknoten mit einem entsprechenden Knoten (6408) in dem Kontrollgraphen (6400) zu verbinden, der den Anfangszustand des Systems darstellt, und Erzeugen einer Durchsetzungskante (6410), um den entsprechenden Knoten (6408) in dem Kontrollgraph (6400), welcher den Anfangszustand des Systems darstellt, mit einem entsprechenden nächsten Knoten (6412), der den möglichen nächsten Zustand des Systems darstellt, zu verbinden;

Verbinden der gerichteten Kante (6414) für eine gerichtete Kante, die auch eine Ereigniskante (6414) ist, mit einem erzeugten Ereignisdisjunktionsknoten (6416), der ein Ereignis darstellt, welches durch den entsprechenden Knoten (6420) in dem Kontrollgraphen (6400), welcher den anfänglichen Zustand des Systems darstellt, erzeugt wird;

Erzeugen einer Kante für jeden erzeugten Ereignisdisjunktionsknoten (6416) von dem erzeugten Ereignisdisjunktionsknoten (6416) zu einem Ereigniskonjunktionsknoten (6418);

Erzeugen einer Kante (6414) für jeden Ereigniskonjunktionsknoten (6418) von dem Knoten (6420), der das Ereignis erzeugt hat, zu dem Ereigniskonjunktionsknoten (6418), und Erzeugen einer Kante von dem Ereigniskonjunktionsknoten (6418) zu der Kopie des Knotens, der das Ereignis erzeugt hat.

## Revendications

1. Procédé exécuté par un outil d'analyse logicielle pour identifier des conflits d'application de contraintes dans un système logiciel comprenant au moins deux éléments logiciels (100) et au moins une contrainte (618, 620), dans lequel chaque élément logiciel (100) comprend au moins un mode (102) qui, quand il est activé, permet à une ou plusieurs actions (104) de pouvoir être déclenchées par un évènement, et chaque contrainte (618, 620), quand elle est appliquée, engendre une sortie qui influence l'état d'activation d'au moins un noeud (102), le procédé consistant à :

   - créer un noeud disjonctif (4304) pour chaque mode (102) ;
   - créer un noeud conjonctif (4300) pour chaque contrainte (618, 620) ;
   - créer, pour chaque contrainte qui engendre une sortie, un bord dirigé (4310) à partir du noeud conjonctif correspondant (4300) vers le noeud disjonctif (4304) de chaque mode (102) dont l'état d'activation est influencé par la sortie ; où chaque bord dirigé (4310) affirme une valeur sur le noeud disjonctif (4304) indicative de l'influence faite par la contrainte (618, 620) vers l'état d'activation ; et
   - présenter des interactions de commande entre les éléments logiciels dans un graphique de commande statique comprenant :

      - un premier jeu de symboles graphiques, chaque symbole représentant un noeud conjonctif (4300) ;
      - un deuxième jeu de symboles graphiques, chaque symbole représentant un noeud disjonctif (4304) ; et
      - un troisième jeu de symboles graphiques, chaque symbole représentant un bord dirigé (4310) et comprenant un indice visuel d'un noeud d'origine et d'un noeud de destination ; où un conflit d'application de contrainte est identifié en tant que noeud disjonctif (4304) ayant deux ou plusieurs bords dirigés incidents (4310) qui affirment différentes valeurs.

2. Procédé exécuté par un outil d'analyse logicielle selon la revendication 1, dans lequel la sortie d'une contrainte (618, 620) est influencée par l'état d'activation d'au moins un mode (102), et le procédé consiste de plus à :

   - créer, pour chaque mode (102) dont l'état d'activation influence la sortie d'une contrainte (618, 620), un bord dirigé (4310) à partir du noeud disjonctif correspondant (4304) vers le noeud conjonctif (4300) d'une contrainte (618, 620) dont la sortie est influencée par l'état d'activation.

3. Procédé exécuté par un outil d'analyse logicielle selon la revendication 1 ou 2, dans lequel l'outil d'analyse logicielle met en application une structure de données pour représenter des contraintes de commande et des actions de commande du système logiciel, la structure de données comprenant :

   - un premier jeu de gardes booléens conjonctifs sur des changements d'état (618, 620) à l'intérieur du système logiciel ;
   - un jeu de gardes booléens sur des objets fonctionnels (102) à l'intérieur des éléments logiciels (100) ;
   - un jeu d'objets de commande fonctionnels (104) à l'intérieur des éléments logiciels (100), chaque objet de commande fonctionnel (104) étant sensible à une interaction de commande et capable de produire une interaction de commande ;
   - un jeu de noeuds de flux de données, dont chacun représente une interaction de flux de données entre un premier élément logiciel et un second élément logiciel ; et
   - un jeu de connexions relationnelles entre deux éléments à partir du jeu de gardes booléens conjonctifs (618, 620), du jeu de gardes booléens sur des objets (102), et du jeu d'objets de commande fonctionnels (104), chaque connexion relationnelle représentant une implication entre les deux éléments qu'elle connecte.

4. Procédé exécuté par un outil d'analyse logicielle selon la revendication 1, dans lequel le graphique de commande statique comprend de plus un jeu de noeuds d'action (5702), dont chacun représente un objet fonctionnel (104) à l'intérieur de l'un des éléments logiciels (100) qui répond aux interactions de commande et produit des interactions de commande.

5. Procédé exécuté par un outil d'analyse logicielle selon une quelconque revendication précédente, dans lequel le système logiciel a un espace d'état et un état initial, et l'outil d'analyse logicielle comprend de plus des moyens pour convertir la représentation du graphique de commande statique du système logiciel en un diagramme de décision binaire du système logiciel, les moyens de conversion mettant en oeuvre les étapes de :

- transformer le graphique de commande pour exprimer un état suivant potentiel du système logiciel après une période de temps prédéterminée ; et
- engendrer un diagramme de décision binaire en se basant sur le graphique de commande transformé, par quoi des techniques de vérification d'erreur statique connues peuvent être utilisées pour identifier de plus un comportement inattendu du système logiciel sans engager le coût de l'élaboration totale de l'espace d'état du système logiciel.

6. Procédé exécuté par un outil d'analyse logicielle selon la revendication 5, dans lequel ladite étape de transformer le graphique de commande consiste à dérouler le graphique de commande.

7. Procédé exécuté par un outil d'analyse logicielle selon la revendication 6, dans lequel l'étape d'engendrer le diagramme de décision binaire consiste à utiliser un algorithme d'application sur une fonction caractéristique du graphique de commande déroulé.

8. Procédé exécuté par un outil d'analyse logicielle selon la revendication 6, dans lequel l'étape de dérouler le graphique de commande consiste à :

- créer une copie de chaque noeud disjonctif (4304), chaque noeud disjonctif (4304) représentant un garde booléen sur un objet fonctionnel (102) à l'intérieur d'un des éléments logiciels (100) ;
- créer une copie de chaque noeud conjonctif (4300), chaque noeud conjonctif (4300) représentant un garde booléen conjonctif sur des changements d'état (618, 620) à l'intérieur du système logiciel ;
- créer une copie de chaque noeud d'action (5702), chaque noeud d'action (5702) représentant un objet fonctionnel (104) à l'intérieur d'un des éléments logiciels (100), qui est sensible à l'interaction de commande et capable de produire une interaction de commande, si l'objet fonctionnel (104) qu'il représente exécute une fonction prédéterminée sans un retard prédéterminé ;

  pour chaque noeud d'action retardé (5702) qui représente un objet fonctionnel (104) dans l'un des éléments logiciels (100) qui a un retard prédéterminé en réagissant à ou en produisant une interaction de commande, créer un bord de détection (6406) pour connecter le noeud d'action retardé à un noeud correspondant (6408) dans le graphique de commande (6400) représentant l'état initial du système, et créer un bord d'application (6410) pour connecter le noeud correspondant (6408) dans le graphique de commande (6400) représentant l'état initial du système à un noeud suivant correspondant (6412), qui représente l'état suivant potentiel du système ;

  pour un bord dirigé qui est également un bord d'évènement (6414), relier le bord dirigé (6414) à un noeud disjonctif d'évènement créé (6416), qui représente un évènement engendré par le noeud correspondant (6420) dans le graphique de commande (6400) représentant l'état initial du système ;

  pour chaque noeud disjonctif d'évènement créé (6416), créer un bord à partir du noeud disjonctif d'évènement créé (6416) vers un noeud conjonctif d'évènement (6418) ;

  pour chaque noeud conjonctif d'évènement (6418), créer un bord (6414) à partir du noeud (6420) qui a engendré l'évènement vers le noeud conjonctif d'évènement (6418), et créer un bord à partir du noeud conjonctif d'évènement (6418) vers la copie du noeud qui a engendré l'évènement.

FIG.1

FIG.2

300

| Controller | | $a_c$ — 302 |
| --- | --- | --- |
| | ● | $b_c$ — 304 |
| access ➡ | ● | $c_c$ — 306 |
| successor | ● | $d_c$ — 308 |
| | ● | $e_c$ — 310 |

**FIG.3A**

322 — $a_d$  312 — $b_d$
324 — $f_d$  314 — $c_d$
320  318 — $e_d$  316 — $d_d$

**FIG.3B**

FIG.4A

FIG.4B

**FIG.5**

**FIG.6A**

**FIG.6B**

**FIG.6C**

**FIG.6D**

FIG.7

FIG.8

FIG.9

FIG.10

FIG.11

1200

1204

N₁

a: 2

1210     1202

c: 3     1214

Data transfer
coordinators

1212     a: 2

N₃

d: 2

1208     **FIG.12A**

N₂

b: 2

1206

1200

1216

N₁

a: 2     3x2

1210     1202

2x3     c: 3     1214

Combined
coordinator

1212     a: 2

2x2     d: 2     N₃

N₂

b: 2     2x2     **FIG.12B**

1206

**FIG.13**

FIG.14

EP 1 297 424 B1

**FIG.15**

EP 1 297 424 B1

FIG.16

EP 1 297 424 B1

**FIG.17A**

**FIG.17B**

**FIG.18A**

**FIG.18B**

FIG.19

FIG.20

EP 1 297 424 B1

## Transport Component

TDMA   a to d   FDMA

2100   2104   2106

Rec   CDMA   a to d

TDMA   d to a   FDMA

2104   2166

Send   CDMA   d to a   2102

**FIG.21A**

2150

2154

Chips

Modulator

Dot product

Data

2152   **FIG.21B**

FIG.22

**FIG.23A**

**FIG.23B**

**FIG.24A**

**FIG.24B**

EP 1 297 424 B1

FIG.25

(PRIOR ART)

**FIG.26**
(PRIOR ART)

2600
2602
2608
2604
2610
2606
2612
M
2614
2616

**FIG.27**
(PRIOR ART)

2700
2702

FIG.28
(PRIOR ART)

**FIG.29**
(PRIOR ART)

**FIG.30**
(PRIOR ART)

EP 1 297 424 B1

FIG.31
(PRIOR ART)

FIG.32
(PRIOR ART)

EP 1 297 424 B1

3300

| asynchronous communication | synchronous communication | process begin & end |

FIG.33
(PRIOR ART)

3400          3402

3404

FIG.34
(PRIOR ART)

3504          3500

3502

FIG.35
(PRIOR ART)

**FIG.36**
(PRIOR ART)

**FIG.37**
(PRIOR ART)

(a) Cohesion(P) = 1.0
Coupling(P) = 0.5

(b) Cohesion(P) = 0.0
Coupling(P) = 1.0

(c) Cohesion(P) = 1.0
Coupling(P) = 0.5

**FIG.38**
(PRIOR ART)

**FIG.39**
(PRIOR ART)

4000

P₁ —Ⓐ————————————————Ⓔ——————⟶

P₂ ———————Ⓑ——Ⓒ————Ⓓ————————⟶

4002

## FIG.40
(PRIOR ART)

**FIG.41**
(PRIOR ART)

FIG.42

(PRIOR ART)

EP 1 297 424 B1

FIG.43

FIG.44

EP 1 297 424 B1

Boolean

4500

4502

= 

≠

−but−

SCG

4504

4506

(disjunctive)   (conjunctive)   (disjunctive)   (disjunctive)

≠    =

**FIG.45**

$a \wedge b \Rightarrow c = \neg(a \wedge b \wedge \neg c)$

## FIG.46A

$a \wedge b \Rightarrow \neg c = \neg(a \wedge b \wedge c)$

## FIG.46B

4708

4704

$a \Rightarrow \neg b = \neg(a \wedge b)$

## FIG.47A

4710

4706

## FIG.47B

4712

4700

$\neg a \Rightarrow b = a \vee b$

## FIG.47C

4714

4702

## FIG.47D

**FIG.48A**

**FIG.48B**

**FIG.49**

**FIG.50A**

$$(a \lor b \lor c) \land (\neg b \lor d \lor \neg e) \land (a \lor c \lor \neg e)$$

1       2       3

**FIG.50B**

$$(\neg a \land \neg b \Rightarrow c) \land (b \land \neg d \Rightarrow \neg e) \land (\neg a \land \neg c \Rightarrow \neg e)$$

1       2       3

**FIG.50C**

FIG.51A

FIG.51B

FIG.52A

FIG.52B

EP 1 297 424 B1

FIG.53

FIG.54

Specified edge
Derived edge

FIG.55

FIG.56

EP 1 297 424 B1

conjunctive node

5700

FIG.57

5800

5802

a:g.new:
if (x) gen +p;
else gen +c;

FIG.58

5900

No visual representation
in any control graph

a^b: +q:
z.send(x);
gen +c;

FIG.59

6000

a: +q:
if (x) gen +p;
else gen +c;

FIG.60

**FIG.61A**

**FIG.61B**

6200

Action only
barrier

FIG.62A

Action only
barrier

6202

d': +d':
gen +d

c: +c:
gen +c'

FIG.62B

**FIG.63**

**FIG.64**

6500

6502

†

†'

Original DCG
# FIG.65A

Unrolled
# FIG.65A

6602

6600

$f = a^b$

| a | b | f |
|---|---|---|
| 0 | 0 | 0 |
| 0 | 1 | 0 |
| 1 | 0 | 0 |
| 1 | 1 | 1 |

# FIG.66A

6604

# FIG.66B

6700

a

0    1

b

0    1

0    1

a∧b

**FIG.67A**

6702

a

0    1

b

0    1

1

a∨b

**FIG.67B**

6704

a

0    1

b

c    0

0    1

1

0    1

a∧b∨c

**FIG.67C**

6800

a

0    1

0  c  1      0  c  1

0 +c 1      0 +c 1

0  a' 1      0  a' 1

0  c'  1

0

0    1

**FIG.68**

**FIG.69A**

FIG.69B

FIG.70A

FIG.70B

FIG.70C

FIG.70D

7100

7102  7112

a: :
s.send(3);

7106 7108

g < s

7104

a: g.new:
if (x) gen +p;
else gen +c;

c

p

a

7110

## FIG.71

7200

blocked  blocked

serving  serving

a > a

a > a

r < r

r < r

## FIG.72

FIG.73A

FIG.73B

FIG.74A

FIG.74B

FIG.75